# EUROPÄISCHE PATENTSCHRIFT

(11) **EP 3 908 506 B1**
(45) Veröffentlichungstag und Bekanntmachung des Hinweises auf die Patenterteilung: **19.11.2025**
(21) Anmeldenummer: 20703372.1
(22) Anmeldetag: 10.01.2020
(51) Int. Cl.: B62D 61/10, B62D 63/02, B62D 65/18

(54) **FÖRDERVERFAHREN UND FÖRDERVORRICHTUNG**
CONVEYING METHOD AND CONVEYING DEVICE
PROCÉDÉ DE CONVOYAGE ET SYSTÈME DE CONVOYAGE

(30) Priorität: 11.01.2019 DE 202019100145 U; 09.05.2019 DE 102019206732
(43) Veröffentlichungstag der Anmeldung: 17.11.2021
(73) Patentinhaber: Dürr Systems AG, 74321 Bietigheim-Bissingen (DE)
(72) Erfinder: FIEG, Christian, 76597 Loffenau (DE); WEICKGENANNT, Martin, 74321 Bietigheim-Bissingen (DE)
(74) Vertreter: DTS Patent- und Rechtsanwälte PartmbB
(86) Internationale Anmeldenummer: PCT/DE2020/100012
(87) Internationale Veröffentlichungsnummer: WO 2020/143880

(56) Entgegenhaltungen:
- CN-A- 103 538 649
- DE-A1- 102010 010 212
- DE-A1- 102010 051 789
- DE-A1- 102013 000 569
- DE-A1- 102014 224 082
- DE-A1- 102015 003 213
- DE-A1- 102015 006 098
- DE-A1- 102016 014 882
- DE-A1- 102017 113 343
- DE-T5- 112015 000 150
- FR-A1- 2 920 125
- JP-A- 2002 225 759
- JP-A- 2003 256 045
- JP-A- 2012 025 306
- JP-A- 2018 024 415
- JP-A- H11 188 302
- JP-A- H11 240 608
- KR-B1- 101 496 902
- US-A- 4 770 122
- US-A1- 2004 122 570
- US-A1- 2012 205 175
- US-A1- 2015 128 397
- US-A1- 2018 142 488
- US-B1- 9 014 902
- KUKA - ROBOTS & AUTOMATION: "Clever Autonomy for Mobile Robots - KUKA Navigation Solution", YOUTUBE, 26 May 2016 (2016-05-26), pages 1 pp., XP054980287, Retrieved from the Internet <URL:https://www.youtube.com/watch?v=kN9a7W_hnSQ> [retrieved on 20200306]
- KUKA - ROBOTS & AUTOMATION: "KMP 1500 - Intelligent & Autonomous Mobile Platform", YOUTUBE, 13 September 2017 (2017-09-13), pages 1 pp., XP054980288, Retrieved from the Internet <URL:https://www.youtube.com/watch?v=8BQMYHlDOBo> [retrieved on 20200306]

## Beschreibung

Die vorliegende Erfindung betrifft ein Förderverfahren, welches insbesondere bei einer Fördervorrichtung in einer Bearbeitungsanlage zum Einsatz kommen kann.

In Bearbeitungsanlagen, beispielsweise Lackieranlagen, können insbesondere Rollenförderer, Kettenförderer oder Hängeförderer zum Transport von zu lackierenden Werkstücken verwendet werden.

Aus der DE 10 2013 000 569 A1 ist eine Fertigungsanlage zur Serienfertigung von Kraftfahrzeugen mit mehreren Arbeitsstationen bekannt, an denen jeweils wenigstens ein vorbestimmter Arbeitsprozess ausführbar ist. Die Anlage umfasset eine Vielzahl von Arbeitsstationen, die als separate und unverkoppelte Arbeitsstationen ausgebildet sind, wodurch an diesen Arbeitsstationen die Arbeitsprozesse taktfrei ausgeführt werden können. Ferner umfasst die Anlage eine Vielzahl ungebundener erster Förderzeuge, mit denen jeweils ein herzustellendes Kraftfahrzeug von einer Arbeitstation zur nächsten Arbeitsstation transportiert werden kann, und eine übergeordnete Steuervorrichtung, mit der jedes erste Förderzeug nach einer für das darauf transportierte herzustellende Kraftfahrzeug vorab festgelegten individuellen Arbeitsfolge zur nächsten hierfür vorgesehenen Arbeitstationen geleitet werden kann.

Aus der JP H11-240608 A ist ein Fördersystem bekannt, welches so angeordnet, dass die unbemannten Förderfahrzeuge in gleichen Abständen entlang einer vorgegebenen Fahrstrecke gefördert werden und die unbemannten Förderfahrzeuge als Arbeitstische für Arbeiter zur Durchführung vorgegebener Arbeiten nutzbar sind. Dementsprechend ist es möglich, mit dem unbemannten Förderfahrzeug Teile und dergleichen zu transportieren, und dass Arbeiter in einem Endmontageprozess Montagearbeiten unter Verwendung des unbemannten Förderfahrzeugs als Arbeitstisch durchführen.

Des Weiteren ist aus der US 9,014,902 B1 ein System und Verfahren für automatisch geführte Fahrzeuge (AGVs) bekannt, welches in der Lage ist, eine synchronisierte Fahrt entlang einer Linie oder eines Pfades zu gewährleisten und dabei eine gewünschte Taktzeit einzuhalten, so dass reguläre Fertigungsvorgänge an Material oder Werkstücken auf dem Fahrzeug ohne die Notwendigkeit eines traditionellen Fördersystems durchgeführt werden können.

Der vorliegenden Erfindung liegt die Aufgabe zugrunde, ein Förderverfahren bereitzustellen, mittels welchem zu transportierende Gegenstände einfach und flexibel transportiert werden können.

Diese Aufgabe wird erfindungsgemäß durch die Merkmale von Anspruch 1 gelöst.

Ein Fahrzeug eignet sich vorzugsweise zum Fördern von Gegenständen, insbesondere Fahrzeugkarosserien.

Das Fahrzeug umfasst Folgendes:
einen Grundkörper;
ein Fahrwerk, mittels welchem der Grundkörper auf einem befahrbaren Untergrund aufliegt und/oder bewegbar ist;
eine Antriebsvorrichtung zum Antreiben des Fahrzeugs;
eine Aufnahmevorrichtung, welche ein Aufnahmeelement, zwei Aufnahmeelemente, oder mehr als zwei Aufnahmeelemente zum Aufnehmen mindestens eines Gegenstands umfasst. Der befahrbare Untergrund ist insbesondere ein Boden, beispielsweise ein fester Boden, insbesondere ein Hallenboden.

Der befahrbare Untergrund ist insbesondere aus Beton oder Asphalt oder Metall gebildet oder umfasst Beton, Asphalt und/oder Metall.

Das Fahrzeug ist insbesondere selbstfahrend und/oder autonom ausgebildet.

Vorzugsweise ist das Fahrzeug flurgebunden.

Das Fahrzeug ist vorzugsweise automatisch steuerbar und/oder berührungslos geführt oder führbar.

Es kann vorgesehen sein, dass die Aufnahmevorrichtung exakt zwei Aufnahmeelemente umfasst.

Mittels der zwei Aufnahmeelemente ist vorzugsweise exakt ein Gegenstand, insbesondere exakt eine Fahrzeugkarosserie, aufnehmbar.

Mehrere Aufnahmeelemente, insbesondere sämtliche Aufnahmeelemente, erstrecken sich vorzugsweise in einer gemeinsamen Ebene, welche insbesondere vertikal und/oder parallel zu einer Längsmittelachse des Fahrzeugs verläuft.

Mehrere Aufnahmeelemente, insbesondere sämtliche Aufnahmeelemente, erstrecken sich vorzugsweise in einer vertikalen Längsmittelebene des Fahrzeugs.

Insbesondere liegen Mittelachsen oder Längsachsen der einzelnen Aufnahmeelemente in einer gemeinsamen Ebene, insbesondere in einer vertikalen Längsmittelebene.

Längsachsen oder Mittelachsen mehrerer Aufnahmeelemente, insbesondere sämtlicher Aufnahmeelemente, sind vorzugsweise parallel zueinander ausgerichtet und/oder parallel zur Schwerkraftrichtung ausgerichtet, zumindest in einem Zustand des Fahrzeugs, in welchem dieses auf einem im Wesentlichen horizontalen befahrbaren Untergrund angeordnet ist.

Vorteilhaft kann es sein, wenn die Längsmittelachse des Fahrzeugs eine Hauptfahrtrichtung des Fahrzeugs oder zwei Hauptfahrtrichtungen des Fahrzeugs vorgibt.

Ein oder mehrere Aufnahmeelemente, insbesondere sämtliche Aufnahmeelemente, sind vorzugsweise die einzigen von dem Grundkörper des Fahrzeugs nach oben hervorstehenden Elemente.

Vorzugsweise ragen ein oder mehrere Aufnahmeelemente, insbesondere sämtliche Aufnahmeelemente, als einzige Bauteile des Fahrzeugs über mehr als ungefähr 5% oder über mehr als ungefähr 10% einer Höhe des Grundkörpers über den Grundkörper hinaus.

Es kann vorgesehen sein, dass das eine Aufnahmeelement, die zwei Aufnahmeelemente oder die mehr als zwei Aufnahmeelemente bewegbar an dem Grundkörper angeordnet sind.

Insbesondere sind das eine Aufnahmeelement, die zwei Aufnahmeelemente oder die mehr als zwei Aufnahmeelemente parallel zu der Schwerkraftrichtung bewegbar an dem Grundkörper angeordnet.

Die Schwerkraftrichtung ist in dieser Beschreibung allgemein eine Höhenrichtung, welche im Wesentlichen senkrecht zu einem befahrbaren Untergrund ausgerichtet ist, auf welchem das Fahrzeug verfahrbar ist.

Alternativ oder ergänzend hierzu kann vorgesehen sein, dass ein Aufnahmeelement, zwei Aufnahmeelemente oder mehr als zwei Aufnahmeelemente unbeweglich mit dem Grundkörper verbunden sind.

Es kann zudem vorgesehen sein, dass sämtliche Aufnahmeelemente bewegbar an dem Grundkörper angeordnet sind. Alternativ hierzu kann vorgesehen sein, dass sämtliche Aufnahmeelemente unbewegbar an dem Grundkörper angeordnet sind.

Das Fahrzeug umfasst vorzugsweise eine Hubantriebsvorrichtung, mittels welcher das eine Aufnahmeelement, die zwei Aufnahmeelemente oder die mehr als zwei Aufnahmeelemente relativ zu dem Grundkörper anhebbar und/oder absenkbar sind.

Insbesondere sind das eine Aufnahmeelement, die zwei Aufnahmeelemente oder die mehr als zwei Aufnahmeelemente mittels der Hubantriebsvorrichtung aus dem Grundkörper ausfahrbar und/oder in diesen einfahrbar.

Unter einem Ausfahren und einem Einfahren ist dabei nicht zwingend ein vollständiges Herausführen oder ein vollständiges Versenken zu verstehen. Vielmehr können auch eine Verlängerung eines aus dem Grundkörper herausragenden Abschnitts eines Aufnahmeelements bzw. eine Verkürzung desselben vorgesehen sein.

Günstig kann es sein, wenn das Fahrzeug eine Abstreifvorrichtung umfasst, mittels welcher an einem oder mehreren Aufnahmeelementen anhaftende Verunreinigungen beim Einfahren oder Absenken eines oder mehrerer Aufnahmeelemente von demselben bzw. denselben abstreifbar sind. Eine unerwünschte Verunreinigung eines Innenraums des Grundkörpers kann hierdurch vorzugsweise vermieden oder zumindest reduziert werden.

Günstig kann es sein, wenn mehrere Aufnahmeelemente, insbesondere sämtliche Aufnahmeelemente, miteinander gekoppelt und/oder ausschließlich gemeinsam relativ zu dem Grundkörper bewegbar sind.

Insbesondere kann vorgesehen sein, dass mehrere Aufnahmeelemente, insbesondere sämtliche Aufnahmeelemente ausschließlich gleichzeitig anhebbar und/oder ausschließlich gleichzeitig absenkbar sind.

Vorteilhaft kann es sein, wenn eine Hubantriebsvorrichtung des Fahrzeugs ein Hubantriebselement umfasst, wobei das Hubantriebselement vorzugsweise einen Hubantriebsmotor und zwei oder mehr als zwei Aufnahmeelemente miteinander verbindet, so dass die zwei oder die mehr als zwei Aufnahmeelemente gemeinsam mittels des Hubantriebsmotors bewegbar sind.

Ein Hubantriebselement ist insbesondere ein Hubantriebsriemen oder eine Hubantriebskette.

Mittels des Hubantriebselements sind vorzugsweise die zwei oder die mehr als zwei Aufnahmeelemente gemeinsam relativ zum Grundkörper anhebbar und/oder absenkbar.

Günstig kann es sein, wenn das Hubantriebselement sich durch eine Antriebsachse der Antriebsvorrichtung zum Antreiben des Fahrzeugs hindurch erstreckt.

Alternativ oder ergänzend hierzu kann vorgesehen sein, dass das Hubantriebselement sich unter einer Antriebsachse der Antriebsvorrichtung zum Antreiben des Fahrzeugs hindurch erstreckt.

Zwei oder mehr als zwei Aufnahmeelemente sind vorzugsweise auf einander gegenüberliegenden Seiten einer Antriebsachse der Antriebsvorrichtung angeordnet.

Günstig kann es sein, wenn die Antriebsvorrichtung eine Antriebsachse aufweist, welche zwei Antriebselemente, insbesondere Antriebsräder, der Antriebsvorrichtung miteinander verbindet. Die Antriebsachse ist vorzugsweise im Wesentlichen quer, insbesondere zumindest näherungsweise senkrecht, zu einer Längsmittelachse und/oder Hauptfahrtrichtung des Fahrzeugs ausgerichtet.

Insbesondere kann vorgesehen sein, dass das Fahrzeug genau eine Antriebsachse aufweist.

Vorteilhaft kann es sein, wenn die Antriebsvorrichtung eine Antriebsachse aufweist, welche zwei Antriebselemente, insbesondere Antriebsräder, der Antriebsvorrichtung miteinander verbindet, wobei die Antriebsachse bezüglich einer Längsmittelachse und/oder Hauptfahrtrichtung des Fahrzeugs zumindest näherungsweise mittig an dem Grundkörper des Fahrzeugs angeordnet ist.

Unter der Formulierung "zumindest näherungsweise mittig" ist insbesondere zu verstehen, dass eine oder mehrere Drehachsen, um welche ein oder mehrere Antriebselemente, beispielsweise Antriebsräder, der Antriebsachse drehbar sind, um einen Betrag von höchstens ungefähr 20% einer Gesamtlängserstreckung des Fahrzeugs von einer horizontalen Quermittelachse des Fahrzeugs entfernt angeordnet sind.

Die Antriebselemente, insbesondere die Antriebsräder, sind vorzugsweise in einem Abstand voneinander angeordnet, dessen Betrag größer ist als ungefähr 50%, insbesondere größer als ungefähr 70%, einer maximalen Breite des Fahrzeugs und/oder des Grundkörpers.

Günstig kann es sein, wenn in vier Eckbereichen des Fahrzeugs jeweils eine oder mehrere Stützrollen angeordnet sind.

Die Stützrollen sind insbesondere nicht angetriebene Stützrollen.

Vorzugsweise sind die Stützrollen um 360° bezüglich einer im Wesentlichen vertikalen Drehachse frei drehbare Stützrollen.

Es kann vorgesehen sein, dass die Antriebsvorrichtung eine Antriebsachse aufweist, welche zwei Antriebselemente, insbesondere Antriebsräder, der Antriebsvorrichtung miteinander verbindet, wobei die Antriebselemente gemeinsam mittels der Antriebsachse an dem Grundkörper gelagert sind.

Die Antriebsachse umfasst insbesondere ein Achsenelement, welches die Antriebsräder starr miteinander verbindet.

Die Antriebsachse ist somit insbesondere eine Starrachse. Vorzugsweise ist keine Einzelradaufhängung vorgesehen.

Es kann jedoch bei einer alternativen Ausgestaltung auch eine Einzelradaufhängung vorgesehen sein. Hierbei ist dann vorzugsweise eine Kopplungsvorrichtung zur mechanischen Kopplung der Antriebselemente, insbesondere der Antriebsräder, vorgesehen, insbesondere um ein gleichmäßiges Anpressen der Antriebselemente, insbesondere Antriebsräder, an dem befahrbaren Untergrund zu gewährleisten.

Mehrere Antriebselemente, insbesondere Antriebsräder, der Antriebsvorrichtung sind vorzugsweise unabhängig voneinander antreibbar.

Insbesondere kann hierfür vorgesehen sein, dass das Fahrzeug mehrere Antriebsmotoren umfasst.

Beispielsweise sind jedem Antriebselement, insbesondere Antriebsrad, jeweils ein Antriebsmotor zugeordnet.

Ein Antriebsmotor ist insbesondere ein Elektromotor.

Günstig kann es sein, wenn die Antriebsvorrichtung eine Antriebsachse und/oder ein oder mehrere Antriebselemente umfasst, welche mittels einer Betätigungsvorrichtung auf einen Boden absenkbar und/oder anpressbar und/oder von dem Boden abhebbar sind.

Die Antriebsachse und/oder ein oder mehrere Antriebselemente sind vorzugsweise in den Grundkörper des Fahrzeugs integriert und/oder von dem Grundkörper fünfseitig umgeben.

Die Betätigungsvorrichtung ist vorzugsweise an einer Außenseite des Fahrzeugs zur Betätigung derselben zugänglich.

Insbesondere sind somit vorzugsweise unzugängliche und/oder geschützte Antriebskomponenten der Antriebsvorrichtung vorgesehen, wobei zugleich beispielsweise durch Abheben eines oder mehrerer Antriebselemente mittels der Betätigungsvorrichtung von einer Außenseite des Fahrzeugs die Antriebsvorrichtung deaktivierbar ist, insbesondere um das Fahrzeug im Falle eines Ausfalls der Antriebsvorrichtung manuell verschieben zu können.

Ferner ist mittels der Betätigungsvorrichtung vorzugsweise ein Anpressdruck eines oder mehrerer Antriebselemente, insbesondere Antriebsräder, auf dem befahrbaren Untergrund einstellbar.

Günstig kann es sein, wenn ein um eine parallel zu einer Längsmittelachse des Fahrzeugs verlaufende Achse drehbar gelagertes Achsenelement vorgesehen ist, welches insbesondere zwei Antriebselemente, insbesondere Antriebsräder, fest miteinander verbindet. Die Antriebselemente, insbesondere Antriebsräder, weisen vorzugsweise zueinander fixierte, insbesondere identische, Drehachsen auf.

Das Achsenelement ist insbesondere mittels eines Lagerelements drehbar oder schwenkbar an dem Grundkörper des Fahrzeugs gelagert. Insbesondere ist eine höhenvariable und/oder federbelastete Lagerung des Lagerelements an dem Grundkörper vorgesehen. Mittels der Betätigungsvorrichtung ist vorzugsweise eine Höhe des Achsenelements und/oder Lagerelements relativ zu dem Grundkörper einstellbar.

Das Lagerelement ist vorzugsweise im Wesentlichen U-förmig ausgebildet.

Vorzugsweise umfasst das Lagerelement ein Mittelteil, an dessen Enden jeweils ein Schenkel angeordnet ist. Mittels eines Schenkels ist das Lagerelement vorzugsweise drehbar oder schwenkbar an dem Grundkörper gelagert.

Ein weiterer Schenkel des Lagerelements ist vorzugsweise mit einer Feder in Eingriff oder federbelastet. Insbesondere ist das Lagerelement federnd relativ zu dem Grundkörper bewegbar.

Der Mittelteil des Lagerelements ist vorzugsweise ein Lagerbereich, an welchem das Achsenelement drehbar oder schwenkbar gelagert ist.

Das U-förmige Lagerelement umgibt insbesondere einen Zwischenraum, durch welchen sich ein Hubantriebselement der Hubantriebsvorrichtung erstreckt.

Günstig kann es sein, wenn der Zwischenraum derjenige Raumbereich ist, welcher auf einander gegenüberliegenden Seiten von den Schenkeln des Lagerelements beschränkt ist.

Es kann vorgesehen sein, dass das eine Aufnahmeelement, die zwei Aufnahmeelemente oder die mehr als zwei Aufnahmeelemente jeweils einen Aufnahmeabschnitt aufweisen, welcher sich zu einem bezüglich einer Schwerkraftrichtung oberen Ende hin verjüngt.

Insbesondere kann vorgesehen sein, dass ein oder mehrere Aufnahmeabschnitte, insbesondere sämtliche Aufnahmeabschnitte, im Wesentlichen konusförmig, konusabschnittsförmig, kegelstumpfförmig oder kegelstumpfabschnittsförmig ausgebildet sind.

Ein zumindest abschnittsweise komplementär hierzu ausgebildeter Angriffsbereich eines Gegenstands und/oder einer Adaptervorrichtung zur Aufnahme eines oder mehrerer Gegenstände, kann hierdurch eine besonders stabile Festlegung eines Gegenstands an dem Fahrzeug ermöglichen. Insbesondere kann durch die sich verjüngende Ausgestaltung des Aufnahmeabschnitts ein seitliches Verkippen des Gegenstands verhindert werden. Auch mit nur einem oder nur zwei Aufnahmeelementen, welche insbesondere jeweils lediglich pinförmig, stiftförmig oder dornartig ausgebildet sind, kann hierdurch vorzugsweise eine stabile Aufnahme eines Gegenstands an dem Fahrzeug ermöglicht werden.

Bei einer Ausgestaltung der Erfindung kann vorgesehen sein, dass das eine Aufnahmeelement, die zwei Aufnahmeelemente oder die mehr als zwei Aufnahmeelemente in unterschiedlichen Positionen relativ zu dem Grundkörper anordenbar sind. Das eine Aufnahmeelement, die zwei Aufnahmeelemente oder die mehr als zwei Aufnahmeelemente ragen dabei vorzugsweise in einer bezüglich einer Schwerkraftrichtung untersten Position über eine Oberseite des Grundkörpers hervor und/oder aus dem Grundkörper heraus.

Es kann vorgesehen sein, dass das eine Aufnahmeelement, die zwei Aufnahmeelemente oder die mehr als zwei Aufnahmeelemente eine parallel zu einer Schwerkraftrichtung genommene Höhe aufweisen, welche größer ist als eine parallel zur Schwerkraftrichtung genommene Höhe des Grundkörpers des Fahrzeugs.

Ein oder mehrere Aufnahmeelemente sind insbesondere einstückig oder zweistückig ausgebildet.

Beispielsweise sind ein oder mehrere Aufnahmeelemente jeweils als Metallstäbe ausgebildet.

Das eine oder die mehreren Aufnahmeelemente umfassen jeweils vorzugsweise einen im Wesentlichen zylindrischen, vorzugsweise kreiszylindrischen, Schaftabschnitt, an dessen Ende jeweils ein Aufnahmeabschnitt angeordnet ist.

Die Erstreckung eines oder mehrerer Aufnahmeelemente in einer oder beiden senkrecht zur Schwerkraftrichtung verlaufenden Richtungen beträgt vorzugsweise höchstens ungefähr 10%, vorzugsweise höchstens ungefähr 5%, einer Längserstreckung bzw. Quererstreckung des Grundkörpers des Fahrzeugs.

Der Grundkörper ist dabei vorzugsweise derjenige Teil des Fahrzeugs, welcher eine tragende Struktur des Fahrzeugs, insbesondere einen Metallrahmen, bildet oder umfasst.

Der Grundkörper erstreckt sich vorzugsweise über mindestens ungefähr 80%, vorzugsweise mindestens ungefähr 90% einer Gesamtlänge oder Gesamtbreite des Fahrzeugs.

Günstig kann es sein, wenn das Fahrzeug einen oder mehrere Aufnahmesensoren umfasst, mittels welcher ein an mindestens einem Aufnahmeelement angeordneter Gegenstand erfassbar und/oder auf dessen korrekte Festlegung hin überwachbar ist.

Alternativ oder ergänzend hierzu kann vorgesehen sein, dass das Fahrzeug einen oder mehrere Aufnahmesensoren umfasst, mittels welcher eine Ausrichtung und/oder Positionierung eines beabstandet von dem mindestens einem Aufnahmeelement angeordneten Gegenstands erfassbar sind.

Insbesondere ist mittels mindestens eines Aufnahmesensors eine Ausrichtung und/oder Positionierung des Gegenstands vor einem Anheben oder Ausfahren des mindestens einen Aufnahmeelements erfassbar.

Der mittels des mindestens einen Aufnahmesensors zu erfassende oder zu überwachende Gegenstand ist dabei insbesondere ein zu befördernder Gegenstand, insbesondere eine Fahrzeugkarosserie, oder auch eine Kombination eines zu befördernden Gegenstands mit einer Adaptervorrichtung zur Aufnahme des Gegenstands.

Vorteilhaft kann es sein, wenn mindestens ein Aufnahmesensor an dem Grundkörper angeordnet ist.

Insbesondere kann vorgesehen sein, dass zwei Aufnahmesensoren oder mehr als zwei Aufnahmesensoren in einem ein oder mehrere Aufnahmeelemente umgebenden Bereich des Grundkörpers an demselben angeordnet sind.

Mittels dieses einen oder dieser mehreren Aufnahmesensoren kann insbesondere eine Annäherung und/oder Positionierung und/oder ein Vorhandensein eines Gegenstands an dem Aufnahmeelement und/oder im Bereich des Aufnahmeelements erfasst und/oder überwacht werden.

Alternativ oder ergänzend hierzu kann vorgesehen sein, dass mindestens ein Aufnahmesensor an dem Aufnahmeelement angeordnet ist.

Insbesondere können mehrere Aufnahmesensoren an mehreren Aufnahmeelementen angeordnet sein.

Insbesondere können als Kontaktsensoren ausgebildete Aufnahmesensoren vorgesehen sein.

An dem Grundkörper angeordnete Aufnahmesensoren sind vorzugsweise berührungslos arbeitende Aufnahmesensoren.

Mindestens ein Aufnahmesensor wechselwirkt vorzugsweise mit einer Detektionshilfe an einem aufzunehmenden oder aufgenommenen Gegenstand.

Insbesondere kann eine Öffnung, beispielsweise ein Loch, in einer Adaptervorrichtung zur Aufnahme eines Gegenstands vorgesehen sein. Mittels eines Aufnahmesensors kann dann insbesondere diese Öffnung erfasst werden.

Günstig kann es sein, wenn an einer Oberseite des Grundkörpers eine Abdeckung zum Abdecken eines Innenraums des Grundkörpers angeordnet ist.

Die Abdeckung ist vorzugsweise auf den Grundkörper aufgelegt.

Vorzugsweise ist die Abdeckung zumindest näherungsweise vollständig umlaufend bündig mit einem Auflagebereich des Grundkörpers angeordnet und/oder ausgebildet.

Beispielsweise kann vorgesehen sein, dass die Abdeckung zumindest näherungsweise vollständig umlaufend bündig mit einem Auflagebereich des Grundkörpers abschließt.

Eine obere Oberfläche des Fahrzeugs ist somit vorzugsweise im Wesentlichen vollständig eben, insbesondere unter Nichtberücksichtigung eines oder mehrerer herausragender Aufnahmeelemente.

Die Abdeckung ist somit vorzugsweise nicht ergreifbar, ohne Werkzeuge zu verwenden.

Die Abdeckung ist vorzugsweise ausschließlich aufgelegt und somit vorzugsweise ausschließlich mittels der Schwerkraft und/oder seitlich klemmend an dem Grundkörper gehalten.

Die Abdeckung bedeckt vorzugsweise mindestens ungefähr 40%, beispielsweise mindestens ungefähr 60%, insbesondere mindestens ungefähr 80%, einer Oberseite des Fahrzeugs, insbesondere des Grundkörpers.

Die Abdeckung ist vorzugsweise einstückig oder mehrteilig ausgebildet. Insbesondere sind mehrere Abdeckelemente entsprechend der vorstehend beschriebenen Abdeckung vorgesehen.

Beispielsweise mittels einer Saugnapfvorrichtung kann die Abdeckung von dem Grundkörper angehoben werden.

Günstig kann es sein, wenn an einer Oberseite des Grundkörpers eine Abdeckung zum Abdecken eines Innenraums des Grundkörpers angeordnet ist, wobei die Abdeckung vorzugsweise zumindest teilweise transparent ausgebildet ist.

Unter dem Begriff "transparent" ist insbesondere zu verstehen, dass eine Person durch die Abdeckung hindurchschauen kann und somit zumindest einzelne im Innenraum des Grundkörpers befindliche Fahrzeugkomponenten sichtbar sind. Hierdurch kann sich eine höhere Hemmschwelle für ein Begehen des Fahrzeugs ergeben, wodurch sich eine reduzierte Belastung und/oder ein reduzierter Verschleiß des Fahrzeugs oder dessen Komponenten ergeben kann.

Die Abdeckung kann beispielsweise getönt transparent sein.

Der Grundkörper umfasst vorzugsweise eine oder mehrere Seitenflächen, welche beispielsweise abgeschrägt ausgebildet sind.

Eine oder mehrere Seitenflächen verlaufen vorzugsweise schräg, insbesondere unter einem Winkel zwischen ungefähr 30° und 70°, zur Horizontalen und/oder Vertikalen.

Ein oder mehrere Notausschalter sind vorzugsweise an der einen oder den mehreren Seitenflächen angeordnet. Hierdurch sind die Notausschalter besonders einfach zugänglich, wodurch eine Sicherheit im Betrieb des Fahrzeugs erhöht werden kann.

Vorteilhaft kann es sein, wenn eine Oberseite des Fahrzeugs gegenüber einer Unterseite des Fahrzeugs zurückversetzt angeordnet ist. Insbesondere können hierdurch abgeschrägte Seitenflächen einfach realisiert werden. Zudem kann sich hierdurch ein optimierter Erfassungsbereich zur Erfassung einer Umgebung mittels noch zu beschreibender Sensoren ergeben.

Vorteilhaft kann es sein, wenn der Grundkörper im Wesentlichen quaderförmig ausgebildet ist, wobei zwei oder vier Eckbereiche des Grundkörpers jeweils mit einer nach außen hervorragenden Sensorvorrichtung des Fahrzeugs versehen sind.

Eine oder mehrere Sensorvorrichtungen weisen vorzugsweise jeweils ein oder mehrere Sensorelemente zur Erfassung einer Umgebung des Fahrzeugs auf. Das eine oder die mehreren Sensorelemente weisen vorzugsweise jeweils für sich genommen oder gemeinsam in einer im Wesentlichen horizontalen Ebene einen Erfassungsbereich von mindestens ungefähr 250°, insbesondere ungefähr 270°, auf.

Die eine oder die mehreren Sensorvorrichtungen sind vorzugsweise mit einer Steuervorrichtung des Fahrzeugs gekoppelt, wobei die Steuervorrichtung vorzugsweise so ausgebildet und eingerichtet ist, dass das Fahrzeug abhängig von Sensorwerten, welche mittels der einen oder der mehreren Sensorvorrichtungen erfasst und/oder bestimmt werden, in zwei, drei oder mehr als drei unterschiedlichen Betriebsmodi betreibbar ist.

Beispielsweise kann vorgesehen sein, dass einer der Betriebsmodi ein Normalbetrieb ist, in welchem keine unerwarteten und/oder unbekannten und/oder störenden Objekte in einem Fahrweg oder einem sonstigen vorgegebenen Umgebungsbereich des Fahrzeugs angeordnet sind.

Alternativ oder ergänzend hierzu kann vorgesehen sein, dass einer der Betriebsmodi ein Warnbetrieb ist, in welchem ein oder mehrere unerwartete und/oder unbekannte und/oder störende Objekte in einem vordefinierten Warnabschnitt eines Fahrwegs oder eines sonstigen vorgegebenen Umgebungsbereichs des Fahrzeugs angeordnet sind.

Ferner kann alternativ oder ergänzend hierzu vorgesehen sein, dass einer der Betriebsmodi ein Stoppbetrieb ist, in welchem ein oder mehrere unerwartete und/oder unbekannte und/oder störende Objekte in einem vordefinierten Stoppabschnitt eines Fahrwegs und/oder eines sonstigen vorgegebenen Umgebungsbereichs des Fahrzeugs angeordnet sind.

Ein Warnabschnitt und/oder ein Stoppabschnitt und/oder die unterschiedlichen Umgebungsbereiche zur Auslösung eines Warnbetriebs und/oder Stoppbetriebs ergeben sich vorzugsweise durch vorgegebene Minimal- und/oder Maximalabstände der unerwarteten und/oder unbekannten und/oder störenden Objekte von dem Fahrzeug, wobei diese Minimal- und/oder Maximalabstände vorzugsweise abhängig von einer aktuellen Beladung des Fahrzeugs und/oder einer aktuellen Fahrtrichtung und/oder einer aktuellen Fahrtgeschwindigkeit vorzugsweise mittels der Steuervorrichtung variierbar sind.

Ferner kann vorgesehen sein, dass das Fahrzeug eine oder mehrere Sensorvorrichtungen umfasst, mittels welcher eine räumliche Umgebung des Fahrzeugs samt einer räumlichen Umgebung und/oder eines Raumbereichs eines mittels des Fahrzeugs transportierten Gegenstands erfassbar und/oder überwachbar ist.

Abhängig davon, ob das Fahrzeug mit einem Gegenstand beladen oder unbeladen ist, kann dann vorzugsweise mittels der Steuervorrichtung eine den Normalbetrieb und/oder den Warnbetrieb und/oder den Stoppbetrieb auslösende Umgebungsüberwachung angepasst werden. Hierdurch kann insbesondere vermieden werden, dass ein Warnbetrieb oder Stoppbetrieb aufgrund eines oberhalb des Fahrzeugs befindlichen Objekts ausgelöst wird, obwohl kein Gegenstand auf dem Fahrzeug angeordnet ist und somit das Objekt auch kein Hindernis für das Fahrzeug darstellt.

Insbesondere Brücken und/oder Rückführbereiche mit reduzierter Fahrhöhe können hierdurch im Normalbetrieb unterfahren und/oder durchfahren werden, wobei zugleich eine Überwachung dahingehend erfolgt, dass tatsächlich kein zu fördernder Gegenstand an dem Fahrzeug angeordnet ist, welcher oder welches ansonsten beschädigt werden würde.

Im Warnbetrieb ist vorzugsweise eine Fahrgeschwindigkeit des Fahrzeugs reduziert, insbesondere im Vergleich zum Normalbetrieb. Ferner ist im Warnbetrieb vorzugsweise mittels einer Warnvorrichtung des Fahrzeugs ein akustisches Warnsignal und/oder ein optisches Warnsignal abgebbar.

Im Stoppbetrieb des Fahrzeugs ist dieses vorzugsweise bis zum Stillstand abbremsbar oder abgebremst. Alternativ oder ergänzend hierzu ist vorgesehen, dass im Stoppbetrieb mittels einer Warnvorrichtung des Fahrzeugs ein akustisches Notsignal und/oder ein optisches Notsignal abgebbar ist. Ferner kann alternativ oder ergänzend hierzu vorgesehen sein, dass im Stoppbetrieb mittels der Steuervorrichtung ein Notsignal an eine übergeordnete Steuerungsanlage zur Steuerung und/oder Überwachung mehrerer Fahrzeuge übertragbar ist.

Ein Warnsignal und/oder ein Notsignal umfasst vorzugsweise eine Aufforderung zur Räumung des Fahrwegs und/oder der Umgebung des Fahrzeugs.

Das Warnsignal und/oder das Notsignal kann beispielsweise eine menschliche oder maschinelle gesprochene Mitteilung sein.

Vorteilhaft kann es sein, wenn das Fahrzeug multidirektional, insbesondere bidirektional, verfahrbar ist.

Mittels eines oder mehrerer Anzeigenelemente ist vorzugsweise an jedem Endbereich des Fahrzeugs abhängig von einer aktuellen Fahrtrichtung anzeigbar, ob der jeweilige Endbereich aktuell ein Frontbereich oder ein Heckbereich des Fahrzeugs ist.

Ein oder mehrere Anzeigenelemente sind insbesondere an allen Eckbereichen des Fahrzeugs angeordnet und/oder ausgebildet.

Das eine oder die mehreren Anzeigenelemente bilden vorzugsweise zugleich Blinkerelemente, welche bei einer Kurvenfahrt und/oder einem Abbiegen von einer Hauptförderstrecke die jeweils angestrebte Fahrtrichtung des Fahrzeugs anzeigen.

Bei einer Ausgestaltung der Erfindung kann vorgesehen sein, dass das Fahrzeug eine oder mehrere Ladeanschlussstellen zum Aufladen eines Energiespeichers des Fahrzeugs umfasst.

Eine Ladeanschlussstelle ist beispielsweise an einer Unterseite des Grundkörpers angeordnet. Vorzugsweise ist das Fahrzeug zum Aufladen des Energiespeichers über einer hierzu korrespondierenden Ladeanschlussstelle eines Ladebereichs positionierbar.

Alternativ oder ergänzend hierzu kann vorgesehen sein, dass eine Ladeanschlussstelle an einer Oberseite des Grundkörpers angeordnet ist. Vorzugsweise ist das Fahrzeug zum Aufladen des Energiespeichers dann unter einer hierzu korrespondierenden Ladeanschlussstelle eines Ladebereichs positionierbar.

Ein Ladebereich ist insbesondere ein Teil einer Ladevorrichtung, an welcher eine berührungslose, beispielsweise induktive, und/oder mechanisch gekoppelte Energieübertragung erfolgt.

An einem Ladebereich ist zu einem gegebenen Zeitpunkt insbesondere genau ein Fahrzeug aufladbar.

Ein Ladebereich umfasst vorzugsweise eine energiequellenseitige Ladeanschlussstelle. Eine speicherseitige Ladeanschlussstelle ist vorzugsweise an dem Fahrzeug angeordnet und/oder ausgebildet.

Über die Ladeanschlussstelle des Ladebereichs wird vorzugsweise Energie aus dem Stromnetz bereitgestellt.

Mittels der Ladeanschlussstelle des Fahrzeugs wird vorzugsweise Energie von der Ladeanschlussstelle des Ladebereichs abgegriffen und dem Energiespeicher des Fahrzeugs zugeführt.

Günstig kann es sein, wenn die Ladeanschlussstelle berührend mit einer hierzu korrespondierenden Ladeanschlussstelle eines Ladebereichs koppelbar ist.

Eine berührende Ladeanschlussstelle ist oder umfasst beispielsweise einen Schleifkontakt.

Alternativ oder ergänzend hierzu kann vorgesehen sein, dass eine Ladeanschlussstelle berührungslos mit einer hierzu korrespondierenden Ladeanschlussstelle eines Ladebereichs koppelbar ist.

Insbesondere kann hierbei eine induktive Energieübertragung vorgesehen sein.

Vorteilhaft kann es sein, wenn das Fahrzeug eine an einer Seitenwandung des Grundkörpers angeordnete Ladeanschlussstelle umfasst, welche insbesondere eine zusätzliche Ladeanschlussstelle ist, welche zusätzlich zu einer beispielsweise an einer Unterseite des Grundkörpers angeordneten Ladeanschlussstelle vorgesehen ist.

Die Ladeanschlussstelle an einer Seitenwandung des Grundkörpers ist insbesondere eine weitere Ladeanschlussstelle, welche insbesondere mittels einer Steckverbindung mit einer hierzu korrespondierenden Ladeanschlussstelle eines Ladebereichs koppelbar ist.

Die an einer Unterseite des Grundkörpers angeordnete Ladeanschlussstelle kann bei einer Ausgestaltung des Fahrzeugs eine Hauptladeanschlussstelle sein, über welche im Normalbetrieb des Fahrzeugs ein Großteil der für den Betrieb erforderlichen Energie aufnehmbar ist.

Die weitere Ladeanschlussstelle ist insbesondere eine Reserveladeanschlussstelle und/oder Notladeanschlussstelle. Über diese weitere Ladeanschlussstelle ist dem Energiespeicher des Fahrzeugs insbesondere dann Energie zuführbar, wenn das Fahrzeug aus irgendwelchen Gründen nicht mehr zu einem Ladebereich für die Hauptladeanschlussstelle bringbar ist.

Günstig kann es sein, wenn mindestens eine Ladeanschlussstelle an mindestens einem Aufnahmeelement angeordnet und/oder ausgebildet ist.

Es kann vorgesehen sein, dass das Aufnahmeelement einen oder mehrere Kontaktbereiche und/oder eine Steuerkontaktierung umfasst.

Der eine oder die mehreren Kontaktbereiche sind vorzugsweise unzugänglich, wenn das mindestens eine Aufnahmeelement in einer eingefahrenen Stellung angeordnet ist. Die Kontaktbereiche sind dann insbesondere im Sinne eines optimierten Personenschutzes unzugänglich, insbesondere dann, wenn keine Gegenstände mittels des Fahrzeugs gefördert werden und somit keine Gegenstände den einen oder die mehreren Aufnahmeelemente abdecken.

Ein oder mehrere Kontaktbereiche und/oder eine Steuerkontaktierung sind insbesondere an einem Schaftbereich und/oder an einem Aufnahmezylinder mindestens eines Aufnahmeelements angeordnet und/oder ausgebildet.

Vorzugsweise sind zwei Kontaktbereiche auf bezüglich einer vertikalen Längsmittelachse des Fahrzeugs einander gegenüberliegende Seiten des mindestens einen Aufnahmeelements, insbesondere des Schaftbereichs und/oder Aufnahmezylinders des mindestens einen Aufnahmeelements, angeordnet und/oder ausgebildet.

Alternativ oder ergänzend hierzu können insbesondere in unterschiedlichen Höhen an dem Schaftbereich und/oder Aufnahmezylinder des mindestens einen Aufnahmeelements angeordnete Kontaktbereiche vorgesehen sein.

Insbesondere mittels eines oder mehrerer Schleifkontakte sind der eine oder die mehreren Kontaktbereiche vorzugsweise einfach an dem Aufnahmeelement kontaktierbar, um Energie zu dem Energiespeicher des Fahrzeugs zuführen zu können.

Vorteilhaft kann es sein, wenn das Fahrzeug einen Energiespeicher zur Speicherung und Bereitstellung von elektrischer Energie zum Antreiben des Fahrzeugs umfasst, wobei der Energiespeicher eine oder mehrere Energiespeichereinheiten umfasst, welche als Kondensator, insbesondere Superkondensator oder Ultrakondensator, ausgebildet sind.

Ferner kann es vorgesehen sein, dass das Fahrzeug einen Energiespeicher umfasst, mittels welchem elektrische Energie zum Antreiben einer Hubantriebsvorrichtung des Fahrzeugs speicherbar und bereitstellbar ist.

Mittels desselben Energiespeichers, insbesondere mittels derselben Energiespeichereinheit oder mittels derselben Energiespeichereinheiten des Energiespeichers, ist vorzugsweise Energie sowohl zum Antreiben der Hubantriebsvorrichtung als auch zum Antreiben des Fahrzeugs speicherbar und bereitstellbar.

Das Antreiben des Fahrzeugs ist insbesondere ein Fortbewegen des Fahrzeugs.

Das Fahrzeug umfasst vorzugsweise eine Steuervorrichtung, welche insbesondere so ausgebildet und eingerichtet ist, dass das Fahrzeug wahlweise in einem Sicherheitsmodus oder in einem Expressmodus betreibbar ist.

Vorzugsweise ist das Fahrzeug a) nur im Sicherheitsmodus oder b) nur im Expressmodus oder c) sowohl im Sicherheitsmodus als auch im Expressmodus wahlweise im Normalbetrieb und/oder im Warnbetrieb und/oder im Stoppbetrieb betreibbar.

Das Fahrzeug ist vorzugsweise in den Sicherheitsmodus versetzt oder versetzbar, wenn Personen in der Umgebung des Fahrzeugs detektiert werden und/oder ein Bereich befahren wird, welcher für Personen zugänglich ist.

Ferner ist das Fahrzeug vorzugsweise in den Expressmodus versetzt oder versetzbar, wenn in der Umgebung des Fahrzeugs keine Personen detektiert werden und/oder ein Bereich befahren wird, welcher für Personen unzugänglich ist.

Insbesondere ist das Fahrzeug in dem Sicherheitsmodus so betreibbar, dass die Vorgaben und/oder Empfehlungen aus der VDI-Richtlinie 2510 eingehalten werden.

Vorzugsweise ist vorgesehen, dass im Sicherheitsmodus eine oder mehrere Sensorvorrichtungen des Fahrzeugs eine Umgebung des Fahrzeugs überwachen.

Abhängig von den Ergebnissen der Sensorüberwachung ist im Sicherheitsmodus vorzugsweise mittels der Steuervorrichtung auswählbar, ob das Fahrzeug im Normalbetrieb, in einem Warnbetrieb und/oder in einem Stoppbetrieb betrieben wird.

Eine Höchstgeschwindigkeit im Sicherheitsmodus ist vorzugsweise angepasst an bestehende Normen, Richtlinien und/oder Empfehlungen für selbstfahrende Fahrzeuge in Räumen und/oder Bereichen, in welchen sich Personen aufhalten oder aufhalten können.

Im Expressmodus ist vorzugsweise keine Höchstgeschwindigkeit vorgeschrieben. Vielmehr wird im Expressmodus das Fahrzeug mittels der Steuervorrichtung vorzugsweise lediglich so gesteuert, dass ein Sachschaden vermieden wird. Insbesondere kann in einem unbeladenen Zustand des Fahrzeugs eine sehr hohe Geschwindigkeit weit über der Höchstgeschwindigkeit im Sicherheitsmodus vorgesehen sein. Beispielsweise beträgt die Geschwindigkeit des Fahrzeugs im Expressmodus mindestens ungefähr 150%, insbesondere mindestens ungefähr 200%, beispielsweise mindestens ungefähr 300%, der Höchstgeschwindigkeit des Fahrzeugs im Sicherheitsmodus.

Vorteilhaft kann es sein, wenn das Fahrzeug mittels einer nicht am Fahrzeug befindlichen Vorrichtung, insbesondere einer Sensorvorrichtung, beispielsweise unter Verwendung von externen Sicherheitskontakten, etc., in den Sicherheitsmodus oder in den Expressmodus versetzbar ist.

Eine nicht am Fahrzeug befindliche Vorrichtung ist insbesondere eine Überwachungsvorrichtung, mittels welcher überwacht wird oder überwachbar ist, ob Personen Zugang zu einem Expressbereich, in welchem das Fahrzeug im Expressmodus betrieben wird, haben oder haben könnten. Beispielsweise kann eine überwachte Zugangstür als Zugang zu dem Expressbereich im Falle der Öffnung derselben dazu führen, dass das Fahrzeug im Expressbereich umgehend aus dem Expressmodus in den Sicherheitsmodus versetzt wird.

Ferner kann vorgesehen sein, dass eine Steuervorrichtung des Fahrzeugs mittels eigener Sensoren und/oder durch Abfrage externer Sensoren einen Zustand eines Expressbereichs überprüft, bevor das Fahrzeug in den Expressmodus versetzt wird. Beispielsweise kann ein Umschalten aus dem Sicherheitsmodus in den Expressmodus im Expressbereich verhindert werden, wenn eine interne oder externe Sensorvorrichtung eine im Expressbereich befindliche Person detektiert.

Anstelle einer Personendetektion können auch andere Parameter oder Umstände zur sicheren Auswahl des Expressmodus herangezogen werden.

Ein Expressbereich kann beispielsweise in einer oder mehreren Ebenen einer Bearbeitungsanlage ausgebildet und/oder vorgesehen sein.

Vorteilhaft kann es sein, wenn ein Expressbereich sich zumindest näherungsweise vollständig, insbesondere zu mindestens ungefähr 90 %, beispielsweise zu mindestens ungefähr 95 %, einer Nutzfläche einer oder mehrerer Ebenen einer Bearbeitungsanlage über diese eine oder diese mehreren Ebene erstreckt.

Alternativ oder ergänzend hierzu kann vorgesehen sein, dass ein Sicherheitsbereich beispielsweise in einer oder mehreren Ebenen einer Bearbeitungsanlage ausgebildet und/oder vorgesehen ist.

Vorteilhaft kann es sein, wenn ein Sicherheitsbereich sich zumindest näherungsweise vollständig, insbesondere zu mindestens ungefähr 90 %, beispielsweise zu mindestens ungefähr 95 %, einer Nutzfläche einer oder mehrerer Ebenen einer Bearbeitungsanlage über diese eine oder diese mehreren Ebene erstreckt.

Ferner kann vorgesehen sein, dass eine oder mehrere Ebenen einer Bearbeitungsanlage jeweils einen oder mehrere Sicherheitsbereich sowie einen oder mehrere Expressbereich aufweisen.

Eine Ebene, welche zu mindestens ungefähr 50 %, insbesondere mindestens ungefähr 80 %, beispielsweise zu mindestens ungefähr 95 %, als Expressbereich ausgebildet ist, ist vorzugsweise eine Ebene mit mehrheitlich oder ausschließlich automatischen Arbeitsplätzen, d.h. mit mehrheitlich oder ausschließlich solchen Stationen und/oder Bearbeitungsbereichen, in welchen die Gegenstände mittels Robotern oder sonstige Maschinen bearbeitet werden.

Eine Ebene, welche zu mindestens ungefähr 50 %, insbesondere mindestens ungefähr 80 %, beispielsweise zu mindestens ungefähr 95 %, als Sicherheitsbereich ausgebildet ist, ist vorzugsweise eine Ebene mit mehrheitlich oder ausschließlich manuellen Arbeitsplätzen, d.h. mit mehrheitlich oder ausschließlich solchen Stationen und/oder Bearbeitungsbereichen, in welchen die Gegenstände von Personen bearbeitet werden.

Das eine oder die mehreren Aufnahmeelemente des Fahrzeugs können beispielsweise unmittelbar an einem zu fördernden Gegenstand festgelegt werden.

Es kann jedoch auch vorgesehen sein, dass ein zu fördernder Gegenstand mittels einer Adaptervorrichtung an dem einen oder den mehreren Aufnahmeelementen des Fahrzeugs festgelegt oder festlegbar ist.

Die vorliegende Erfindung betrifft daher auch eine Adaptervorrichtung zur Aufnahme eines Gegenstands, insbesondere eines Werkstücks, beispielsweise einer Fahrzeugkarosserie.

Die Adaptervorrichtung umfasst vorzugsweise Folgendes:
ein Zentralelement;
ein oder mehrere Adapterelemente, welche an dem Zentralelement festgelegt und zur Aufnahme des Gegenstands geometrisch an den Gegenstand angepasst sind.

Ein oder mehrere Angriffsbereiche, insbesondere Einführöffnungen, an welchen ein oder mehrere Aufnahmeelemente zur Aufnahme der Adaptervorrichtung angreifen, sind vorzugsweise an dem Zentralelement und/oder an dem einen oder den mehreren Adapterelementen angeordnet und/oder ausgebildet.

Das Zentralelement verbindet vorzugsweise mehrere Adapterelemente miteinander.

Insbesondere sind an einem oder mehreren Adapterelementen jeweils ein oder mehrere Aufnahmepins zur Aufnahme eines oder mehrerer Gegenstände, beispielsweise einer Fahrzeugkarosserie, vorgesehen.

Der eine oder die mehreren Angriffsbereiche, insbesondere Einführöffnungen, sind vorzugsweise im Wesentlichen komplementär zu einem oder mehreren Aufnahmeabschnitten angeordnet und/oder ausgebildet.

Insbesondere sind ein oder mehrere Angriffsbereiche, beispielsweise Einführöffnungen, im Wesentlichen konusförmig, konusabschnittsförmig, kegelstumpfförmig oder kegelstumpfabschnittsförmig ausgebildet.

Günstig kann es sein, wenn ein oder mehrere Angriffsbereiche, insbesondere Einführöffnungen, an einer Unterseite der Adaptervorrichtung angeordnet und/oder ausgebildet sind und sich entgegen der Schwerkraftrichtung verjüngen.

Die erfindungsgemäße Adaptervorrichtung eignet sich insbesondere zur Verwendung in Kombination mit einem erfindungsgemäßen Fahrzeug.

Die vorliegende Erfindung betrifft daher auch eine Kombination aus mindestens einem Fahrzeug und mindestens einer Adaptervorrichtung.

Insbesondere können mehrere Adapterelemente unterschiedlicher Geometrie und/oder Größe zur Aufnahme von Gegenständen unterschiedlicher Geometrie und/oder Größe vorgesehen sein.

Insbesondere kann die Kombination ein Baukastensystem zur Herstellung von Adaptervorrichtungen für unterschiedliche Arten von Gegenständen umfassen, wobei insbesondere ein oder mehrere identisch ausgebildete Zentralelemente und wahlweise daran anordenbare, insbesondere anschraubbare, Adapterelemente unterschiedlicher Geometrie und/oder Größe vorgesehen sind.

Das erfindungsgemäße Fahrzeug und/oder die erfindungsgemäße Adaptervorrichtung und/oder die erfindungsgemäße Kombination eignen sich insbesondere zur Verwendung in einer Fördervorrichtung zum Fördern von Gegenständen.

Die vorliegende Erfindung betrifft daher auch eine Fördervorrichtung zum Fördern von Gegenständen, insbesondere Werkstücken, beispielsweise Fahrzeugkarosserien.

Die Fördervorrichtung umfasst dabei insbesondere ein oder mehrere Fahrzeuge, beispielsweise erfindungsgemäße Fahrzeuge.

Die Fördervorrichtung umfasst ferner vorzugsweise eine oder mehrere Stationen, zu welchen die Gegenstände mittels eines oder mehrerer Fahrzeuge hin transportierbar sind und/oder an welchen die Gegenstände abgebbar und/oder aufnehmbar sind.

Insbesondere sind die Gegenstände an einer oder mehreren Stationen von den Fahrzeugen an eine Stationsfördervorrichtung und/oder an eine Stationsaufnahme übergebbar oder von derselben übernehmbar.

In mindestens einer der Stationen sind vorzugsweise zwei oder mehr als zwei Positionen für zwei oder mehr als zwei Gegenstände vorgesehen.

Ein Gegenstand ist vorzugsweise mittels eines Fahrzeugs in einer ersten Position an die Station abgebbar. In einer zweiten Position ist ein Gegenstand vorzugsweise mittels eines Fahrzeugs aufnehmbar und anschließend aus der Station abtransportierbar.

Die erste Position ist insbesondere eine Abgabeposition.

Die zweite Position ist insbesondere eine Aufnahmeposition.

Günstig kann es sein, wenn die Gegenstände während der Förderung von der ersten Position zu der zweiten Position oder in einer dazwischen angeordneten Zwischenposition bearbeitbar sind.

Günstig kann es sein, wenn mindestens ein Fahrzeug so ausgebildet und eingerichtet ist, dass ein Gegenstand in einer ersten Position an einer Station abgebbar ist und dass dann ein zuvor an dieser ersten Position abgegebener Gegenstand, welcher zwischenzeitlich zu einer zweiten Position dieser Station gefördert wurde, an der zweiten Position aufnehmbar ist. Mittels des mindestens einen Fahrzeugs ist somit insbesondere ein Takt der Fördervorrichtung überspringbar.

Die Fahrzeuge sind vorzugsweise weiterverwendbar, während ein oder mehrere Gegenstände temporär in einer Station verbleiben, insbesondere bearbeitet werden.

Der mittels des mindestens einen Fahrzeugs an der ersten Position abgegebene Gegenstand wird dann mittels eines weiteren Fahrzeugs, welches zwischenzeitlich einen weiteren Gegenstand an der ersten Position abgegeben hat, an der zweiten Position aufgenommen, insbesondere nach einer Bearbeitung des Gegenstands in einer Zwischenposition.

Die Fahrzeuge der Fördervorrichtung sind somit vorzugsweise auf den Transportvorgang hin optimiert. Insbesondere werden vorzugsweise Wartezeiten während einer Behandlung von Gegenständen vermieden.

Günstig kann es sein, wenn eine oder mehrere Stationen einen Trennboden umfassen, unter welchem das mindestens eine Fahrzeug bewegbar ist, insbesondere während ein oder mehrere Gegenstände oberhalb des Trennbodens bewegbar sind und/oder um ein oder mehrere Gegenstände oberhalb des Trennbodens zu bewegen.

Die Gegenstände sind dabei vorzugsweise vollständig über dem Trennboden angeordnet.

Das mindestens eine Fahrzeug, insbesondere der Grundkörper und das Fahrwerk, ist vorzugsweise unter dem Trennboden angeordnet, wobei allenfalls ein oder mehrere Aufnahmeelemente durch den Trennboden hindurchragen und/oder in den Trennboden hineinragen. Insbesondere ein Grundkörper des mindestens einen Fahrzeugs ist vorzugsweise vollständig unterhalb des Trennbodens angeordnet.

Der Trennboden erstreckt sich vorzugsweise von einer Abgabeposition bis hin zu einer Aufnahmeposition.

Zumindest erstreckt sich der Trennboden vorzugsweise im Bereich einer Zwischenposition, insbesondere über einen gesamten Behandlungsbereich hinweg, wenn die Station beispielsweise eine Behandlungsstation ist.

Der Trennboden ist vorzugsweise für Personen begehbar und/oder für Maschinen befahrbar.

Der Trennboden kann beispielsweise im Wesentlichen eben oder als Tunnel ausgebildet sein.

Insbesondere kann der Trennboden einen doppelten Boden bilden, welcher im Wesentlichen parallel zu einem befahrbaren Untergrund, insbesondere einem Hallenboden, auf welchem die Fördervorrichtung montiert ist, angeordnet ist.

Der Trennboden ist vorzugsweise im Wesentlichen fluiddicht, insbesondere tropfdicht.

Günstig kann es sein, wenn der Trennboden und/oder eine Stationsfördervorrichtung anhebbar und/oder absenkbar sind, insbesondere partiell. Hierdurch können insbesondere Gegenstände von einem oder mehreren Fahrzeugen und/oder einer sonstigen Förderanlage aufgenommen und/oder an ein oder mehrere Fahrzeuge und/oder eine sonstige Förderanlage übergeben werden.

Günstig kann es sein, wenn der Trennboden im Wesentlichen parallel zu einem befahrbaren Untergrund, auf welchem die Fördervorrichtung montiert ist, ausgerichtet ist. Ein Abstand einer vorzugsweise begehbaren Oberfläche des Trennbodens von einer vorzugsweise befahrbaren Oberfläche des befahrbaren Untergrunds beträgt vorzugsweise höchstens ungefähr das Fünffache, insbesondere höchstens ungefähr das Vierfache, vorzugsweise höchstens ungefähr das Doppelte, einer Höhe des Fahrzeugs und/oder einer Höhe des Grundkörpers des Fahrzeugs.

Günstig kann es sein, wenn zumindest ein Abschnitt des Trennbodens über einem Förderweg eines Fahrzeugs vollständig geschlossen ausgebildet ist. Hierdurch sind zu fördernde Gegenstände vorzugsweise vollständig räumlich von dem mindestens einen Fahrzeug getrennt.

Das eine oder die mehreren Fahrzeuge und die Gegenstände berühren sich dann vorzugsweise nicht mehr. Insbesondere sind keine durch den Trennboden hindurchragenden Teile vorgesehen. Auf diese Weise kann ein besonderer Schutz der Fahrzeuge vor Verunreinigung, Überhitzung, Feuchtigkeit, etc. gewährleistet werden, wenn die Fahrzeuge unter entsprechend beaufschlagten Stationen hindurchgefahren werden.

Es kann vorgesehen sein, dass der vollständig geschlossene Abschnitt des Trennbodens sich zumindest näherungsweise über eine gesamte Längserstreckung eines Bearbeitungsbereichs zur Bearbeitung der Gegenstände erstreckt.

Eine Übergabe von dem Fahrzeug auf die Stationsfördervorrichtung und/oder eine Übernahme von der Stationsfördervorrichtung auf das mindestens eine Fahrzeug erfolgen vorzugsweise außerhalb des Bearbeitungsbereichs.

Es kann jedoch auch vorgesehen sein, dass ein oder mehrere Gegenstände mittels eines Fahrzeugs direkt in eine Bearbeitungsposition gebracht werden. Eine Stationsfördervorrichtung ist dann vorzugsweise entbehrlich. Zum Schutz des Fahrzeugs kann dann vorgesehen sein, dass das Fahrzeug den einen oder die mehreren Gegenstände in der Bearbeitungsposition ablädt und den Bearbeitungsbereich verlässt. Zu einem späteren Zeitpunkt können mittels desselben oder eines anderen Fahrzeugs der dann fertig bearbeitete Gegenstand oder die dann fertig bearbeiteten Gegenstände erneut aufgenommen und weitertransportiert werden.

Eine Bearbeitung ist in dieser Beschreibung vorzugsweise ganz allgemein die Durchführung irgendeines Schritts zur Behandlung, Herstellung und/oder Fertigstellung eines Produkts. Insbesondere ist unter einer Bearbeitung die Herstellung, Behandlung, Beschichtung, Montage, Reparatur, Kontrolle, etc. eines Produkts oder Teils hiervon zu verstehen.

Eine Längserstreckung eines Bearbeitungsbereichs ist insbesondere eine Erstreckung des Bearbeitungsbereichs längs einer Förderrichtung und/oder eines Förderwegs, beispielsweise von einem Eingang und/oder einer Abgabeposition der Station bis zu einem Ausgang und/oder einer Aufnahmeposition der Station.

Günstig kann es sein, wenn der Trennboden einen Durchtrittsbereich, beispielsweise einen Durchtrittsschlitz, aufweist, durch welchen ein oder mehrere Aufnahmeelemente des mindestens einen Fahrzeugs sich hindurcherstrecken oder in welchen ein oder mehrere Aufnahmeelemente des mindestens einen Fahrzeugs sich hineinerstrecken.

Der Durchtrittsbereich, insbesondere der Durchtrittsschlitz, erstreckt sich vorzugsweise längs eines Förderwegs der Fördervorrichtung und/oder gibt einen Förderweg der Fördervorrichtung vor.

Es kann vorgesehen sein, dass zu einer oder zu beiden Seiten des Durchtrittsbereichs, insbesondere des Durchtrittsschlitzes, ein Durchtrittsrandbereich gebildet ist, welcher insbesondere im Vergleich zum übrigen Trennboden erhöht ausgebildet ist.

Die erhöhte Ausbildung bezieht sich insbesondere auf ein Höhenniveau in einem den Durchtrittsrandbereich umgebenden Teil des Trennbodens, insbesondere einem begehbaren Bodenbereich des Trennbodens.

Eine durch den Durchtrittsbereich, insbesondere den Durchtrittschlitz, gebildete Durchtrittsöffnung in dem Trennboden ist somit vorzugsweise über einer begehbaren Bodenebene angeordnet, wodurch insbesondere vermieden werden kann, dass auf dem begehbaren Bodenbereich des Trennbodens befindliche lose Teile oder Flüssigkeiten durch den Durchtrittsbereich hindurch zu dem mindestens einen Fahrzeug gelangen.

Ein durchschnittlicher freier oder freigebbarer Abstand zwischen zwei einander bezüglich des Durchtrittsbereichs gegenüberliegenden Durchtrittsrandbereichen beträgt vorzugsweise höchstens ungefähr das Vierfache, beispielsweise höchstens ungefähr das Dreifache, insbesondere höchstens ungefähr das Doppelte, einer durchschnittlichen horizontal und senkrecht zum Förderweg genommenen Dicke mindestens eines Aufnahmeelements des mindestens einen Fahrzeugs.

Günstig kann es sein, wenn ein durchschnittlicher freier oder freigebbarer Abstand zwischen zwei einander bezüglich des Durchtrittsbereichs gegenüberliegenden Durchtrittsrandbereichen höchstens ungefähr 150%, vorzugsweise höchstens ungefähr 100%, beispielsweise höchstens ungefähr 80%, einer durchschnittlichen horizontal und senkrecht zum Förderweg genommenen Erstreckung eines Zentralelements einer Adaptervorrichtung zur Aufnahme mindestens eines Gegenstands beträgt. Hierdurch kann das Zentralelement der Abdeckvorrichtung den Durchtrittsbereich, insbesondere den Durchtrittsschlitz, zumindest teilweise oder vollständig abdecken, wodurch insbesondere eine unerwünschte Verunreinigung des Fahrzeugs vermieden oder zumindest reduziert werden kann.

Der Durchtrittsrandbereich kann in einem senkrecht zum Förderweg genommenen Querschnitt beispielsweise im Wesentlichen L-förmig ausgebildet sein.

Alternativ oder ergänzend hierzu kann vorgesehen sein, dass der Durchtrittsrandbereich sich schräg zu einer Schwerkraftrichtung und/oder schräg zu einer horizontalen Richtung erstreckt.

Vorteilhaft kann es sein, wenn die Fördervorrichtung, insbesondere der Trennboden, beispielsweise der Durchtrittsrandbereich, ein oder mehrere Schließelemente umfasst, mittels welchen der Durchtrittsbereich, insbesondere der Durchtrittsschlitz, verschließbar ist, vorzugsweise permanent oder temporär.

Insbesondere kann vorgesehen sein, dass der Durchtrittsbereich, insbesondere der Durchtrittsschlitz, mittels des einen oder der mehreren Schließelemente automatisch verschließbar ist.

Alternativ oder ergänzend hierzu kann vorgesehen sein, dass der Durchtrittsbereich, insbesondere der Durchtrittsschlitz, mittels eines oder mehrerer Schließelemente insbesondere dann verschließbar ist, wenn kein Aufnahmeelement durch den Durchtrittsbereich hindurchragt.

Ferner kann alternativ oder ergänzend hierzu vorgesehen sein, dass der Durchtrittsbereich, insbesondere Durchtrittsschlitz, mittels eines oder mehrerer Schließelemente in denjenigen Abschnitten des Durchtrittsbereichs, insbesondere des Durchtrittsschlitzes, verschließbar ist, wo gerade kein Aufnahmeelement durch den Durchtrittsbereich hindurchragt.

Ein oder mehrere Schließelemente sind insbesondere mittels des einen oder der mehreren Aufnahmeelemente betätigbar, insbesondere in eine Offenstellung und/oder eine Schließstellung bringbar.

Alternativ oder ergänzend hierzu kann vorgesehen sein, dass ein oder mehrere Schließelemente federnd und/oder unter Einwirkung der Schwerkraft automatisch von einer Offenstellung in eine Schließstellung bringbar sind.

Ein oder mehrere Schließelemente sind insbesondere als Lamellen und/oder Klappen ausgebildet.

Vorteilhaft kann es sein, wenn die Fördervorrichtung eine Stationsfördervorrichtung umfasst, mittels welcher die Gegenstände unabhängig von den Fahrzeugen förderbar sind, wobei die Stationsfördervorrichtung vorzugsweise in einen Trennboden der Station integriert ist.

Die Gegenstände sind mittels der Stationsfördervorrichtung vorzugsweise unabhängig von den Fahrzeugen von einer Abgabeposition zu einer Bearbeitungsposition und/oder zu einer Aufnahmeposition und/oder zu weiteren Stationen und/oder einem Pufferbereich zur Pufferung von zu fördernden Gegenständen förderbar.

Die Stationsfördervorrichtung kann beispielsweise eine Rollenbahn, ein Schienenförderer oder ein Kettenförderer sein oder eine Rollenbahn, einen Schienenförderer und/oder einen Kettenförderer umfassen.

Insbesondere sind Rollen der Rollenbahn, welche beispielsweise vereinzelt antreibbar sind, in den Trennboden integriert.

Ferner können insbesondere eine oder mehrere Schienen eines Schienenförderers in den Trennboden integriert sein.

Günstig kann es sein, wenn die Fördervorrichtung mehrere Fahrzeuge aufweist, welche stapelbar sind.

Insbesondere umfasst die Fördervorrichtung mehrere identisch ausgebildete Fahrzeuge, welche übereinander und/oder aufeinander stapelbar sind.

Die Fördervorrichtung kann hierfür beispielsweise eine Stapelvorrichtung zur Stapelung und/oder Entstapelung mehrerer Fahrzeuge umfassen.

Ein Stapel aus Fahrzeugen kann insbesondere zum Transport und/oder zur Aufbewahrung derselben vorteilhaft sein.

Mittels der Stapelvorrichtung können insbesondere mehrere übereinander gestapelte Fahrzeuge nach dem Transport derselben vereinzelt werden.

Die Stapelvorrichtung kann beispielsweise eine Hubeinheit umfassen, mittels welcher ein oder mehrere Fahrzeuge relativ zu einem befahrbaren Untergrund anhebbar sind, insbesondere derart, dass eine Oberseite der Hubeinheit, auf welche vor dem Anheben ein Fahrzeug aufgefahren wurde, bündig mit einer Oberseite eines Fahrzeugs oder eines noch zu beschreibenden Zwischenelements ist, so dass das auf der Hubeinheit befindliche Fahrzeug auf das weitere Fahrzeug auffahren kann.

Die Hubeinheit umfasst dabei insbesondere eine Seitenwandung, welche zumindest teilweise komplementär zu einer Seitenwandung der Fahrzeuge ausgebildet ist.

Insbesondere ist die befahrbare Oberfläche der Hubeinheit zumindest einseitig an die Form einer Oberseite der Fahrzeuge und/oder an die Form von Zwischenelementen zur Stapelung der Fahrzeuge angepasst.

Ferner kann die Verwendung einer oder mehrerer Regaleinheiten vorgesehen sein, wobei mittels einer Stapelvorrichtung die Fahrzeuge vorzugsweise in die Regaleinheiten, insbesondere einzelne Regalfächer der Regaleinheiten, einbringbar sind.

Die Fahrzeuge können beispielsweise unmittelbar aufeinander gestapelt werden.

Insbesondere dann, wenn ein oder mehrere Aufnahmeelemente aus einem Grundkörper des jeweiligen Fahrzeugs herausragen, können diese jedoch einer solchen Stapelung entgegenstehen.

Günstig kann es daher sein, wenn ein oder mehrere, insbesondere befahrbare, Zwischenelemente zwischen jeweils zwei Fahrzeuge eingebracht werden oder auf einem Fahrzeug angebracht werden, bevor ein weiteres Fahrzeug auf diesem Fahrzeug angeordnet wird.

Das eine oder die mehreren Zwischenelemente schaffen insbesondere einen Abstand zwischen den Grundkörpern der aufeinander zu stapelnden Fahrzeuge, um eine Kollision mit einem oder mehreren Aufnahmeelementen zu vermeiden.

Ferner können ein oder mehrere Zwischenelemente zur Verankerung der Fahrzeuge aneinander dienen.

Günstig kann es ferner sein, wenn mittels eines Zwischenelements eine Ladeanschlussstelle bereitgestellt wird, um insbesondere auch die Energiespeicher derjenigen Fahrzeuge laden zu können, welche auf einem weiteren Fahrzeug angeordnet sind und somit nicht unmittelbar über eine Ladeanschlussstelle eines Ladebereichs fahrbar sind.

Bei einer Ausgestaltung der Erfindung ist vorgesehen, dass die Fördervorrichtung einen oder mehrere Ladebereiche zum Aufladen eines Energiespeichers des mindestens einen Fahrzeugs umfasst.

Ein oder mehrere Ladebereiche sind vorzugsweise an einer oder mehreren Stationen der Fördervorrichtung angeordnet, zu welchen die Gegenstände mittels des mindestens einen Fahrzeugs hin transportierbar sind und/oder an welchen die Gegenstände abgebbar und/oder aufnehmbar sind.

Ein oder mehrere Ladebereiche sind ferner vorzugsweise bezüglich eines Förderwegs mindestens eines Fahrzeugs zwischen zwei Stationen der Fördervorrichtung angeordnet, zu welchen die Gegenstände mittels des mindestens einen Fahrzeugs hin transportierbar sind und/oder an welchen die Gegenstände abgebbar und/oder aufnehmbar sind.

Es kann vorgesehen sein, dass ein oder mehrere Ladebereiche in oder an einem Förderweg mindestens eines Fahrzeugs angeordnet sind. Ein Förderweg ist dabei insbesondere ein Weg, längs welchem Gegenstände mittels des mindestens einen Fahrzeugs förderbar sind.

Ein Gesamtförderweg oder Gesamtfahrweg jedes Fahrzeugs umfasst vorzugsweise einen Förderweg, längs welchem ein oder mehrere Gegenstände gefördert werden und einen Rückförderweg, längs welchem das jeweilige Fahrzeug verfahren wird, um beispielsweise von einer Endstation, an welcher ein Gegenstand endgültig von der Fördervorrichtung abgegeben wird, zurück zu einer Anfangsstation gebracht zu werden, an welcher die Gegenstände erstmalig mit der Fördervorrichtung in Kontakt kommen.

Ein Rückförderweg ist insbesondere ein Weg, an welchem die Fahrzeuge unbeladen sind.

Günstig kann es sein, wenn ein oder mehrere Ladebereiche in oder an einem Wegabschnitt angeordnet sind, welcher dauerhaft oder temporär einen Abschnitt eines Förderwegs eines oder mehrerer Fahrzeuge und einen Abschnitt eines Rückförderwegs desselben oder derselben Fahrzeuge oder eines oder mehrerer anderer Fahrzeuge bildet.

Insbesondere kann vorgesehen sein, dass ein oder mehrere Ladebereiche in oder an einem Wegabschnitt angeordnet sind, welcher alternierend einen Abschnitt eines Förderwegs eines oder mehrerer Fahrzeuge und einen Abschnitt eines Rückförderwegs desselben oder derselben Fahrzeuge oder eines oder mehrerer anderer Fahrzeuge bildet.

Günstig kann es sein, wenn ein oder mehrere Ladebereiche an einem mehrdirektionalen Förderbereich angeordnet sind, an welchem und/oder durch welchen ein oder mehrere Fahrzeuge in unterschiedlichen Fahrtrichtungen hindurchfahren.

Vorteilhaft kann es sein, wenn ein oder mehrere Ladebereiche in oder an einem Kreuzungsbereich angeordnet sind, in welchem sich ein oder mehrere Förderwege und/oder ein oder mehrere Rückförderwege eines oder mehrerer Fahrzeuge kreuzen.

Durch geeignete Positionierung der Ladebereiche kann insbesondere eine Leitungslänge zwischen einer Energiequelle und dem jeweiligen Ladebereich minimiert werden.

Ein oder mehrere Ladebereiche sind vorzugsweise stationäre Ladebereiche, an welchen das mindestens eine Fahrzeug zum Laden des Energiespeichers und/oder während des Ladens des Energiespeichers stationär ist.

Hierbei kann vorgesehen sein, dass ein oder mehrere Ladebereiche so angeordnet sind, dass diese beispielsweise ohne Umgehungsmöglichkeit unmittelbar im Förderweg liegen. Ein oder mehrere Fahrzeuge sind dann insbesondere ohne Umweg in den einen oder die mehreren Ladebereiche einbringbar und darin zum Aufladen des jeweiligen Energiespeichers zum Stillstand bringbar. Nach dem Aufladevorgang wird das Fahrzeug wieder in Bewegung versetzt und folgt erneut dem Förderweg.

Alternativ oder ergänzend hierzu kann jedoch auch vorgesehen sein, dass ein oder mehrere Ladebereiche abseits eines beispielsweise optimierten oder kürzesten Förderwegs angeordnet sind. Das mindestens eine Fahrzeug verlässt dann kurzzeitig den optimierten und/oder kürzesten Förderweg, um in dem einen oder den mehreren Ladebereichen den jeweiligen Energiespeicher aufzuladen. Nach dem Aufladevorgang kehren das eine oder die mehreren Fahrzeuge dann zurück auf den beispielsweise optimierten oder kürzesten Förderweg.

Insbesondere dann, wenn zwischen mehreren längs eines gemeinsamen Förderwegs geförderten Fahrzeugen größere zeitliche und/oder räumliche Abstände sind, kann ein Anhalten unmittelbar auf dem optimierten und/oder kürzesten Förderweg zum Aufladen des jeweiligen Energiespeichers vorgesehen sein. Hierdurch kann vorzugsweise eine besonders platzsparende Ausgestaltung der Fördervorrichtung erzielt werden.

Bei in kurzen zeitlichen und/oder räumlichen Abständen aufeinanderfolgenden Fahrzeugen kann hingegen ein Entfernen eines aufzuladenden Fahrzeugs aus dem vorgegebenen, insbesondere optimierten und/oder kürzesten, Förderweg vorteilhaft sein, um nachfolgende Fahrzeug nicht zu blockieren.

Sämtliche vorstehenden Merkmale können auch bei nicht stationären Ladebereichen, d. h. bei Mobilladebereichen vorgesehen sein. In solchen Mobilladebereichen ist insbesondere eine im Vergleich zu einer Normalgeschwindigkeit reduzierte Geschwindigkeit oder auch die Normalgeschwindigkeit selbst als Fahrgeschwindigkeit des Fahrzeugs vorgesehen.

Günstig kann es sein, wenn ein oder mehrere Ladebereiche Mobilladebereiche sind, an welchen das mindestens eine Fahrzeug während des Ladens des Energiespeichers vorbeibewegbar ist und/oder durch welche das mindestens eine Fahrzeug während des Ladens des Energiespeichers hindurchbewegbar ist.

Eine Ladeanschlussstelle kann beispielsweise unter einem Fahrzeug, seitlich am Fahrzeug und/oder über dem Fahrzeug angeordnet sein.

Vorzugsweise ist die Ladeanschlussstelle in einem Normalbetrieb des Fahrzeugs und/oder der Fördervorrichtung für Personen unzugänglich.

Vorteilhaft kann es sein, wenn die Fördervorrichtung, insbesondere ein oder mehrere Fahrzeuge, beispielsweise sämtliche Fahrzeuge, jeweils eine Freigabevorrichtung umfassen, mittels welcher eine oder mehrere Ladeanschlussstellen des jeweiligen Fahrzeugs und/oder eine oder mehrere Ladeanschlussstellen des jeweiligen Ladebereichs temporär zum Aufladen des jeweiligen Energiespeichers freigebbar, insbesondere freilegbar, sind. Beispielsweise kann vorgesehen sein, dass Kontaktbereiche freigegeben werden, insbesondere durch Herausklappen von Kontaktelementen und/oder Aufschieben von Abdeckelementen, etc.

Eine Freigabevorrichtung wird dabei insbesondere durch eine Wechselwirkung des Fahrzeugs mit dem Ladebereich betätigt.

Günstig kann es sein, wenn die Freigabevorrichtung richtungsabhängig ist, so dass insbesondere mindestens ein in mindestens einem mehrdirektionalen Förderbereich angeordneter Ladebereich für in unterschiedliche Richtungen orientierte Fahrzeuge unterschiedliche Kontaktbereiche freigeben kann. Insbesondere eine falsche Verpolung kann hierdurch vorzugsweise vermieden werden.

Ein oder mehrere Ladebereiche können beispielsweise an oder in einem Durchtrittsbereich eines Trennbodens der Fördervorrichtung angeordnet und/oder ausgebildet sein.

Beispielsweise kann vorgesehen sein, dass ein oder mehrere Schließelemente Kontaktelemente des Ladebereichs zur Kontaktierung von Kontaktbereichen an dem Fahrzeug, insbesondere einem oder mehreren Aufnahmeelementen, bilden.

Alternativ oder ergänzend hierzu kann vorgesehen sein, dass ein oder mehrere Schließelemente Betätigungselemente zur Betätigung einer Freigabevorrichtung zum Freigeben eines oder mehrerer Kontaktbereiche des Fahrzeugs sind.

Günstig kann es sein, wenn ein oder mehrere Ladebereiche an einer Unterseite eines Trennbodens einer Station der Fördervorrichtung angeordnet und/oder ausgebildet sind.

Der eine oder die mehreren Ladebereiche sind dann insbesondere von unten her kontaktierbar, wobei eine mit der Ladeanschlussstelle des Ladebereichs korrespondierende Ladeanschlussstelle des Fahrzeugs vorzugsweise an einer Oberseite des Fahrzeugs angeordnet und/oder ausgebildet ist.

Eine Ladeanschlussstelle des Fahrzeugs ragt insbesondere von unten gegen den Trennboden der Fördervorrichtung, wobei die Aufladung des Energiespeichers des Fahrzeugs insbesondere erfolgen kann, wenn das Fahrzeug stationär ist. Alternativ hierzu kann auch eine mobile Aufladung vorgesehen sein, bei welcher der Energiespeicher des Fahrzeugs geladen wird, während das Fahrzeug in die Station hinein, durch Station hindurch und/oder aus der Station heraus gefahren wird.

Die Fördervorrichtung umfasst vorzugsweise mehrere solcher Stationen.

Es kann vorgesehen sein, dass ein oder mehrere Ladebereiche an einem Boden angeordnet sind, auf welchem das mindestens eine Fahrzeug verfahrbar ist. Der eine oder die mehreren Ladebereiche sind insbesondere direkt unter einem Trennboden einer Station der Fördervorrichtung angeordnet und/oder ausgebildet.

Günstig kann es sein, wenn ein oder mehrere Ladebereiche als Ladebucht ausgebildet sind, in welche ein oder mehrere Fahrzeuge zum Aufladen des jeweiligen Energiespeichers einbringbar sind, insbesondere unter Abweichung von einem, beispielsweise optimierten und/oder kürzesten, Förderweg und/oder einem, beispielsweise optimierten und/oder kürzesten, Rückförderweg des Fahrzeugs.

Eine oder mehrere Ladebuchten sind vorzugsweise Wartebereiche zur temporären Aufbewahrung eines oder mehrerer Fahrzeuge.

Alternativ oder ergänzend hierzu kann vorgesehen sein, dass eine oder mehrere Ladebuchten Wartungsbereiche zur Durchführung von Wartungsarbeiten an einem oder mehreren Fahrzeugen sind.

Ein Wartebereich ist insbesondere ein Bereich, in welchem das jeweilige Fahrzeug auf einen nachfolgenden Auftrag wartet oder an welchem das Fahrzeug verweilt, bis ein bereits erteilter Auftrag fällig wird.

Ein Wartungsbereich ist insbesondere ein Bereich, in welchem die Wartung und/oder Instandhaltung eines oder mehrerer Fahrzeuge von hierfür geschultem Personal durchgeführt wird.

Bei einer Ausgestaltung der Erfindung kann vorgesehen sein, dass ein oder mehrere Ladebereiche derart an einer Abgabeposition einer Station und/oder an einer Aufnahmeposition einer Station angeordnet sind, dass insbesondere während eines Positioniervorgangs zur Positionierung eines Fahrzeugs relativ zu der Station, insbesondere zur Übergabe oder Übernahme eines Gegenstands, ein Energiespeicher des Fahrzeugs aufladbar ist.

Die Abgabeposition und die Aufnahmeposition sind insbesondere Bereiche, an welchen ein oder mehrere Gegenstände von dem Fahrzeug auf eine Stationsfördervorrichtung übergeben bzw. von der Stationsfördervorrichtung auf das Fahrzeug übergeben werden. Da hierfür eine sehr genaue Positionierung des Fahrzeugs relativ zu der Station erforderlich ist, kann der Positionierungsvorgang im Vergleich zu einer Höchstgeschwindigkeit des Fahrzeugs nur mit reduzierter Geschwindigkeit, beispielsweise weniger als ungefähr 0,5 m/s durchgeführt werden. Das Fahrzeug legt entsprechend geringe Wegstrecken während des Positioniervorgangs zurück, so dass beispielsweise unter Verwendung von Schleifkontakten oder durch Induktion während des Positioniervorgangs der Energiespeicher des Fahrzeugs aufgeladen werden kann.

Vorteilhaft kann es sein, wenn sich die Fördervorrichtung auf mehreren Ebenen erstreckt und einen oder mehrere Ladebereiche umfasst, welche in einer Transfervorrichtung zum Transferieren eines oder mehrerer Fahrzeuge von einer Ebene zu einer weiteren Ebene angeordnet sind.

Die Transfervorrichtung ist insbesondere ein Aufzug oder eine sonstige Hebevorrichtung zum Transferieren eines oder mehrerer Fahrzeuge von einer Ebene zu einer weiteren Ebene.

Die Ebenen der Fördervorrichtung sind dabei vorzugsweise ferner Ebenen einer Behandlungsanlage, auf welchen unterschiedliche oder auch identische Behandlungsvorgänge durchgeführt werden.

Die Transfervorrichtung kann dabei insbesondere so ausgebildet sein, dass ein oder mehrere Fahrzeuge gleichzeitig oder nur einzeln nacheinander transferierbar sind. Dabei kann einerseits ein Transferieren mit einem oder mehreren Gegenständen, welche an dem einen oder den mehreren Fahrzeugen angeordnet sind, oder ohne Gegenstände vorgesehen sein.

Vorteilhaft kann es sein, wenn die Fördervorrichtung einen oder mehrere Ladeknotenpunkte umfasst, welche jeweils mehrere Ladebereiche zum gleichzeitigen Laden mehrerer Fahrzeuge umfassen.

Die Ladebereiche eines oder mehrerer Ladeknotenpunkte sind vorzugsweise so angeordnet und/oder ausgerichtet, dass mehrere Fahrzeuge in unterschiedlichen Ausrichtungen oder in identischen Ausrichtungen, d.h. parallel zueinander, an den Ladebereichen aufladbar sind.

Ein oder mehrere Ladenknotenpunkte sind vorzugsweise an Stellen angeordnet, an welchen sich mehrere Förderwege und/oder Rückförderwege kreuzen und/oder überlappen.

Vorteilhaft kann es sein, wenn die Fördervorrichtung einen oder mehrere Sicherheitsbereiche und einen oder mehrere Expressbereiche umfasst, wobei das eine oder die mehreren Fahrzeuge in dem einen oder den mehreren Sicherheitsbereichen mittels einer Steuervorrichtung vorzugsweise in den Sicherheitsmodus versetzbar sind und wobei das eine oder die mehreren Fahrzeuge in dem einen oder den mehreren Expressbereichen vorzugsweise mittels der Steuervorrichtung in den Expressmodus versetzbar sind.

Der Sicherheitsbereich ist insbesondere für Personen zugänglich.

Der Expressbereich ist insbesondere ein zumindest temporär für Personen unzugänglicher Bereich. Falls mittels einer oder mehrerer Sensorvorrichtungen ermittelt wird, dass Personen zu dem Expressbereich Zutritt erhalten oder erhalten könnten, wird dies detektiert und vorzugsweise automatisch auch im Expressbereich für alle darin befindlichen Fahrzeuge der Sicherheitsmodus aktiviert.

Der Expressbereich ist insbesondere ein räumlich von dem Sicherheitsbereich getrennter und/oder abgesperrter Bereich.

Ein oder mehrere Expressbereiche umfassen vorzugsweise einen oder mehrere Rückförderwege oder Rückförderwegabschnitte, in welchen das eine oder die mehreren Fahrzeuge unbeladen sind.

Insbesondere sind keine zu fördernde Gegenstände an dem jeweiligen Fahrzeug angeordnet, wenn dieses unbeladen ist.

Der mindestens eine Expressbereich kann somit insbesondere so flach ausgebildet sein, dass kein Gegenstand an dem einen oder den mehreren Fahrzeugen aufnehmbar ist, wenn diese im Expressbereich angeordnet sind.

Der Expressbereich ist insbesondere an eine Höhe des Fahrzeugs ohne daran angeordnete Gegenstände angepasst.

Vorteilhaft kann es sein, wenn ein oder mehrere Expressbereiche und/oder ein oder mehrere Sicherheitsbereiche mittels einer oder mehrerer Durchfahrtsöffnungen miteinander verbunden sind.

Die eine oder die mehreren Durchfahrtsöffnungen sind insbesondere Öffnungen, durch welche ein oder mehrere Fahrzeuge aus dem Expressbereich in den Sicherheitsbereich und/oder aus dem Sicherheitsbereich in den Expressbereich fahren können.

Die eine oder die mehreren Durchfahrtsöffnungen weisen vorzugsweise zumindest abschnittsweise eine Form auf, welche zumindest näherungsweise und/oder zumindest abschnittsweise komplementär zu einer Form eines oder mehrerer Fahrzeuge ausgebildet ist.

Hierdurch kann insbesondere ein unerwünschter Zutritt zu dem Expressbereich für Personen vermieden werden.

Es kann vorgesehen sein, dass eine oder mehrere Durchfahrtsöffnungen in oder an einer oder mehreren Stationen der Fördervorrichtung angeordnet sind.

Alternativ oder ergänzend hierzu kann vorgesehen sein, dass eine oder mehrere Durchfahrtsöffnungen durch eine oder mehrere Stationen der Fördervorrichtung gebildet sind.

Eine oder mehrere Stationen trennen somit vorzugsweise einen Expressbereich von einem Sicherheitsbereich.

Beispielsweise kann hierbei vorgesehen sein, dass mittels eines oder mehrerer Fahrzeuge ein zu fördernder Gegenstand zu einer Station gefördert und beispielsweise an eine Stationsfördervorrichtung übergeben wird. Das eine oder die mehreren Fahrzeuge werden dann beispielsweise durch die Station hindurch in den Expressbereich gefahren und können insbesondere beschleunigt weiterverfahren werden, insbesondere um weitere Aufgaben zu übernehmen. Der eine oder die mehreren in der Station angeordneten Gegenstände sind dann beispielsweise mittels einer Stationsfördervorrichtung und/oder mittels eines oder mehrerer anderer Fahrzeuge aus der Station entfernbar, beispielsweise weiterförderbar, insbesondere zu einer oder mehreren anderen Stationen und/oder einer Puffervorrichtung zur Zwischenspeicherung der Gegenstände.

Günstig kann es sein, wenn ein oder mehrere Expressbereiche mittels eines begehbaren und/oder befahrbaren doppelten Bodens gebildet sind.

Insbesondere kann vorgesehen sein, dass der Expressbereich ein Zwischenraum zwischen einem Hallenboden und einem Zusatzboden ist, welcher sich parallel zu dem Hallenboden erstreckt.

Ein Abstand zwischen dem Hallenboden und dem Zusatzboden beträgt vorzugsweise weniger als das Vierfache, vorzugsweise weniger als das Dreifache, beispielsweise höchstens ungefähr das Zweifache, einer Höhe des Fahrzeugs, insbesondere einer Höhe des Grundkörpers des Fahrzeugs.

Anstelle eines Hallenbodens kann auch ein anderer befahrbarer Untergrund vorhanden sein.

Der Bereich auf dem Zusatzboden oder derjenige Bereich, in welchem kein Zusatzboden vorhanden ist, ist insbesondere ein Sicherheitsbereich.

Der Zusatzboden kann beispielsweise ein Trennboden sein oder einen Trennboden umfassen.

Die Fördervorrichtung umfasst vorzugsweise mehrere Arten von Stationen, wobei von mindestens zwei Arten von Stationen vorzugsweise jeweils mehrere Stationen vorgesehen sind.

Die Fahrzeuge sind mittels der Steuervorrichtung vorzugsweise abhängig von der Belegung der Stationen einer jeweiligen Art steuerbar. Insbesondere kann vorzugsweise die Zuführung von Gegenständen zu den Stationen abhängig von der jeweiligen Belegung der Stationen einer jeweiligen Art gewählt werden.

Bei einer Ausgestaltung der Erfindung kann vorgesehen sein, dass die zu fördernden Gegenstände mittels eines oder mehrerer Fahrzeuge in einer vorgegebenen Reihenfolge zu und/oder durch jeweils eine der Stationen unterschiedlicher Art förderbar sind. Mittels einer Steuervorrichtung ist vorzugsweise eine einzelne Station einer jeweiligen Art von Stationen auswählbar, insbesondere
a) abhängig von einer aktuellen Belegung der einzelnen Stationen einer jeweiligen Art von Stationen und/oder
b) abhängig von einer Ausstattung der einzelnen Stationen einer jeweiligen Art von Stationen und/oder
c) abhängig von einer Ausgestaltung der einzelnen Stationen einer jeweiligen Art von Stationen und/oder
d) abhängig von einem aktuellen Wartungsstand oder Verunreinigungsgrad der einzelnen Stationen einer jeweiligen Art von Stationen.

Die Fördervorrichtung eignet sich insbesondere als Bestandteil einer Bearbeitungsanlage zur Bearbeitung von Gegenständen, insbesondere Werkstücken, beispielsweise Fahrzeugkarosserien.

Die vorliegende Erfindung betrifft daher auch eine Bearbeitungsanlage zur Bearbeitung von Gegenständen.

Die Bearbeitungsanlage umfasst vorzugsweise eine Fördervorrichtung, insbesondere eine erfindungsgemäße Fördervorrichtung.

Die erfindungsgemäße Bearbeitungsanlage weist vorzugsweise einzelne oder mehrere der im Zusammenhang mit der erfindungsgemäßen Fördervorrichtung und/oder dem erfindungsgemäßen Fahrzeug beschriebenen Merkmale und/oder Vorteile auf.

Günstig kann es sein, wenn eine oder mehrere Stationen der Fördervorrichtung, welche zur Förderung von Gegenständen mittels Fahrzeugen der Fördervorrichtung fördertechnisch miteinander verbunden sind, Bearbeitungsstationen der Bearbeitungsanlage sind.

Mittels eines oder mehrerer Fahrzeuge der Fördervorrichtung sind somit vorzugsweise zu bearbeitende Gegenstände nacheinander unterschiedlichen Bearbeitungsstationen der Bearbeitungsanlage zuführbar.

Die vorliegende Erfindung betrifft ferner Verfahren zum Bearbeiten und/oder Fördern von Gegenständen.

Die Gegenstände werden dabei insbesondere mittels eines oder mehrerer Fahrzeuge, insbesondere erfindungsgemäßer Fahrzeuge, und/oder mittels einer Fördervorrichtung, insbesondere einer erfindungsgemäßen Fördervorrichtung, gefördert.

Alternativ oder ergänzend hierzu kann vorgesehen sein, dass die Gegenstände in und/oder mittels einer Bearbeitungsanlage, insbesondere einer erfindungsgemäßen Bearbeitungsanlage, bearbeitet werden.

Die Verfahren weisen vorzugsweise einzelne oder mehrere der im Zusammenhang mit dem Fahrzeug, der Fördervorrichtung und/oder der Bearbeitungsanlage beschriebenen Merkmale und/oder Vorteile auf.

Grundsätzlich sind selbstverständlich sämtliche Merkmale und/oder Vorteile des Fahrzeugs, der Adaptervorrichtung, der Fördervorrichtung, der Bearbeitungsanlage und/oder der Verfahren frei miteinander kombinierbar, um besondere Ausgestaltungen der Erfindung zu erhalten.

Ferner können einzelne oder mehrere oder sämtliche Merkmale und/oder Vorteile in dieser Beschreibung und den beigefügten Ansprüchen zur optionalen Weiterbildung eines Verfahrens zum Fördern von Gegenständen herangezogen werden.

Ein solches Verfahren sieht insbesondere vor, dass die Gegenstände mittels einer Fördervorrichtung gefördert werden, welche mehrere Fahrzeuge umfasst, die insbesondere flurgebunden und/oder selbstfahrend ausgebildet sind.

Dabei ist vorzugsweise vorgesehen, dass die Fahrzeuge mittels jeweils einer dem jeweiligen Fahrzeug zugeordneten Steuervorrichtung und/oder mittels einer mehreren Fahrzeugen übergeordneten Steueranlage gesteuert werden.

Es kann vorzugsweise sein, dass die einzelnen, vorzugsweise fahrerlosen, Fahrzeuge flexibel nach einem Materialfluss- und/oder einem Produktionsplan bewegt werden. Ein starrer Ablaufplan ist vorzugsweise nicht vorgesehen. Vielmehr werden vorzugsweise mittels einer übergeordneten Steueranlage einzelne Transportaufträge für die einzelnen Fahrzeuge erstellt.

Die Transportaufträge werden vorzugsweise über ein Flottenmanagementsystem an die einzelnen Fahrzeuge übermittelt, woraufhin die einzelnen Fahrzeuge den jeweiligen Transportauftrag ausführen.

Optional können ein oder mehrere Flottenmanagementsubsysteme vorgesehen sein, welche insbesondere zwischen das Flottenmanagementsystem und die einzelnen Fahrzeuge dazwischengeschaltet sind.

Insbesondere dann, wenn die Fördervorrichtung mehrere voneinander unabhängige Gruppen von Fahrzeugen aufweist, kann jeder Gruppe ein separates Flottenmanagementsubsystem zugeordnet sein.

Von dem Flottenmanagementsystem kann dann beispielsweise nur der grundsätzliche Transportauftrag für die jeweilige Gruppe von Fahrzeugen übermittelt werden. Erst das Flottenmanagementsubsystem kann dann beispielsweise den Transportauftrag einem einzelnen Fahrzeug aus der Gruppe zuweisen.

Voneinander unabhängige Gruppen von Fahrzeugen sind beispielsweise in räumlich voneinander getrennten Bereichen einer Produktionsanlage befindliche Fahrzeuge, beispielsweise Fahrzeuge auf unterschiedlichen Ebenen einer Produktionsanlage, insbesondere einer Lackier- und/oder Fertigungsanlage.

Die Steueranlage kann insbesondere ein funktionales Modul "AGV-Fleet-Service" darstellen und/oder bilden, welches beispielsweise als übergeordnete Basis Transportaufträge erstellt und diese insbesondere an das Flottenmanagementsystem übergibt.

Der Transport von Gegenständen findet erfindungsgemäß zwischen Stoppstellen statt, welche insbesondere Aufnahmestationen, Übergabestationen, Speicherstationen, Bearbeitungsstationen, Behandlungsstationen, etc. sind.

Insbesondere folgt der Transport der Gegenstände einer Priorität einer Zielematrix aus dem Datensatz eines Gegenstands, insbesondere aus einem Karosseriedatensatz.

Vorteilhaft kann es sein, wenn Daten aus einem Produktionsplanungssystem, insbesondere aktuelle ERP-Daten (Daten aus einem Enterprise-Resource-Planing-System), beispielsweise aus einem Produktionsplan eines spezifischen Gegenstands, zur Erstellung und/oder Priorisierung und/oder Durchführung der Transportaufträge verwendet werden.

Insbesondere kann eine Identifikationsnummer, insbesondere eine VIN-Nummer (Vehicle Identification Number), mit dem Materialfluss abgestimmt und in Einklang gebracht werden.

Günstig kann es sein, wenn beispielsweise mittels eines "Fleet-Service" (insbesondere mittels der Steueranlage) vollautomatisch Transportaufträge zwischen Stoppstellen der jeweiligen Einzelsysteme oder Subsysteme oder Stationen generiert und diesbezügliche Daten mit einem Flottenmanagementsystem der Fahrzeuge ausgetauscht werden.

Erfindungsgemäß bietet in gewissen Grenzen oder auch unbegrenzt dieser Fleet-Service (insbesondere die Steueranlage) Möglichkeiten für manuelle Eingriffe und Erweiterungen. So ist es möglich, den Fahrzeugen, insbesondere virtuelle oder reale, Stoppstellen hinzuzufügen oder diese zu blockieren, um die Vorteile eines flexiblen Fördersystems zu nutzen. Hierdurch werden während der Produktion Priorisierungsänderungen bei der Generierung von Transportaufträgen berücksichtigt.

Das Verfahren zur Steuerung der Fahrzeuge ist vorzugsweise auch lauffähig ohne überlagerte Datenbankapplikation zur Verwaltung der Produkt- und Prozessstammdaten.

Optional kann eine Konfiguration mittels Datenbanktabellen möglich sein, insbesondere für einen Betrieb ohne überlagertes Management System (MES).

Start-/Endpunkte eines Transportauftrags werden vorzugsweise als typisierte Haltepunkte oder Stoppstellen verwaltet.

Vorteilhaft kann es sein, wenn Haltepunkte oder Stoppstellen manuell aktivierbar oder deaktivierbar sind.

Eine Verweilzeit eines Gegenstands und/oder eines Fahrzeugs an einem Haltepunkt und/oder einer Stoppstelle ist vorzugsweise frei konfigurierbar oder vorgegeben, beispielsweise durch eine Taktzeit.

Die Verweilzeit wird insbesondere an die Steueranlage, insbesondere den Fleet Service, übergegeben, wenn ein Gegenstand an einem Haltepunkt und/oder an einer Stoppstelle zur Abholung bereitsteht. Die Übergabe der Verweilzeit ist insbesondere eventbasiert.

Die Steueranlage stellt vorzugsweise REST Services bereit, um insbesondere Daten darüber aufzunehmen und/oder zu übertragen, welches Werkstück an welcher Station zur Abholung bereit ist und welche Station die nächste anzufahrende Station ist.

Beispielsweise über Konfigurationsoptionen können vorzugsweise fixe Vorgabezeiten zur proaktiven Bereitstellung von Fahrzeugen an Haltepunkten und/oder Stoppstellen erfasst werden.

Eine Abholung von Gegenständen erfolgt vorzugsweise eventbasiert und/oder automatisch nach Ablauf einer vorgegebenen Verweilzeit.

Das Routing kann beispielsweise auf Basis der in einem Event übermittelten Nachfolge-Stoppstelle oder auf Basis der Reihenfolge erfolgen, wobei dann insbesondere die nächste Stoppstelle mit dem nächst höheren Rang angefahren wird. Ist kein höherer Rang vorhanden, wird vorzugsweise wieder die Station mit niedrigster Reihenfolge angefahren.

Bei einer fehlerhaften Abarbeitung von Transportaufträgen durch das Flottenmanagementsystem wird der Transportauftrag vorzugsweise wiederholt, wobei eine maximale Wiederhol-Anzahl beispielsweise über einen Parameter konfiguriert werden kann.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer ersten Ausführungsform eines Fahrzeugs;
- Fig. 2: einen schematischen horizontalen Schnitt durch das Fahrzeug aus Fig. 1;
- Fig. 3: eine schematische Draufsicht auf eine Unterseite des Fahrzeugs aus Fig. 1;
- Fig. 4: einen schematischen vertikalen Schnitt durch das Fahrzeug aus Fig. 1 längs der Linie 4-4 in Fig. 3;
- Fig. 5: einen schematischen vertikalen Schnitt durch das Fahrzeug aus Fig. 1 längs der Linie 5-5 in Fig. 3;
- Fig. 6: einen schematischen vertikalen Schnitt durch das Fahrzeug aus Fig. 1 längs der Linie 6-6 in Fig. 3;
- Fig. 7: eine vergrößerte Darstellung des Bereichs VII in Fig. 6;
- Fig. 8: einen schematischen horizontalen Schnitt durch das Fahrzeug aus Fig. 1 längs der Linie 8-8 in Fig. 5;
- Fig. 9: eine schematische perspektivische Darstellung einer Adaptervorrichtung, welche an dem Fahrzeug aus Fig. 1 festlegbar ist und der Aufnahme eines Gegenstands dient;
- Fig. 10: eine weitere schematische perspektivische Darstellung der Adaptervorrichtung aus Fig. 9;
- Fig. 11: eine schematische Seitenansicht des Fahrzeugs aus Fig. 1, der Adaptervorrichtung aus Fig. 9 und eines daran angeordneten, partiell dargestellten Gegenstands;
- Fig. 12: eine schematische Seitenansicht einer Stapelvorrichtung zum Stapeln und/oder Entstapeln von Fahrzeugen;
- Fig. 13: eine der Fig. 12 entsprechende schematische Darstellung der Stapelvorrichtung, wobei eine Hubeinheit der Stapelvorrichtung in einer angehobenen Stellung angeordnet ist;
- Fig. 14: eine schematische perspektivische Darstellung von Teilen einer Fördervorrichtung, welche in einer Bearbeitungsanlage zum Einsatz kommt;
- Fig. 15: eine schematische Draufsicht auf ein vorderes Ende der Fördervorrichtung aus Fig. 14, mit Blickrichtung längs der Förderrichtung;
- Fig. 16: eine der Fig. 15 entsprechende schematische Darstellung einer alternativen Ausführungsform einer Fördervorrichtung, bei welcher ein Hängeförderer als Stationsfördervorrichtung vorgesehen ist, wobei der Hängeförderer in einer abgesenkten Stellung angeordnet ist;
- Fig. 17: eine der Fig. 16 entsprechende schematische Darstellung der Fördervorrichtung aus Fig. 16, wobei der Hängeförderer in einer angehobenen Stellung angeordnet ist;
- Fig. 18: eine der Fig. 15 entsprechende schematische Darstellung einer weiteren alternativen Ausführungsform einer Fördervorrichtung, bei welcher eine Station mit Hubtischen zum Anheben eines Gegenstands vorgesehen ist;
- Fig. 19: eine schematische Darstellung eines Trennbodens einer Station, mittels welchem ein Fahrzeug und eine Adaptervorrichtung sowie gegebenenfalls ein daran angeordneter Gegenstand voneinander getrennt sind, wobei der Trennboden einen als Durchtrittsschlitz ausgebildeten Durchtrittsbereich aufweist, welcher beidseitig von schräg verlaufenden Durchtrittsrandbereichen begrenzt ist;
- Fig. 20: eine der Fig. 19 entsprechende schematische Darstellung einer alternativen Ausführungsform des Trennbodens, bei welcher im Wesentlichen L-förmige Durchtrittsrandbereiche vorgesehen sind;
- Fig. 21: eine der Fig. 19 entsprechende schematische Darstellung einer weiteren alternativen Ausführungsform des Trennbodens, bei welcher der Durchtrittsbereich mittels Schließelementen verschließbar ist, wobei die Schließelemente beispielsweise Klappen sind;
- Fig. 22: eine der Fig. 19 entsprechende schematische Darstellung einer weiteren alternativen Ausführungsform eines Trennbodens, bei welcher der Durchtrittsbereich mittels als Lamellen ausgebildeter Schließelemente verschließbar ist;
- Fig. 23: eine der Fig. 22 entsprechende schematische Darstellung des Trennbodens, des Fahrzeugs sowie der Adaptervorrichtung aus Fig. 22, wobei ein oder mehrere Aufnahmeelemente des Fahrzeugs in einer angehobenen oder ausgefahrenen Position angeordnet sind und somit die Adaptervorrichtung von einer Stationsfördervorrichtung angehoben wurde;
- Fig. 24: eine schematische Darstellung des Layouts einer Bearbeitungsanlage, welche mehrere Bearbeitungsstationen und mehrere Ladebereiche zum Laden der Fahrzeuge aufweist;
- Fig. 25: eine der Fig. 24 entsprechende schematische Darstellung einer weiteren Ebene der Bearbeitungsanlage aus Fig. 24;
- Fig. 26: eine schematische Darstellung eines Verfahrens zur Steuerung einer Fördervorrichtung.

Gleiche oder funktional äquivalente Elemente sind in sämtlichen Figuren mit denselben Bezugszeichen versehen.

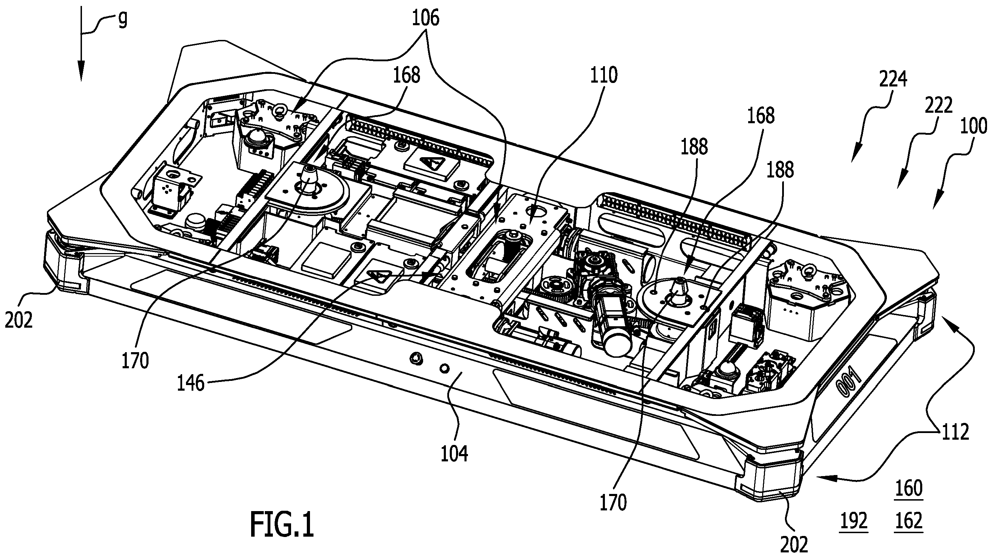

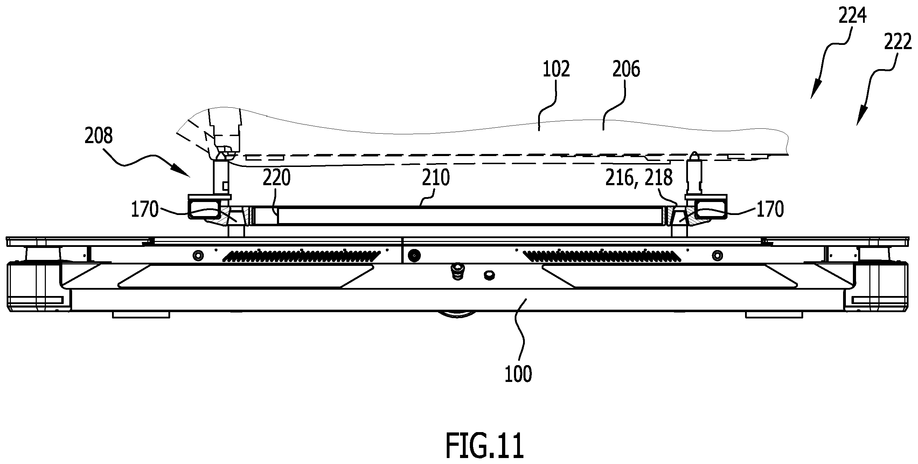

Eine in den Fig. 1 bis 8 dargestellte erste Ausführungsform eines als Ganzes mit 100 bezeichneten Fahrzeugs ist insbesondere ein fahrerloses Transportfahrzeug zum Transportieren von Gegenständen 102 (siehe diesbezüglich beispielsweise Fig. 11).

Wie insbesondere den Fig. 1 bis 8 zu entnehmen ist, umfasst das Fahrzeug 100 einen im Wesentlichen quaderförmigen Grundkörper 104, welcher eine tragende Struktur des Fahrzeugs 100 bildet.

Ferner umfasst das Fahrzeug 100 ein Fahrwerk 106, welches mehrere, beispielsweise vier, Stützrollen 108 und eine Antriebsvorrichtung 110 umfasst.

Die Stützrollen 108 sind insbesondere in vier Eckbereichen 112 des Fahrzeugs 100 an einer Unterseite 114 des Fahrzeugs 100 angeordnet.

Die Stützrollen 108 sind insbesondere teilweise in den Grundkörper 104 des Fahrzeugs 100 eingelassen, so dass das Fahrzeug 100 eine möglichst geringe Gesamthöhe aufweist.

Die Stützrollen 108 sind insbesondere um im Wesentlichen vertikale Drehachsen 116 um 360° frei drehbar gelagert.

Insbesondere sind die Stützrollen 108 nicht angetriebene Räder.

Die Antriebsvorrichtung 110 umfasst beispielsweise zwei Antriebselemente 118, welche beispielsweise als Antriebsräder 120 ausgebildet sind.

Jedem Antriebselement 118 ist vorzugsweise ein Antriebsmotor 122 der Antriebsvorrichtung 110 zugeordnet, so dass die Antriebselemente 118 unabhängig voneinander antreibbar sind.

Die Antriebsmotoren 122 und die Antriebselemente 118 sind vorzugsweise mittels eines Achsenelements 124 starr miteinander verbunden.

Die Antriebselemente 118 sind dabei insbesondere an einander gegenüberliegenden Enden des Achsenelements 124 drehbar gelagert.

Das Achsenelement 124 ist mittels eines Lagerelements 126 der Antriebsvorrichtung 110 drehbar oder schwenkbar an dem Grundkörper 104 des Fahrzeugs 100 gelagert. Das Lagerelement 126 ist hierzu beispielsweise im Wesentlichen C-förmig ausgebildet und/oder umfasst ein Mittelteil 128 und zwei in dieselbe Richtung von dem Mittelteil 128 wegragende Schenkel 130.

Ein dem Mittelteil 128 abgewandtes Ende eines Schenkels 130 bildet vorzugsweise eine Lagerstelle 132, an welcher das Lagerelement 126 drehbar oder schwenkbar an dem Grundkörper 104 des Fahrzeugs 100 gelagert ist.

Der weitere Schenkel 130 des Lagerelements 126 wechselwirkt vorzugsweise mit einem Federelement 134, so dass die Schwenkbewegung und/oder Drehbewegung des Lagerelements 126 relativ zur Lagerstelle 132, insbesondere um eine durch die Lagerstelle 132 vorgegebene Lagerachse 136, eine gefederte Bewegung ist.

Die Lagerachse 136 ist insbesondere im Wesentlichen parallel zu einer Hauptfahrtrichtung 138 des Fahrzeugs 100, welche vorzugsweise zugleich parallel zu einer horizontalen Längsmittelachse 140 des Fahrzeugs 100 ist. Im Mittelteil 128 des Lagerelements 126 ist insbesondere eine Schwenkverbindung 142 zur Verbindung des Lagerelements 126 mit dem Achsenelement 124 vorgesehen.

Insbesondere ist das Achsenelement 124 mittels der Schwenkverbindung 142 schwenkbar an dem Lagerelement 126 gelagert.

Eine Schwenkachse 144, um welche das Achsenelement 124 relativ zu dem Lagerelement 126 schwenkbar ist, ist vorzugsweise parallel zur Lagerachse 136 und/oder parallel zur Längsmittelachse 140 und/oder parallel zur Hauptfahrtrichtung 138.

Zudem ist die Schwenkachse 144 vorzugsweise im Wesentlichen mittig zwischen den beiden Antriebselementen 118 und/oder im Wesentlich mittig zwischen den beiden Antriebsmotoren 122 angeordnet.

Da die Schwenkachse 144 und die Lagerachse 136 parallel versetzt zueinander sind, kann durch Drehung des Lagerelements 126 um die Lagerachse 136 die Schwenkverbindung 142 und somit auch das Achsenelement 124 samt der daran angeordneten Antriebselemente 118 angehoben oder abgesenkt werden.

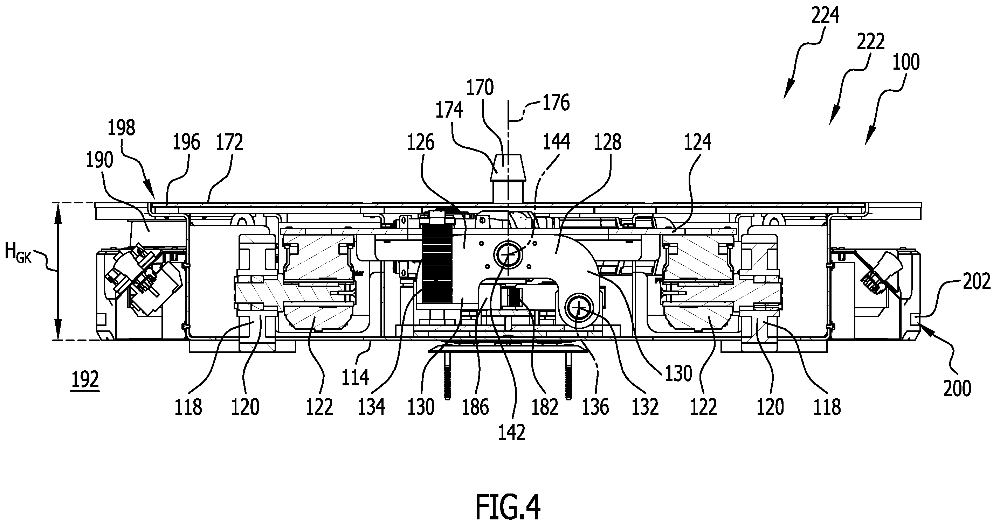

Wie insbesondere Fig. 4 zu entnehmen ist, können hierdurch insbesondere die Antriebsräder 118 unterschiedlich weit aus dem Grundkörper 104 herausragend positioniert werden.

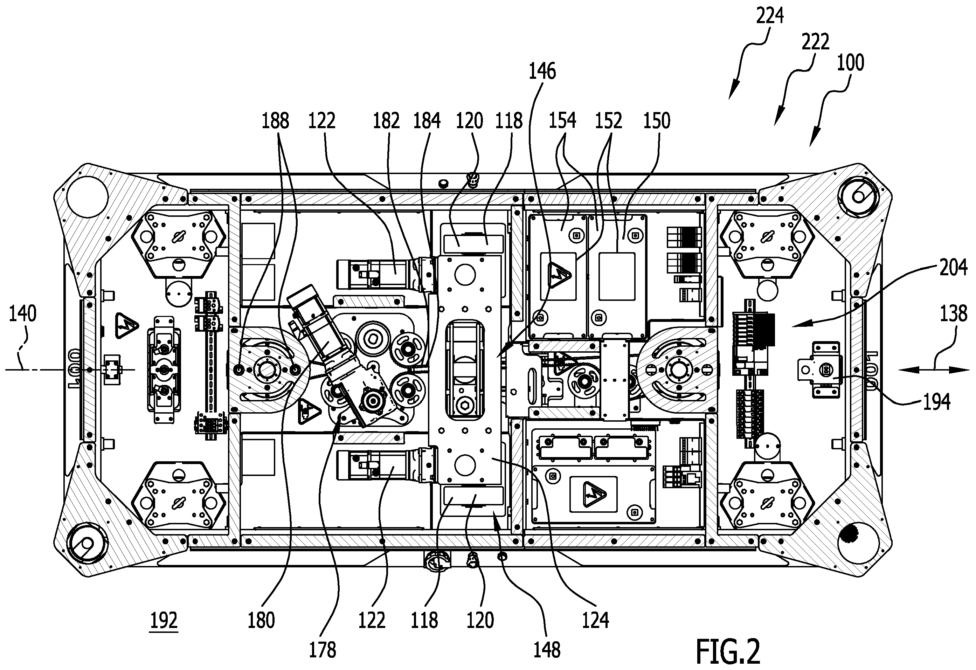

Eine beispielsweise in Fig. 2 ersichtliche Betätigungsvorrichtung 146 dient vorzugsweise dazu, eine Drehausrichtung des Lagerelements 126 um die Lagerachse 136 einzustellen. Insbesondere kann dies durch Verschieben des Federelements 134 oder durch Verschieben eines an dem Federelement 134 angreifenden Gegenstücks erfolgen.

Letztlich lässt sich mittels der Betätigungsvorrichtung 146 vorzugsweise einstellen, wie weit die Antriebselemente 118 aus dem Grundkörper 104 herausragen.

Da die Antriebsvorrichtung 110, insbesondere das Achsenelement 124 und die Antriebselemente 118, bezüglich der Längsmittelachse 140 des Fahrzeugs 100 im Wesentlichen mittig an dem Grundkörper 104 angeordnet sind, kann das Fahrzeug 100 besonders platzsparend manövriert werden. Insbesondere kann das Fahrzeug 100 auf der Stelle gewendet werden, indem die Antriebselemente 118 mittels des jeweiligen Antriebsmotors 122 in unterschiedliche Drehrichtungen angetrieben werden.

Wie insbesondere Fig. 4 zu entnehmen ist, sind die Antriebselemente 118 mittels des Achsenelements 124 starr miteinander verbunden, so dass eine hierdurch gebildete Antriebsachse 148 im Wesentlichen eine Starrachse ist.

Die Antriebsmotoren 122 des Fahrzeugs 100 werden vorzugsweise von einem Energiespeicher 150 des Fahrzeugs 100 mit elektrischer Energie versorgt.

Der Energiespeicher 150 umfasst insbesondere mehrere Energiespeichereinheiten 152, beispielsweise mehrere Superkondensatoren 154.

Der Energiespeicher 150 ist mittels einer Ladevorrichtung 156 aufladbar.

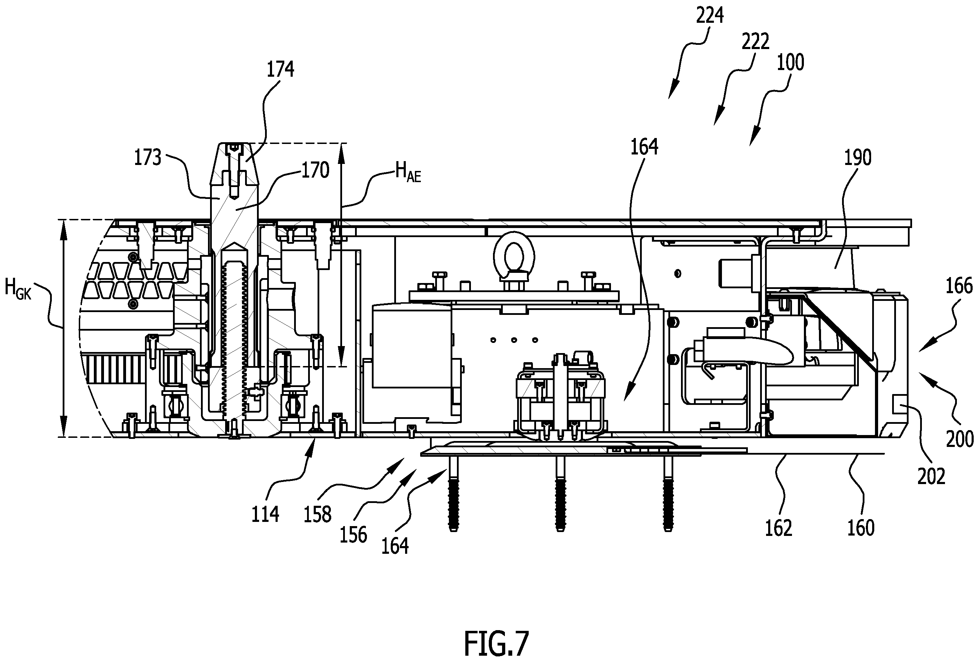

Die Ladevorrichtung 156 umfasst insbesondere einen Ladebereich 158, welcher beispielsweise auf einem befahrbaren Untergrund 160, insbesondere einem Hallenboden 162, angeordnet ist (siehe insbesondere Fig. 4 und 7). Der Ladebereich 158 umfasst insbesondere eine Ladeanschlussstelle 164, welche beispielsweise auf dem befahrbaren Untergrund 160 befestigt, beispielsweise festgeschraubt, ist.

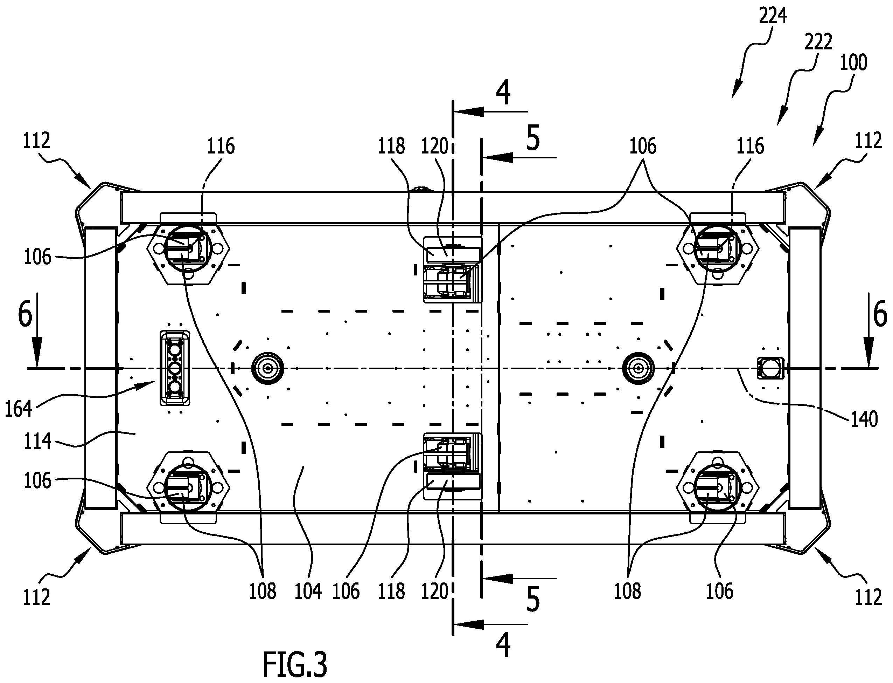

Eine mit der Ladeanschlussstelle 164 des Ladebereichs 158 koppelbare Ladeanschlussstelle 164 des Fahrzeugs 100 ist vorzugsweise an dem Fahrzeug angeordnet, insbesondere an der Unterseite 114 des Fahrzeugs 100 (siehe beispielsweise Fig. 3).

Die Ladeanschlussstellen 164 können beispielsweise eine Schleifkontaktierung aufweisen oder bilden. Auch andere mechanische oder nicht berührende Übertragungsvarianten sind denkbar. Beispielsweise kann auch eine induktive Energieübertragung vorgesehen sein.

In einer (nicht dargestellten) alternativen Ausführungsform des Fahrzeugs 100 können eine oder mehrere zusätzliche Ladeanschlussstellen 164 beispielsweise in einer Seitenwandung 166 des Fahrzeugs 100, insbesondere des Grundkörpers 104, angeordnet und/oder ausgebildet sein. Beispielsweise können herkömmliche Steckverbindungen zum Anschließen eines Ladekabels vorgesehen sein.

Ferner kann alternativ oder ergänzend an einem oder mehreren (noch zu beschreibenden) Aufnahmeelementen eine Ladeanschlussstelle 164 des Fahrzeugs 100 vorgesehen sein.

Wie insbesondere den Fig. 1, 2, 7 und 8 zu entnehmen ist, umfasst das Fahrzeug 100 eine Aufnahmevorrichtung 168, mittels welcher ein oder mehrere Gegenstände 102 aufnehmbar sind.

Insbesondere umfasst die Aufnahmevorrichtung 168 ein oder mehrere, beispielsweise zwei, Aufnahmeelemente 170, welche an einer Oberseite 172 des Grundkörpers 104 des Fahrzeugs 100 aus demselben herausragen.

Die Aufnahmeelemente 170 sind insbesondere stabförmig oder pinartig ausgebildet.

Vorzugsweise sind die Aufnahmeelemente 170 zumindest abschnittsweise und/oder zumindest näherungsweise zylinderförmig, beispielsweise kreiszylinderförmig, ausgebildet.

Die Aufnahmeelemente 170 weisen vorzugsweise eine Höhe H_{AE} auf, welche mindestens ungefähr einer Höhe H_{GK} des Grundkörpers 104 des Fahrzeugs 100 entspricht.

Jedes Aufnahmeelement 170 umfasst vorzugsweise einen Schaftabschnitt 173, an welchen sich ein Aufnahmeabschnitt 174 anschließt.

Der Aufnahmeabschnitt 174 verjüngt sich vorzugsweise entgegen einer Schwerkraftrichtung g, sofern das Fahrzeug 100 auf einer horizontalen Ebene steht und die Oberseite 172 des Grundkörpers 104 nach oben ausgerichtet ist.

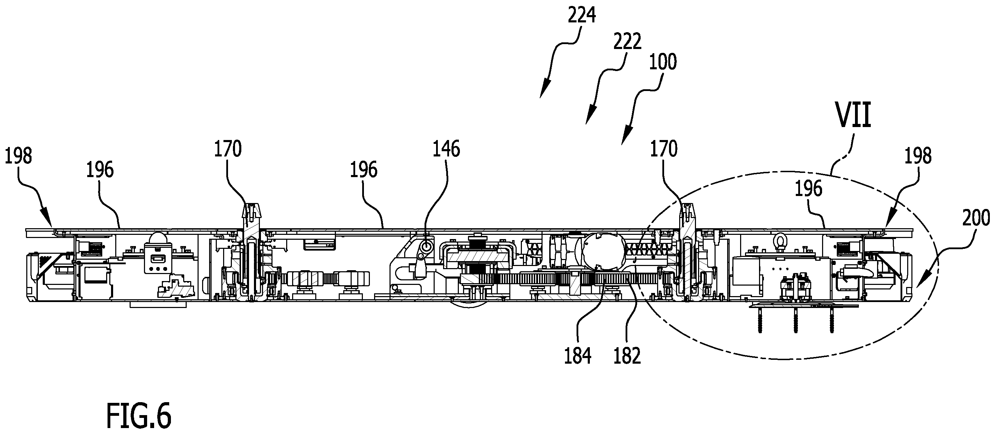

Wie insbesondere den Fig. 4 und 6 zu entnehmen ist, sind die Aufnahmeelemente 170 so angeordnet, dass deren Mittelachsen in einer vertikalen Längsmittelebene 176 des Fahrzeugs 100 liegen.

Die Aufnahmeelemente 170 sind insbesondere mittels einer Hubantriebsvorrichtung 178 bewegbar, insbesondere nach oben aus dem Grundkörper 104 ausfahrbar und zumindest teilweise wieder einfahrbar.

Die Hubantriebsvorrichtung 178 umfasst hierfür insbesondere einen Hubantriebsmotor 180, welcher beispielsweise ein Elektromotor ist und unter Verwendung von Energie aus dem Energiespeicher 150 antreibbar ist.

Ferner umfasst die Hubantriebsvorrichtung 178 ein Hubantriebselement 182, beispielsweise einen Hubantriebsriemen 184, mittels welchem die Aufnahmeelemente 170 miteinander und zudem mit dem Hubantriebsmotor 180 gekoppelt sind.

Die beiden Aufnahmeelemente 170 sind somit insbesondere gemeinsam mittels des Hubantriebsmotors 180 verfahrbar.

Da die Aufnahmeelemente 170 vorzugsweise längs der Längsmittelachse 140 des Fahrzeugs 100 auf einander gegenüberliegenden Seiten der Antriebsvorrichtung 110 angeordnet sind, ist es zur permanenten Kopplung der beiden Aufnahmeelemente 170 mittels des Hubantriebselements 182 vorteilhaft, wenn das Hubantriebselement 182 sich sowohl zu dem einen als auch zu dem anderen Aufnahmeelement 170 hin erstreckt.

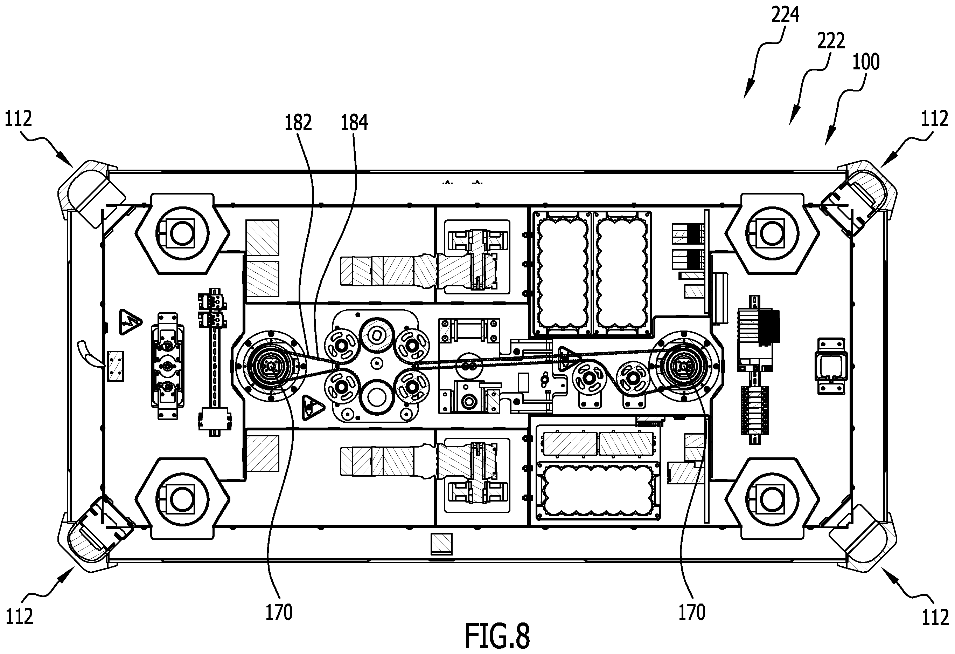

Wie insbesondere Fig. 8 zu entnehmen ist, ist das beispielsweise als Hubantriebsriemen 184 ausgebildete Hubantriebselement 182 hierfür durch die Antriebsvorrichtung 110 hindurchgeführt.

Das Hubantriebselement 182 erstreckt sich dabei insbesondere durch einen zwischen den zwei Schenkeln 130 des Lagerelements 126 gebildeten Zwischenraum 186 hindurch.

Mit Hinblick auf das Achsenelement 124 und/oder das Lagerelement 126 ist zudem aus Fig. 4 ersichtlich, dass sich das Hubantriebselement 182 vorzugsweise auch unter der Antriebsvorrichtung 110 hindurch erstreckt.

Die Aufnahmeelemente 170 sind somit besonders einfach mechanisch gekoppelt, wodurch eine zuverlässige Betätigung derselben zur Aufnahme eines oder mehrerer Gegenstände 102 möglich ist.

Das Fahrzeug 100 umfasst vorzugsweise einen oder mehrere Aufnahmesensoren 188, mittels welchen detektierbar ist, ob ein Gegenstand 102 und/oder eine noch zu beschreibende Adaptervorrichtung an dem Fahrzeug 100 angeordnet ist.

Die Aufnahmesensoren 188 sind insbesondere längs der Längsmittelachse 140 des Fahrzeugs 100 vor und hinter einem der Aufnahmeelemente 170 angeordnet (siehe insbesondere Fig. 1 und 2).

Auf das Detektionsverfahren wird weiter unten im Zusammenhang mit der Beschreibung der Adaptervorrichtung näher eingegangen.

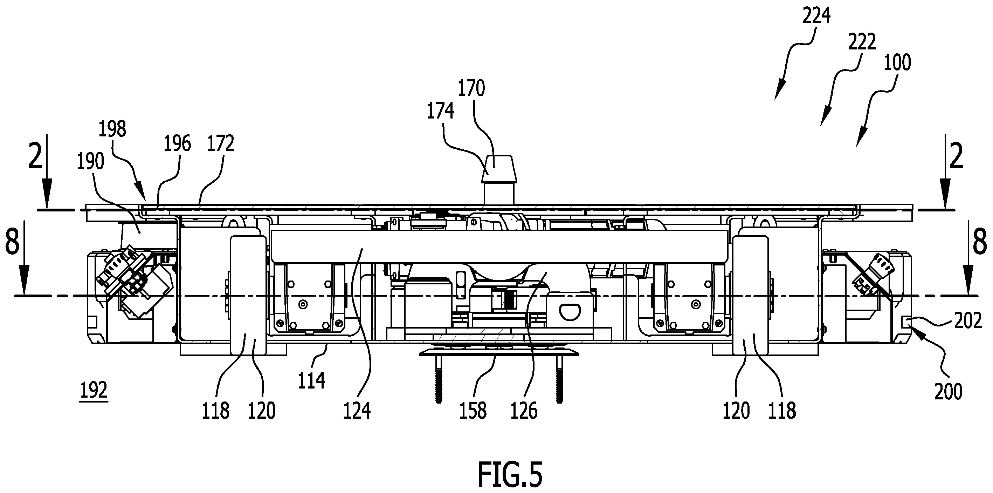

Wie insbesondere Fig. 5 zu entnehmen ist, umfasst das Fahrzeug 100 eine oder mehrere Sensorvorrichtungen 190, welche insbesondere in Eckbereichen 112 des Fahrzeugs 100, insbesondere des Grundkörpers 104, angeordnet sind.

Insbesondere sind an zwei diagonal einander gegenüberliegenden Eckbereichen 112 jeweils genau eine Sensorvorrichtung 190 vorgesehen.

Mittels der Sensorvorrichtungen 190 kann ein Umgebungsbereich 192 des Fahrzeugs 100 überwacht werden, insbesondere um einen autonomen Fahrbetrieb des Fahrzeugs 100 zu ermöglichen.

Zudem kann beispielsweise an einer Oberseite 172 des Grundkörpers 104 ein Barcode-Leser 194 vorgesehen sein, mittels welchem beispielsweise Informationen über einen an dem Fahrzeug 100 angeordneten oder anzuordnenden Gegenstand 102 erfassbar sind, insbesondere durch Scannen eines beispielsweise an dem Gegenstand 102 und/oder an der Adaptervorrichtung angeordneten Barcodes.

Der Grundkörper 104 ist an seiner Oberseite 172 vorzugsweise mit einer Abdeckung 196 versehen.

Die Abdeckung 196 ist insbesondere eine aufgelegte Platte, welche an einem ringförmig geschlossen umlaufenden Auflagebereich 198 aufliegt und im Wesentlichen bündig mit dem Auflagebereich 198 abschließt.

Die Abdeckung 196 ist hierdurch vorzugsweise auch ohne zusätzliche Befestigungselemente an dem Grundkörper 104 festgelegt, insbesondere ohne ein werkzeugloses Abheben der Abdeckung 196 für Unbefugte zu ermöglichen.

Die Abdeckung 196 ist vorzugsweise transparent, beispielsweise getönt transparent.

Innerhalb des Grundkörpers 104 angeordnete Komponenten des Fahrzeugs 100 sind somit vorzugsweise durch die Abdeckung 196 hindurch erkennbar.

Durch die transparente Ausgestaltung der Abdeckung 196 kann insbesondere eine abschreckende, hemmende Wirkung erzielt werden, um Personen von einem Betreten der Oberseite 172 des Grundkörpers 104 abzuhalten. Hierdurch kann beispielsweise die Sicherheit im Betrieb des Fahrzeugs 100 optimiert werden.

Das Fahrzeug 100 umfasst ferner vorzugsweise noch eine Warnvorrichtung 200, mittels welcher im Falle eines mittels der Sensorvorrichtung 190 erfassten störenden Gegenstands, beispielsweise einer in einem Fahrweg befindlichen Person, eine Warnung abgegeben werden kann.

Die Warnvorrichtung 200 ist beispielsweise eine akustische Warnvorrichtung und/oder eine optische Warnvorrichtung, mittels welcher entsprechend ein akustisches Warnsignal, beispielsweise ein Warnton oder eine Warnnachricht, und/oder ein optisches Warnsignal, beispielsweise ein blinkendes Licht, erzeugt und an die Umgebung abgegeben werden kann.

Beispielsweise kann zur akustischen Warnung mittels eines oder mehrerer Anzeigenelemente 202 des Fahrzeugs 100 ein blinkendes Warnsignal erzeugt werden.

Das Fahrzeug 100, insbesondere einzelne, mehrere oder sämtliche der vorstehend genannten Komponenten, sind vorzugsweise mittels einer Steuervorrichtung 204 des Fahrzeugs 100 steuerbar.

Die Steuervorrichtung 204 kann dabei insbesondere vollständig autonom agieren oder aber mit einer übergeordneten Steueranlage kommunizieren.

Gegenstände 102 können beispielsweise unmittelbar auf dem Fahrzeug 100, beispielsweise an den Aufnahmeelementen 170, angeordnet werden.

Insbesondere zur Anordnung von großen und/oder schweren Gegenständen 102, beispielsweise Fahrzeugkarosserien 206, kann hingegen die Verwendung einer Adaptervorrichtung 208 vorteilhaft sein.

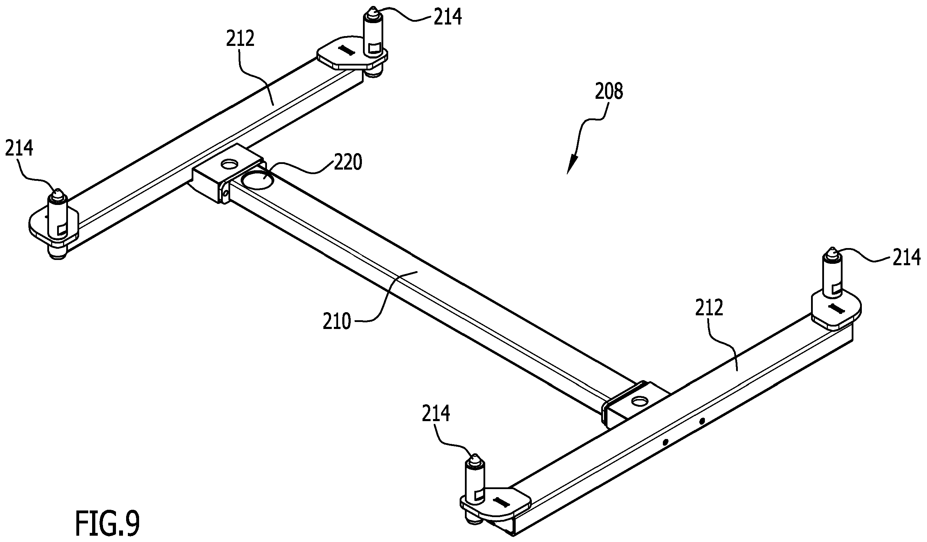

Eine Adaptervorrichtung 208 ist beispielhaft in den Fig. 9 bis 11 dargestellt.

Die Adaptervorrichtung 208 umfasst insbesondere ein Zentralelement 210, welches zwei oder mehr als zwei Adapterelemente 212 miteinander verbindet.

Die Adapterelemente 212 sind an den zu fördernden Gegenstand 102 angepasst. Beispielsweise weist jedes Adapterelement 212 jeweils einen, zwei oder mehr als zwei Aufnahmepins 214 auf, welche beispielsweise entgegen der Schwerkraftrichtung g nach oben ragen und zur Aufnahme eines beispielsweise als Fahrzeugkarosserie 206 ausgebildeten Gegenstands 102 an dessen Unterseite angreifen.

Die Adapterelemente 212 sind hinsichtlich Geometrie, Größe, Anzahl und/oder Ausgestaltung der Aufnahmepins 214 an die zu fördernden Gegenstände 102 angepasst.

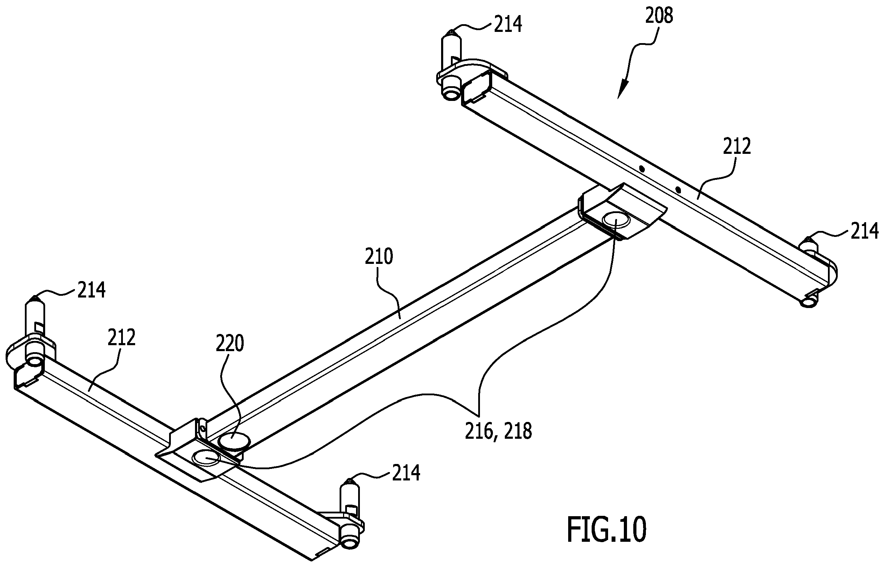

Wie insbesondere Fig. 10 zu entnehmen ist, ist die Adaptervorrichtung 208 mit zwei Angriffsbereichen 216, beispielsweise Einführöffnungen 218, versehen, an welchen die Aufnahmeelemente 170, insbesondere die Aufnahmeabschnitte 174 der Aufnahmeelemente 170, angreifen können.

Die Einführöffnungen 218 sind insbesondere konisch verjüngend ausgebildet, um eine stabile Verbindung zwischen der Adaptervorrichtung 208 und den Aufnahmeelementen 170 herzustellen.

Bei der in den Fig. 9 bis 11 dargestellten Ausführungsform der Adaptervorrichtung 208 sind die Angriffsbereiche 216, insbesondere die Einführöffnungen 218, an den Adapterelementen 212 angeordnet. Es kann jedoch auch vorgesehen sein, dass diese an dem Zentralelement 210 vorgesehen und/oder ausgebildet sind.

Wie den Fig. 9 und 10 ferner zu entnehmen ist, umfasst die Adaptervorrichtung 208 eine Detektionshilfe 220, welche beispielsweise als Durchtrittsöffnung ausgebildet ist. Die Detektionshilfe 220 ist insbesondere bezüglich einer Längsrichtung der Adaptervorrichtung 208 vor oder hinter einem Angriffsbereich 216, insbesondere einer Einführöffnung 218, angeordnet, insbesondere in demselben Abstand, wie ein oder beide Aufnahmesensoren 188 von einem Aufnahmeelement 170 des Fahrzeugs 100 entfernt sind.

Da die Detektionshilfe 220 lediglich einfach vorhanden ist, kann mittels der Aufnahmesensoren 188 überwacht werden, ob die Adaptervorrichtung 208 in einer korrekten Drehausrichtung an dem Fahrzeug 100 angeordnet ist, da entweder die Detektionshilfe 220, d.h. im Falle einer Durchtrittsöffnung kein direkt über dem Aufnahmesensor 188 angeordnetes Objekt, oder aber das Zentralelement 210 erfassbar ist, abhängig davon, ob die Adaptervorrichtung 208 in einer gewünschten Ausrichtung an dem Fahrzeug 100 angeordnet ist oder nicht.

Mittels des weiteren, nicht der Detektionshilfe 220 zugeordneten Aufnahmesensors 188 kann vorzugsweise ein Adapterelement 212 auf dessen Vorhandensein hin überwacht werden, wodurch ermittelbar ist, ob überhaupt eine Adaptervorrichtung 208 an dem Fahrzeug 100 angeordnet ist.

Selbstverständlich sind zahlreiche weitere Detektionsvarianten denkbar, beispielsweise die Verwendung von kontaktierenden Sensoren an dem Aufnahmeelement 170, insbesondere dem Aufnahmeabschnitt 174, um einen mechanischen oder elektrischen Kontakt zur Erfassung und/oder Überwachung der Adaptervorrichtung 208 herzustellen.

Das Fahrzeug 100 ist insbesondere Bestandteil einer Fördervorrichtung 222.

Die Fördervorrichtung 222 umfasst insbesondere mehrere im Wesentlichen identisch ausgebildete Fahrzeuge 100.

Die Fördervorrichtung 222 ist beispielsweise Bestandteil einer Bearbeitungsanlage 224, insbesondere einer Anlage zur Herstellung von Kraftfahrzeugen.

Insbesondere dann, wenn die Fördervorrichtung 222 zahlreiche Fahrzeuge 100 umfasst, welche allesamt im Wesentlichen bodengebunden sind, kann es vorteilhaft sein, die Fahrzeuge 100 zumindest temporär zu stapeln.

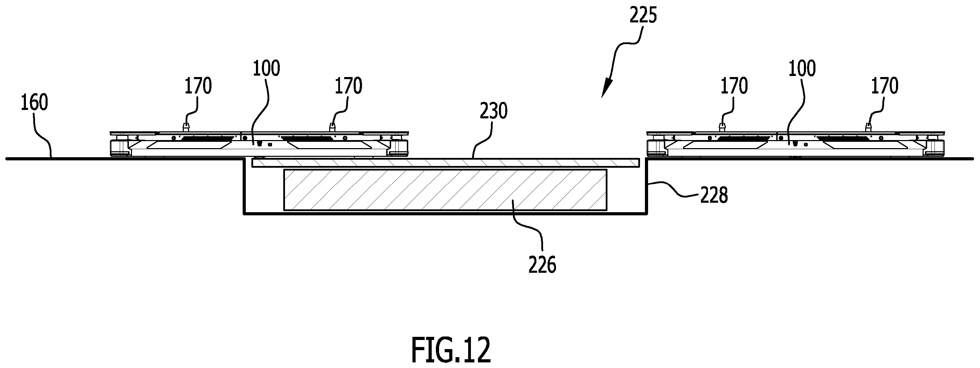

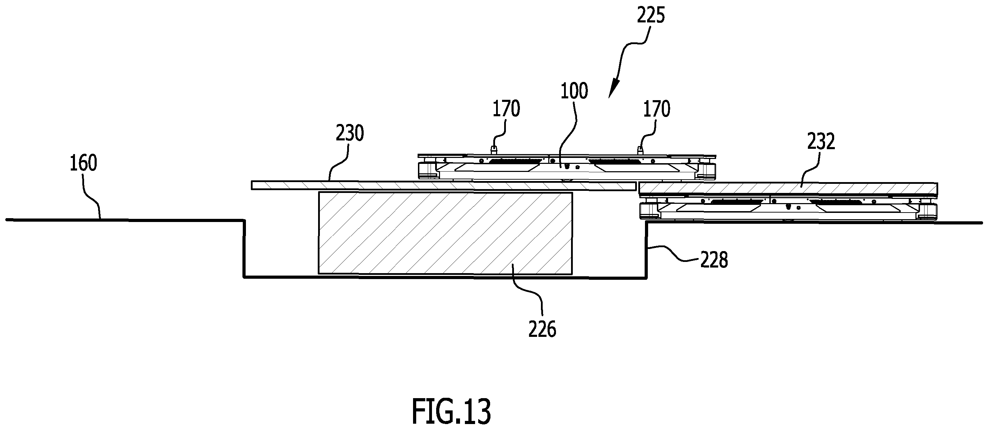

Die Fördervorrichtung 222 umfasst daher vorzugsweise eine Stapelvorrichtung 225, welche beispielhaft in den Fig. 12 und 13 dargestellt ist.

Die Stapelvorrichtung 225 umfasst insbesondere eine Hubeinheit 226, welche ein Anheben eines oder mehrerer Fahrzeuge 100 auf unterschiedliche Höhenniveaus ermöglicht.

Die Hubeinheit 226 ist hierzu beispielsweise in einer Vertiefung 228 angeordnet und umfasst beispielsweise einen Hubboden 230, welcher vorzugsweise im Wesentlichen bündig mit einem befahrbaren Untergrund 160 positionierbar ist.

Ein Fahrzeug 100 kann somit insbesondere von dem befahrbaren Untergrund 160 direkt auf den Hubboden 230 der Stapelvorrichtung 225 fahren.

Mittels der Hubeinheit 226 kann das Fahrzeug 100 dann insbesondere angehoben werden.

Ein weiteres Fahrzeug 100, welches insbesondere unmittelbar neben der Vertiefung 228 und/oder unmittelbar neben der Hubeinheit 226 angeordnet ist, bildet dann die Basis für einen Stapel aus mehreren Fahrzeugen 100.

Wie insbesondere Fig. 13 zu entnehmen ist, kann das auf den Hubboden 230 gefahrene Fahrzeug 100 nach dem Anheben desselben mittels der Hubeinheit 226 auf das daneben angeordnete Fahrzeug 100 gefahren werden und somit auf dem anderen Fahrzeug gestapelt werden.

Abhängig davon, wie weit ein oder mehrere Aufnahmeelemente 170 aus der Oberseite 172 des Grundkörpers 104 des jeweiligen Fahrzeugs 100 herausragen, können diese Aufnahmeelemente 170 einer Stapelung im Wege sein.

Es kann daher bei einer Ausgestaltung vorteilhaft sein, wenn ein oder mehrere Zwischenelemente 232 auf das die Basis des Stapels aus Fahrzeugen 100 bildende Fahrzeug 100 aufgebracht werden, um ein anschließendes Befahren mittels des weiteren Fahrzeugs 100 zu ermöglichen.

Mittels einer oder mehrerer (nicht dargestellter) Sicherungsvorrichtungen sind die aufeinandergestapelten Fahrzeuge 100 vorzugsweise miteinander verbindbar. Beispielsweise könnten die Aufnahmeelemente 170 des unteren Fahrzeugs 100 ausgefahren werden, um in hierzu korrespondierende Eingriffsbereiche an einer Unterseite 114 des oberen Fahrzeugs 100 einzugreifen und somit die Fahrzeuge 100 relativ zueinander zu fixieren.

Selbstverständlich sind mittels der Stapelvorrichtung 225 mehr als nur zwei Fahrzeuge 100 aufeinander stapelbar.

In umgekehrter Reihenfolge sind zudem mehrere aufeinandergestapelte Fahrzeuge 100 entstapelbar. Dies kann insbesondere für einen Transport der Fahrzeuge 100 von einem Herstellungsort derselben zu einem Einsatzort derselben vorteilhaft sein, um die für den Transport benötigte Transportfläche zu minimieren.

Die Fördervorrichtung 222 umfasst vorzugsweise eine oder mehrere Stationen 234, zu welchen die Gegenstände 102 mittels mehrerer Fahrzeuge 100 hin förderbar sind.

Die Stationen 234 sind insbesondere Bearbeitungsstationen 236, wenn die Fördervorrichtung 222 Bestandteil einer Bearbeitungsanlage 224 ist.

Beispielsweise sind in den Bearbeitungsstationen 236 ein oder mehrere Roboter 238 zum Behandeln einer Oberfläche der Gegenstände 102, insbesondere der Fahrzeugkarosserien 206, angeordnet.

Alternativ oder ergänzend zu Robotern 238 können die Bearbeitungsstationen 236 auch für manuelle Tätigkeiten vorgesehen sein.

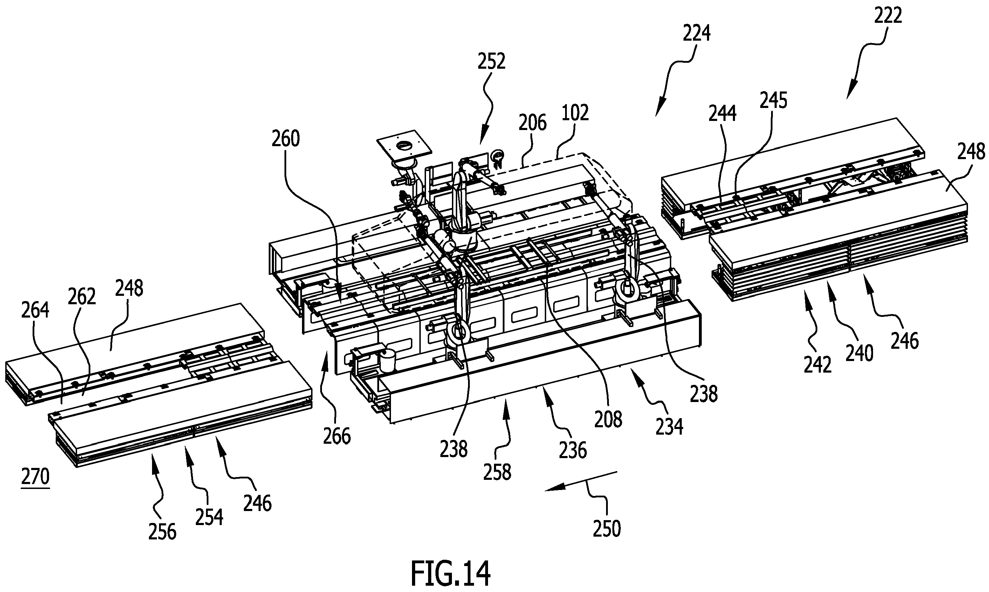

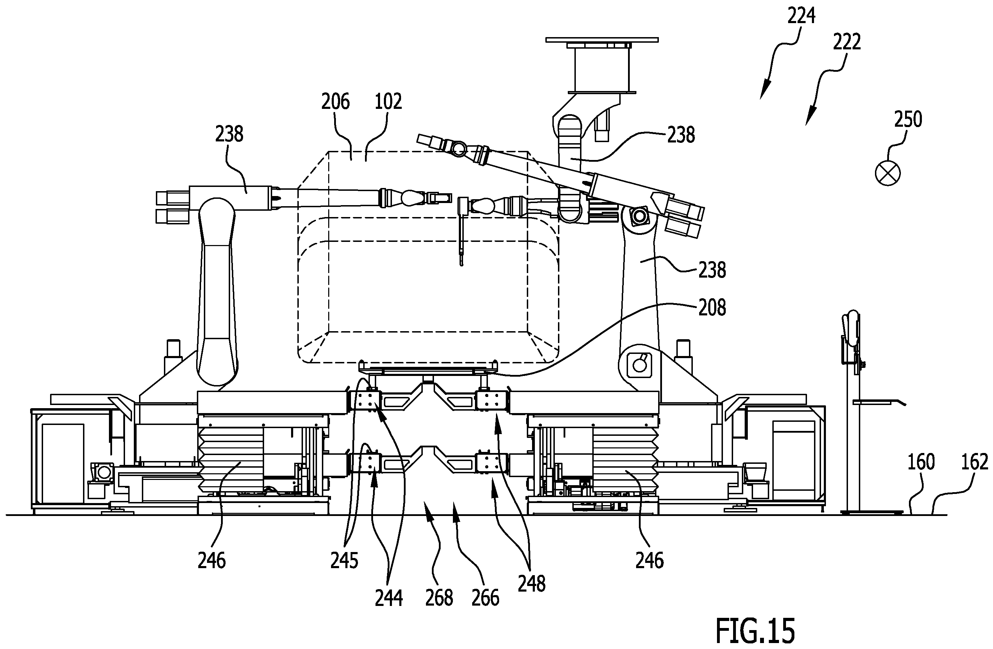

Wie insbesondere den Fig. 14 und 15 zu entnehmen ist, umfasst eine Station 234 vorzugsweise eine erste Position 240, welche insbesondere eine Abgabeposition 242 ist und der Übergabe eines Gegenstands 102 von einem Fahrzeug 100 an eine Stationsfördervorrichtung 244 dient.

Die Stationsfördervorrichtung 244 ist insbesondere eine Rollenbahn 245. Ergänzend oder alternativ hierzu können ein Kettenförderer und/oder ein Schienenförderer vorgesehen sein.

Die Station 234 umfasst an der ersten Position 240 insbesondere eine Hubvorrichtung 246, mittels welcher die Stationsfördervorrichtung 244 anhebbar und absenkbar ist, um den Gegenstand 102 von dem Fahrzeug 100 abzuheben.

Alternativ oder ergänzend hierzu kann vorgesehen sein, dass die Aufnahmeelemente 170 des Fahrzeugs 100 abgesenkt werden, wenn das Fahrzeug 100 an der ersten Position 240 angeordnet ist, um den Gegenstand 102 auf der Stationsfördervorrichtung 244 abzulegen und damit an die Stationsfördervorrichtung 244 zu übergeben.

Wie insbesondere Fig. 15 zu entnehmen ist, umfasst die Station 234 insbesondere einen oder mehrere Trennböden 248, welche oberhalb eines befahrbaren Untergrunds 160, insbesondere oberhalb eines Hallenbodens 162, angeordnet sind und unter welchen das Fahrzeug 100 hindurchfahren kann.

Der Gegenstand 102 hingegen ist oberhalb des Trennbodens 248 angeordnet.

Die Stationsfördervorrichtung 244 ist insbesondere in den Trennboden 248 integriert.

Mittels der Hubvorrichtung 246 kann somit in der ersten Position 240 insbesondere der Trennboden 248 angehoben oder abgesenkt werden, um den Gegenstand 102 von dem Fahrzeug 100 abzuheben.

Mittels der Stationsfördervorrichtung 244 ist der Gegenstand 102 insbesondere in der Förderrichtung 250 durch die Bearbeitungsstation 236 hindurchförderbar.

Insbesondere ist der Gegenstand 102 von der ersten Position 240 durch einen Bearbeitungsbereich 252 der Bearbeitungsstation 236 hindurch und bis zu einer zweiten Position 254 der Station 234 förderbar.

Die zweite Position 254 ist insbesondere eine Aufnahmeposition 256, an welcher der Gegenstand 102 von der Stationsfördervorrichtung 244 an ein Fahrzeug 100 übergebbar ist, d.h. an welcher der Gegenstand 102 von dem Fahrzeug 100 aufnehmbar ist.

Auch die zweite Position 254 ist insbesondere mit einer Hubvorrichtung 246 versehen, um den Trennboden 248, welcher auch an der zweiten Position 254 vorgesehen ist, anzuheben und abzusenken, um letztlich den Gegenstand 102 an das Fahrzeug 100 zu übergeben.

Die dreiteilige Darstellung der Station 234 in den Fig. 14 und 15 dient einer vereinfachten Darstellung der funktionell unterschiedlichen Positionen. In einer tatsächlichen Ausgestaltung der Fördervorrichtung 222 ist die Stationsfördervorrichtung 244 selbstverständlich ununterbrochen ausgebildet, um den Gegenstand 102 auch tatsächlich von der ersten Position 240 bis zur zweiten Position 254 zu fördern.

In der zwischen der ersten Position 240 und der zweiten Position 254 durch den Bearbeitungsbereich 252 gebildeten Zwischenposition 258 ist die Fahrzeugkarosserie 206 bearbeitbar, insbesondere behandelbar.

Insbesondere kann mittels einer oder mehrerer Roboter 238 und/oder mittels manueller Bearbeitung eine Oberflächenbehandlung, eine Nahtabdichtung und/oder eine Kontrolle an dem Gegenstand 102 durchgeführt werden.

Insbesondere dann, wenn in dem Bearbeitungsbereich 252 Verunreinigungen entstehen können, kann es vorteilhaft sein, wenn der Trennboden 248 zumindest im Bearbeitungsbereich 252 geschlossen ausgebildet ist. Der Trennboden 248 umfasst somit einen geschlossenen Abschnitt 260, welcher sich insbesondere über eine gesamte Länge des Bearbeitungsbereichs 252 längs der Förderrichtung 250 erstreckt.

An der ersten Position 240 und/oder an der zweiten Position 254 weist der Trennboden 248 vorzugsweise einen Durchtrittsbereich 262 auf, welcher insbesondere als Durchtrittsschlitz 264 ausgebildet ist und sich längs der Förderrichtung 250 erstreckt.

Durch diesen Durchtrittsbereich 262 können insbesondere ein oder mehrere Aufnahmeelemente 170 des Fahrzeugs 100 hindurchragen, um den Gegenstand 102 oberhalb des Trennbodens 248 zu positionieren, indem das Fahrzeug 100 unterhalb des Trennbodens 248 bewegt wird.

Insbesondere mit eingefahrenen Aufnahmeelementen 170 kann das Fahrzeug 100 auch unterhalb des geschlossenen Abschnitts 260 des Trennbodens 248 hindurchfahren, ohne eine Kollision mit dem Trennboden 248 zu riskieren.

Der Trennboden 248 weist hierfür insbesondere eine im Querschnitt beispielsweise dreiecksförmige Überhöhung auf, welche sich längs der Förderrichtung 250 erstreckt und somit einen Freiraum für die Aufnahmeelemente 170 unterhalb des Trennbodens 248 schafft.

Der Bereich unterhalb des Trennbodens 248 ist insbesondere ein Fahrraum 266, welcher nicht für Personen zugänglich ist.

Von den Fahrzeugen 100 geht somit in diesem Fahrraum 266 keine Gefahr aus, so dass die Fahrzeuge 100 beispielsweise mit erhöhter Geschwindigkeit verfahrbar sind.

Der Bereich unterhalb des Trennbodens 248 kann somit insbesondere ein Expressbereich 268 sein, in welchem die Fahrzeuge 100 in einem Expressmodus betreibbar sind.

Außerhalb der Station 234 und insbesondere dann, wenn sich Personen in der Umgebung eines Fahrzeugs 100 ohne räumliche Trennung von demselben aufhalten, ist dieses Fahrzeug 100 vorzugsweise in einem Sicherheitsmodus betreibbar. Der Bereich außerhalb des Expressbereichs 268 ist somit insbesondere ein Sicherheitsbereich 270.

Wie den Fig. 14 und 15 ferner zu entnehmen ist, kann die Adaptervorrichtung 208 auch als Skid ausgebildet sein, insbesondere um eine einfache Förderung des Gegenstands 102 auf einer als Rollenbahn 245 ausgebildeten Stationsfördervorrichtung 244 zu ermöglichen.

Eine oder mehrere Angriffsbereiche 216, insbesondere Einführöffnung 218, sind dann vorzugsweise an einer Querstrebe oder an einem an Querstreben angeordneten Zentralelement der als Skid ausgebildeten Adaptervorrichtung 208 angeordnet und/oder ausgebildet.

Im Sinne einer effizienten Nutzung der Fahrzeuge 100 in der Fördervorrichtung 222 kann es vorteilhaft sein, wenn das Fahrzeug 100 zur Förderung eines Gegenstands 102 nicht permanent demselben Gegenstand 102 zugeordnet ist.

Beispielsweise kann eine Optimierung der Fahrzeugnutzung dadurch erfolgen, dass ein zu fördernder Gegenstand 102 mittels eines Fahrzeugs 100 an der ersten Position 240 einer Station 234 an die Stationsfördervorrichtung 244 übergeben wird. Ein bereits zuvor an die Stationsfördervorrichtung 244 übergebener Gegenstand 102, welcher zwischenzeitlich in der Bearbeitungsstation 236 bearbeitet und mittels der Stationsfördervorrichtung 244 zur zweiten Position 254 gefördert wurde, kann dann mittels dieses Fahrzeugs 100 aufgenommen und weitertransportiert werden.

Das Fahrzeug 100 überspringt somit vorzugsweise mindestens einen Takt bei der Förderung der Gegenstände 102 durch die Station 234.

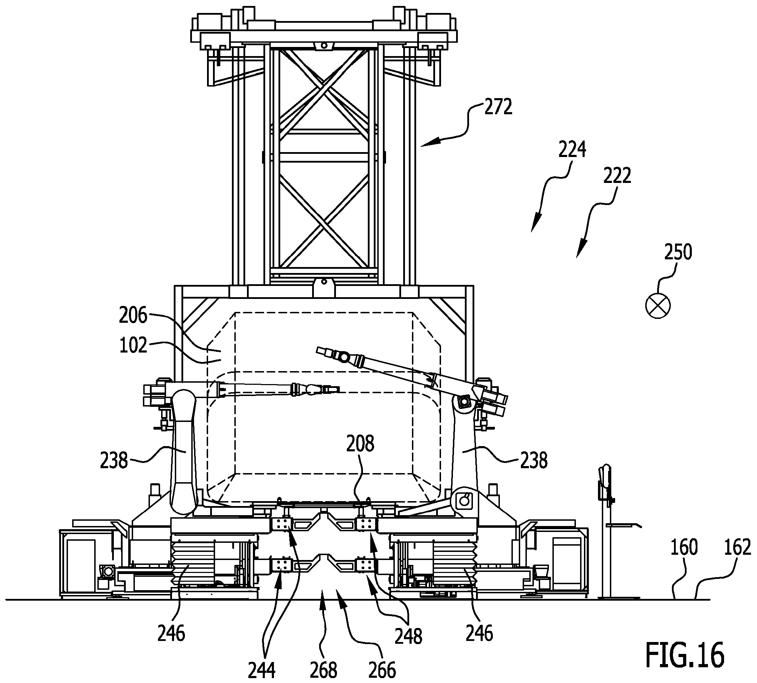

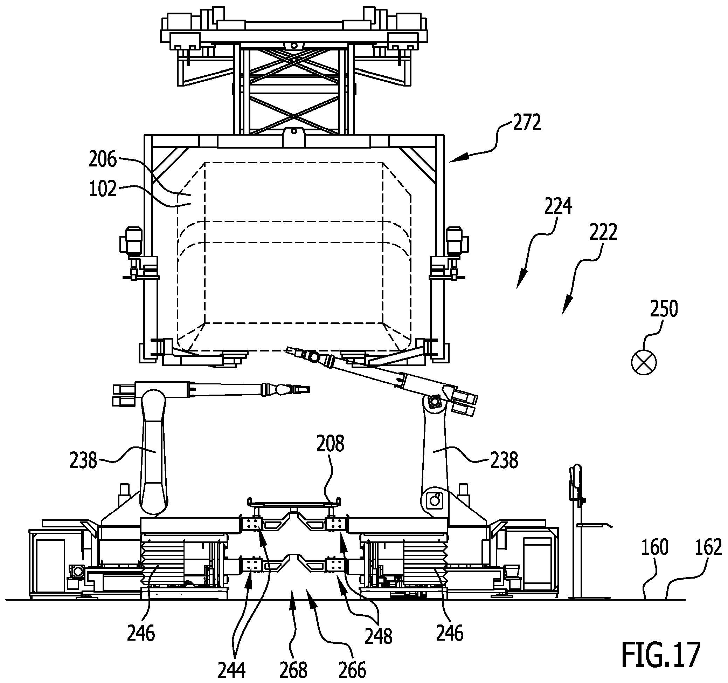

Eine in den Fig. 16 und 17 dargestellte alternative Ausführungsform einer Station 234 unterscheidet sich von der in den Fig. 14 und 15 dargestellten Ausführungsform im Wesentlichen dadurch, dass die Gegenstände 102 im Bearbeitungsbereich 252 nicht auf der als Rollenbahn 245 ausgebildeten Stationsfördervorrichtung 244 verbleiben. Vielmehr ist eine Hubanlage 272 zum Anheben der Gegenstände 102 von der Stationsfördervorrichtung 244 und/oder von der Adaptervorrichtung 208 vorgesehen.

Die Hubanlage 272 ist insbesondere ein Hängeförderer und/oder eine Elektrohängebahn oder ermöglicht zumindest ein in horizontaler Richtung stationäres Anheben des Gegenstands 102.

Mittels der Hubanlage 272 kann insbesondere eine Unterseite des Gegenstands 102 für Roboter 238 und/oder für eine manuelle Bearbeitung zugänglich gemacht werden, beispielsweise um einen Unterbodenschutz oder eine Nahtabdichtung an einer Unterseite des Gegenstands 102, insbesondere einer Fahrzeugkarosserie 206, zu applizieren.

Im Übrigen stimmt die in den Fig. 16 und 17 dargestellte Ausführungsform der Station 234 hinsichtlich Aufbau und Funktion mit der in den Fig. 14 und 15 dargestellten Ausführungsform überein, so dass auf deren vorstehende Beschreibung insoweit Bezug genommen wird.

Bei der Fördervorrichtung 222 können eine oder mehrere Stationen 234 gemäß der in den Fig. 14 und 15 dargestellten Ausführungsform ebenso wie gemäß der in den Fig. 16 und 17 dargestellten Ausführungsform vorgesehen sein, insbesondere um unterschiedliche Bearbeitungsschritte an dem Gegenstand 102 durchzuführen.

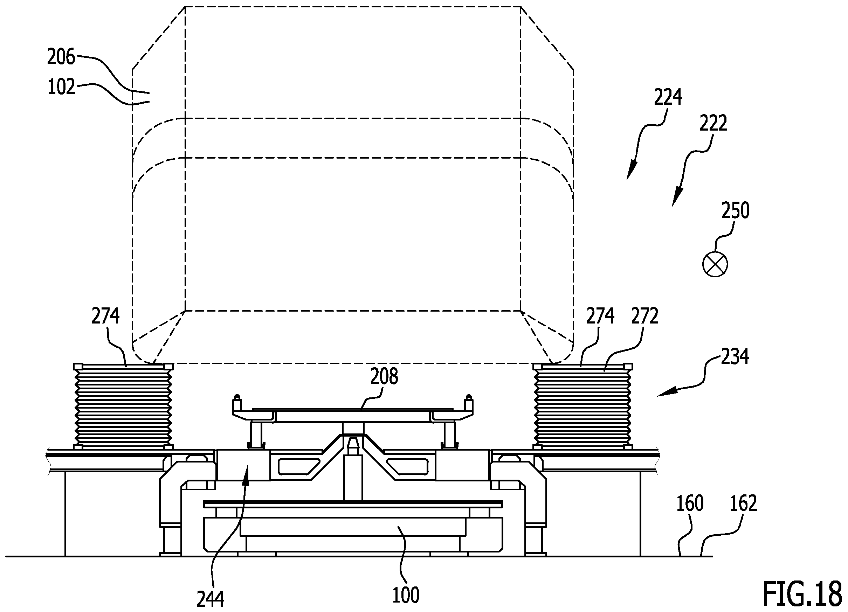

Eine in Fig. 18 dargestellte weitere alternative Ausführungsform einer Station 234 unterscheidet sich von der in den Fig. 16 und 17 dargestellten Ausführungsform im Wesentlichen dadurch, dass die Hubanlage 272 als zu beiden Seiten der Stationsfördervorrichtung 244 angeordnete Hubtische 274 ausgebildet ist.

Auch hierdurch können Gegenstände 102 auf unterschiedliche Höhenniveaus gebracht werden, um unterschiedliche Bearbeitungsschritte an dem Gegenstand 102 durchzuführen.

Im Übrigen stimmt die in Fig. 18 dargestellte alternative Ausführungsform der Station 234 hinsichtlich Aufbau und Funktion mit der in den Fig. 16 und 17 dargestellten Ausführungsform überein, so dass auf deren vorstehende Beschreibung insoweit Bezug genommen wird.

Auch die in Fig. 18 dargestellte Ausführungsform einer Station 234 kann einfach oder mehrfach bei einer Fördervorrichtung 222 vorgesehen sein, insbesondere alternativ oder ergänzend zu einer oder mehreren der Ausführungsformen gemäß den Fig. 14 und 15 und/oder alternativ oder ergänzend zu einer oder mehreren der Ausführungsformen gemäß den Fig. 16 und 17.

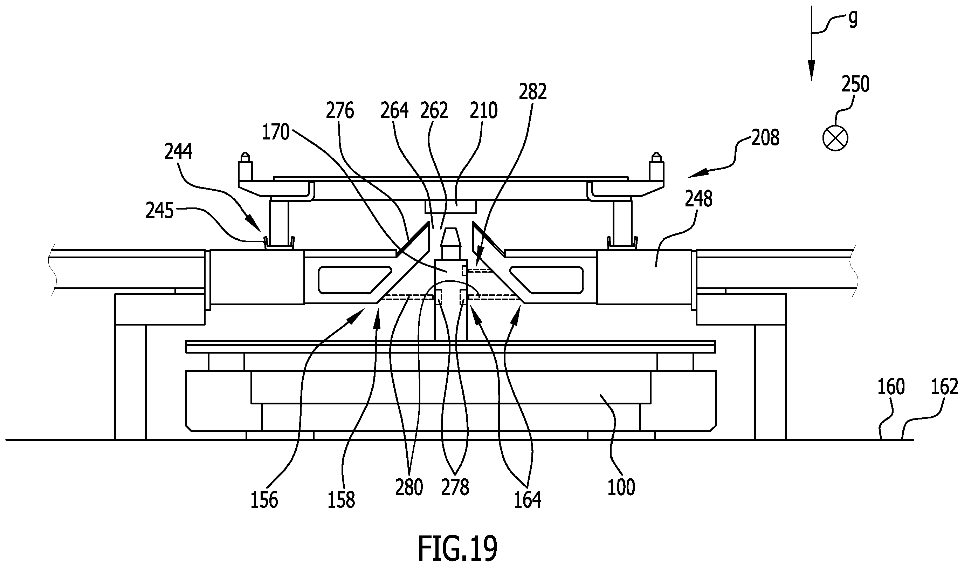

In den Fig. 19 bis 23 sind unterschiedliche Varianten des Trennbodens 248 und des Durchtrittsbereichs 262 vergrößert dargestellt, um dessen Funktion und Varianten hiervon zu verdeutlichen.

Jede der in den Fig. 19 bis 23 dargestellten Ausführungsformen des Trennbodens 248 und/oder des Durchtrittsbereichs 262 kann grundsätzlich bei jeder denkbaren Station 234, insbesondere jeder der vorstehend beschriebenen und/oder in den Fig. 14 bis 18 dargestellten Ausführungsformen, vorgesehen sein.

Eine in Fig. 19 dargestellte Ausgestaltung des Trennbodens 148 entspricht im Wesentlichen der in den Fig. 14 bis 18 dargestellten Ausführungsform, wobei der Durchtrittsbereich 262 vollständig geöffnet ist und insbesondere kein geschlossener Abschnitt 260 vorgesehen ist.

Zur Minimierung einer Verunreinigung des Fahrzeugs 100 unterhalb des Trennbodens 248 kann beispielsweise vorgesehen sein, dass das Zentralelement 210 der Adaptervorrichtung 208 eine quer zur Förderrichtung 250 genommene Breite aufweist, welche größer ist als eine Breite des Durchtrittsschlitzes 264.

Mittels des Zentralelements 210 kann der Durchtrittsschlitz 264 somit vorzugsweise zumindest teilweise abgedeckt werden.

Die beiden den Durchtrittsbereich 262 begrenzenden Bereiche des Trennbodens 248 sind nachfolgend als Durchtrittsrandbereiche 276 bezeichnet und bei der in Fig. 19 dargestellten Ausführungsform beispielsweise schräg zur Schwerkraftrichtung g ausgerichtet. Die Durchtrittsrandbereiche 276 erstrecken sich insbesondere ausgehend von dem Trennboden 248 schräg nach oben. Hierdurch kann insbesondere ein unerwünschtes Hineinfallen oder Hineinrollen von Gegenständen in den Durchtrittsschlitz 264 vermieden werden. Zudem kann durch die geeignete Ausgestaltung der Durchtrittsrandbereiche 276 eine von dem Durchtrittsschlitz 264 potentiell ausgehende Gefahr für Personen minimiert werden.

Insbesondere sind die Durchtrittsrandbereiche 276 Bestandteil der im Trennboden 248 ausgebildeten Überhöhung, um einen Bewegungsraum für die Aufnahmeelemente 170 bereitzustellen.

Wie Fig. 19 in gestrichelten Linien zu entnehmen ist, kann bei einer Ausgestaltung des Fahrzeugs 100 und/oder der Fördervorrichtung 222 eine Ladevorrichtung 156 zum Aufladen eines Energiespeichers 150 des Fahrzeugs 100 alternativ oder ergänzend zu den bereits beschriebenen und/oder dargestellten Ausführungsformen auch so ausgebildet sein, dass im Bereich eines oder mehrerer Aufnahmeelemente 170 eine Energieübertragung von einem Ladebereich 158 auf das Fahrzeug 100 erfolgt.

Ein Aufnahmeelement 170 ist hierzu beispielsweise mit einem oder mehreren Kontaktbereichen 278 versehen, welche eine Ladeanschlussstelle 164 des Fahrzeugs 100 bilden.

Eine hiermit in Eingriff zu bringende Ladeanschlussstelle 164 ist beispielsweise durch ein oder mehrere Kontaktelemente 280 gebildet, welche insbesondere an dem Trennboden 248 angeordnet sind und in Richtung des Aufnahmeelements 170, insbesondere zu den Kontaktbereichen 278 hin, ragen.

Die Kontaktelemente 280 bilden insbesondere Schleifkontakte, welche eine berührende Energieübertragung von dem Ladebereich 158 auf das Fahrzeug 100 ermöglichen.

Insbesondere zur optimierten Steuerung des Ladevorgangs kann ferner eine Steuerkontaktierung 282 vorgesehen sein. Alternativ oder ergänzend hierzu kann die zur Optimierung des Ladevorgangs erforderliche Informationsübertragung kabellos, beispielsweise über WLAN, erfolgen.

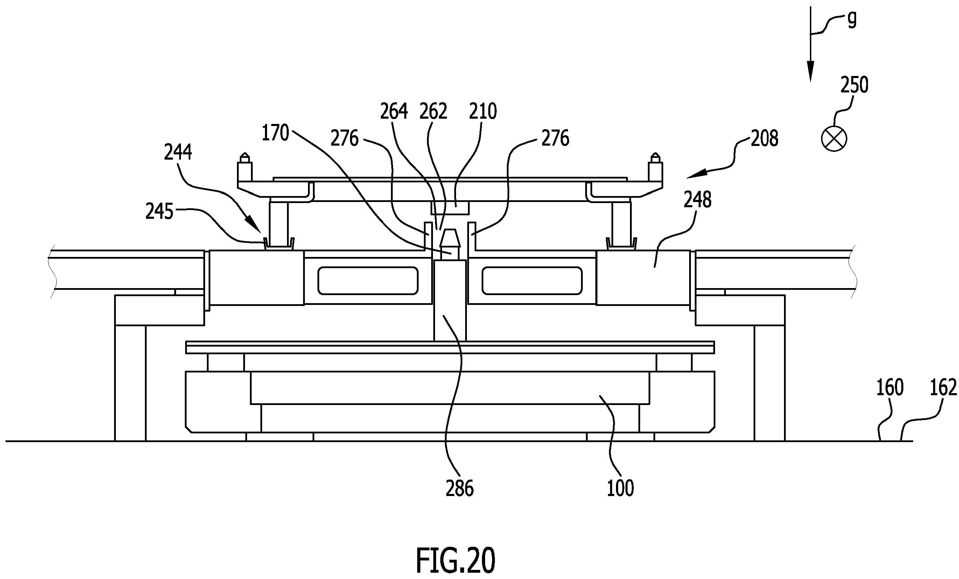

Eine in Fig. 20 dargestellte weitere Ausführungsform des Trennbodens 248 unterscheidet sich von der in Fig. 19 dargestellten Ausführungsform im Wesentlichen dadurch, dass die Durchtrittsrandbereiche 276 im Wesentlichen parallel zueinander und/oder im Wesentlichen senkrecht von dem Trennboden 248 nach oben ragen und somit beispielsweise im Wesentlichen L-förmig ausgebildet sind.

Im Übrigen stimmt die in Fig. 20 dargestellte Ausführungsform des Trennbodens 248 hinsichtlich Aufbau und Funktion mit der in Fig. 19 dargestellten Ausführungsform überein, so dass auf deren vorstehende Beschreibung insoweit Bezug genommen wird.

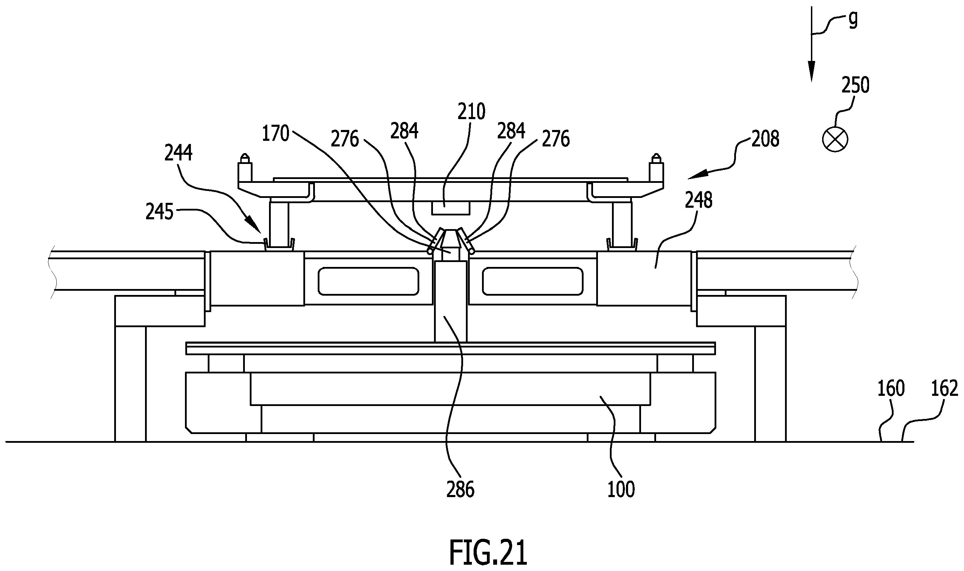

Eine in Fig. 21 dargestellte Ausführungsform eines Trennbodens 248 unterscheidet sich von der in Fig. 20 dargestellten Ausführungsform im Wesentlichen dadurch, dass die Durchtrittsrandbereiche 276 schwenkbar an dem Trennboden 248 angeordnet und/oder ausgebildet sind.

Der Durchtrittsrandbereich 276 umfasst somit insbesondere ein oder mehrere Schließelemente 284, welche vorzugsweise schwenkbar an dem Trennboden 248 angeordnet sind und ein Verschließen des Durchtrittsbereichs 262, insbesondere des Durchtrittsschlitzes 264, ermöglichen.

Die Schließelemente 284 sind vorzugsweise federbelastet und/oder so angeordnet und/oder ausgebildet, dass diese aufgrund der Schwerkraft ohne eine Betätigung derselben automatisch in eine beispielsweise im Wesentlichen horizontale Schließstellung gelangen.

Wenn nun ein Fahrzeug 100 unter dem Trennboden 248 hindurchgeführt wird, kann abhängig von einer Ausfahrposition der Aufnahmeelemente 170 eine Öffnung der Schließelemente 248 dadurch erfolgen, dass diese mittels der Aufnahmeelemente 170 aufgedrückt, insbesondere nach oben angehoben, werden. Sobald das Aufnahmeelement 170 oder die Aufnahmeelemente 170 an den einzelnen Schließelementen 248 vorbeibewegt wurden, gelangen diese vorzugsweise automatisch zurück in die Schließstellung.

Vorzugsweise sind längs der Förderrichtung 250 zahlreiche Schließelemente 248 hintereinander und unabhängig voneinander betätigbar angeordnet.

Es sind somit vorzugsweise stets lediglich diejenigen Schließelemente 248 in der Offenstellung, an welchen aktuell auch ein Aufnahmeelement 170 angreift und/oder angeordnet ist.

Im Übrigen stimmt die in Fig. 21 dargestellte Ausführungsform des Trennbodens 248 hinsichtlich Aufbau und Funktion mit der in Fig. 20 dargestellten Ausführungsform überein, so dass auf deren vorstehende Beschreibung insoweit Bezug genommen wird.

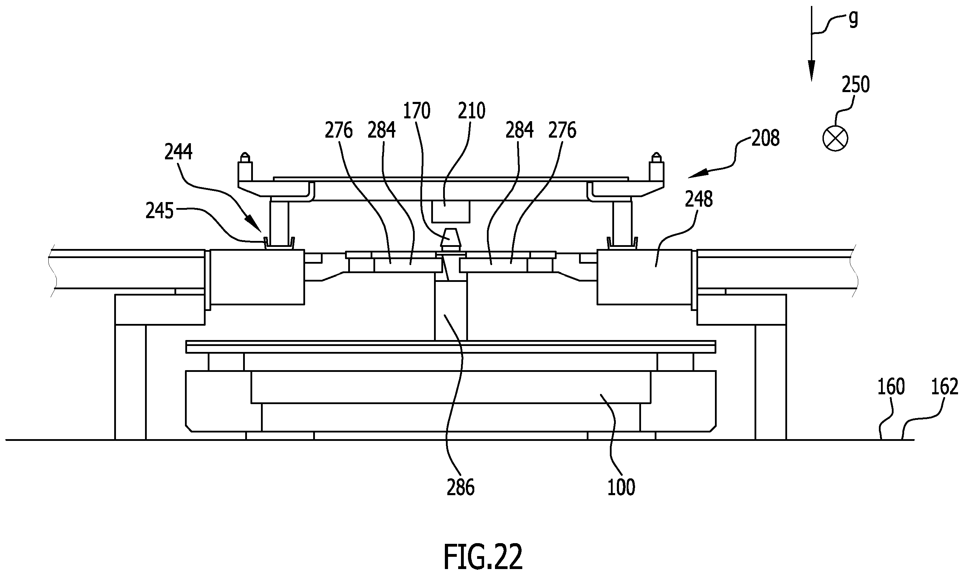

Eine in Fig. 22 dargestellte alternative Ausführungsform eines Trennbodens 248 unterscheidet sich von der in Fig. 21 dargestellten Ausführungsform im Wesentlichen dadurch, dass die Schließelemente 248 beispielsweise als Lamellen ausgebildet sind und insbesondere in einer horizontalen Richtung auslenkbar sind, um temporär den Durchtrittsbereich 262 zur Hindurchführung eines oder mehrerer Aufnahmeelemente 170 freizugeben.

Die Schließelemente 248 können dabei - ebenso wie grundsätzlich auch die Schließelemente 248 gemäß Fig. 21 - ein oder mehrere Kontaktelemente 280 bilden oder umfassen, so dass mittels der Schließelemente 248 Energie zum Laden des Energiespeichers 150 des Fahrzeugs 100 übertragbar ist.

Abhängig von der Positionierung des Aufnahmeelements 170 und/oder abhängig von einer Ausgestaltung des Aufnahmeelements 170 können sich unterschiedliche Bereiche zum Angreifen der Schließelemente 248 und/oder der Kontaktelemente 280 anbieten.

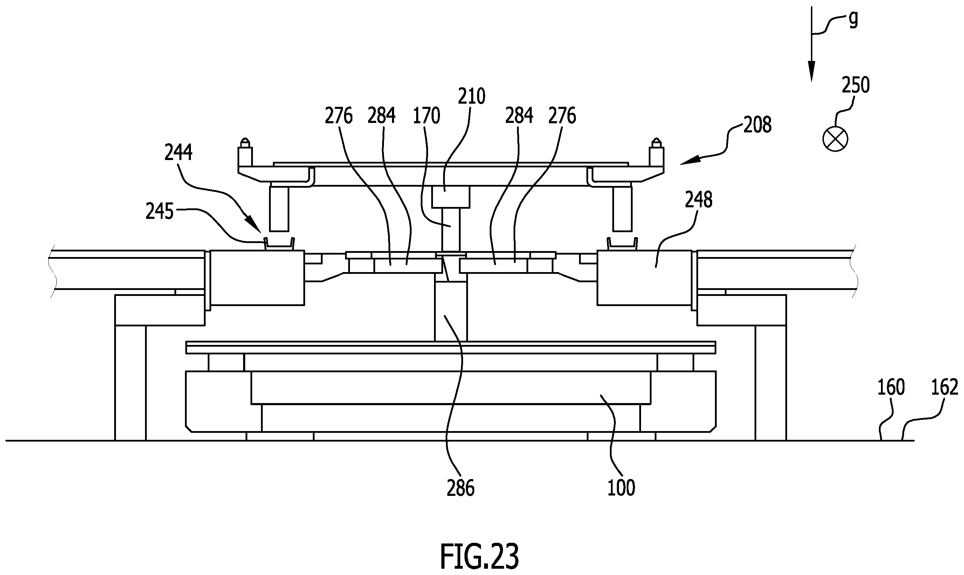

Wie insbesondere den Fig. 22 und 23 zu entnehmen ist, kann es vorgesehen sein, dass die Aufnahmeelemente 170 jeweils einen bereits über den Grundkörper 104 des Fahrzeugs 100 hervorragenden Aufnahmezylinder 286 umfassen und/oder darin angeordnet sind. Bewegliche Teile der Aufnahmeelemente 170 oder die gesamten Aufnahmeelemente 170 sind insbesondere relativ zu dem Grundkörper 104 und/oder dem jeweiligen Aufnahmezylinder 286 bewegbar, insbesondere aus demselben herausfahrbar und/oder in denselben hineinfahrbar.

Der Aufnahmezylinder 286 kann beispielsweise so ausgebildet sein, dass dieser stets durch den Durchtrittsbereich 262, insbesondere den Durchtrittsschlitz 264, hindurchragt. Durch unterschiedliche Positionierung der Aufnahmeelemente 170, insbesondere durch unterschiedlich weites Herausfahren von beweglichen Teilen aus dem Aufnahmezylinder 286 kann dann beispielsweise eine Adaptervorrichtung 208 samt eines gegebenenfalls daran angeordneten Gegenstands 102 abgesenkt (siehe Fig. 22) oder angehoben (siehe Fig. 23) werden.

Im Übrigen stimmt die in den Fig. 22 und 23 dargestellte Ausführungsform des Trennbodens 248 hinsichtlich Aufbau und Funktion mit der in Fig. 21 dargestellten Ausführungsform überein, so dass auf deren vorstehende Beschreibung insoweit Bezug genommen wird.

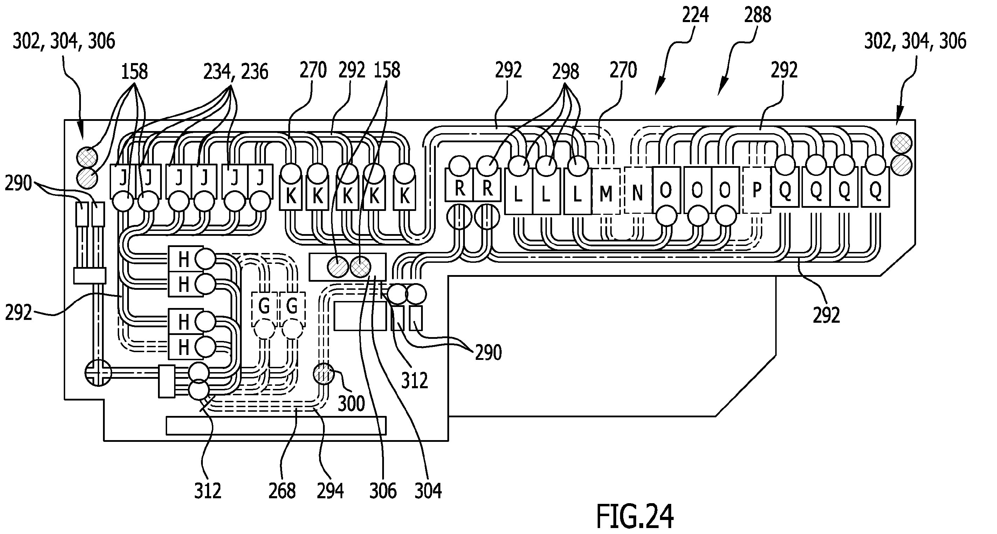

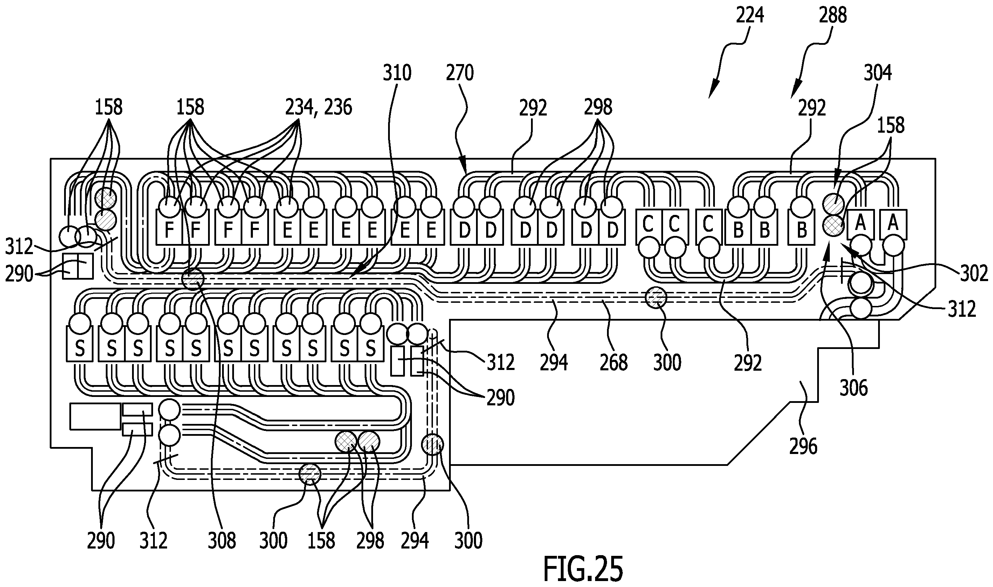

In den Fig. 24 und 25 ist ein Beispiel für ein Layout einer Bearbeitungsanlage 224 schematisch dargestellt.

Die Bearbeitungsanlage 224 umfasst dabei zahlreiche Stationen 234, welche insbesondere Bearbeitungsstationen 236 zum Bearbeiten und/oder Kontrollieren von Gegenständen 102, insbesondere Fahrzeugkarosserien 206, sind.

Die Fig. 24 und 25 zeigen dabei zwei unterschiedliche Ebenen 288 derselben Bearbeitungsanlage 224, so dass für die nachfolgende Beschreibung beide Fig. 24, 25 gemeinsam zu betrachten sind.

Die Bearbeitungsanlage 224 umfasst insbesondere eine oder mehrere Transfervorrichtungen 290, mittels welchen zu fördernde Gegenstände 102 auf die jeweilige Ebene 288 bringbar sind.

Die Transfervorrichtungen 290 sind insbesondere Aufzüge oder sonstige Hubvorrichtungen.

Die Bearbeitungsanlage 224 umfasst insbesondere eine Fördervorrichtung 222 gemäß einer der vorstehend beschriebenen Ausführungsformen und somit insbesondere mehrere Fahrzeuge 100 zum Fördern von Gegenständen 102.

Im Sinne einer besseren Übersichtlichkeit sind die Gegenstände 102 und die Fahrzeuge 100 in den Fig. 24 und 25 nicht dargestellt. Vielmehr sind in diesen Figuren Förderwege 292 sowie Rückförderwege 294 dargestellt, längs welcher die Fahrzeuge 100 verfahrbar sind.

Längs der Förderwege 292 sind Gegenstände 102 förderbar.

Längs der Rückförderwege 294 sind lediglich die Fahrzeuge 100 ohne daran angeordnete Gegenstände 102 verfahrbar, insbesondere um die Fahrzeuge 100 aus einer Endposition eines Bearbeitungsabschnitts der Bearbeitungsanlage 224 zurück in eine Anfangsposition zu bringen. Die Stationen 234 sind als Rechtecke dargestellt und mit Buchstaben versehen, welche eine beispielhafte Förderreihenfolge andeuten. Insbesondere sind die Gegenstände mittels der Fahrzeuge 100 nacheinander den folgenden Stationen 234 zuführbar:
Beispielsweise aus einem Sortierlager 296 werden die Gegenstände 102 mittels eines oder mehrerer Fahrzeuge 100 nacheinander obligatorisch den Stationen A, B, C und D zugeführt (siehe Fig. 25).

Die Stationen E und F sind optional und können wahlweise ausgelassen oder aber mehrfach, insbesondere in unterschiedlichen Reihenfolgen, durchfahren werden.

Im Anschluss werden die Gegenstände 102zu einer Transfervorrichtung 290 gefördert und mittels derer auf die in Fig. 24 dargestellte Ebene 288 transferiert.

Die Gegenstände 102 werden dann obligatorisch den Stationen H, J, K, L, O, Q und R zugeführt, bevor die Gegenstände 102 mittels einer weiteren Transfervorrichtung 290 zurück in die in Fig. 25 dargestellte Ebene 288 transferiert werden. Dort werden sie dann den Stationen S zugeführt und schließlich über eine weitere Transfervorrichtung 290 zur weiteren Bearbeitung in eine nicht dargestellte Ebene 288 transferiert.

Optional vor den Stationen H sind eine oder mehrere Stationen G durchfahrbar.

Unter Umgehung der Stationen L kann insbesondere eine Station M vorgesehen sein.

Ferner sind Stationen N und/oder P zur optionalen Umgehung der Stationen O vorgesehen.

Bei einer ersten Layout-Variante kann Folgendes vorgesehen sein:
Die Stationen 234 auf der in Fig. 24 dargestellten Ebene 288 sind insbesondere mehrheitlich oder ausschließlich manuelle Stationen oder Arbeitsplätze, in welchen die Gegenstände 102 von Personen bearbeitet werden. Personen müssen somit vorzugsweise permanent Zugang zu den Stationen 234 haben, weshalb die Fahrzeuge 100 auf der in Fig. 24 dargestellten Ebene 288 vorzugsweise größtenteils, insbesondere zu mindestens ungefähr 90%, beispielsweise mindestens ungefähr 95 %, ihrer Nutzungsdauer und/oder ihres Fahrwegs im Sicherheitsmodus sind.

Insbesondere sind oder umfassen somit die folgenden Stationen 234 manuelle Stationen oder Arbeitsplätze:
G, H, J, K, L, M, N, O, P, Q, R.

Einzelne oder mehrere dieser Stationen können jedoch auch als automatische Stationen oder Arbeitsplätze ausgebildet sein, in welchen die Gegenstände 102 mittels Robotern 238 oder sonstiger Maschinen bearbeitet werden.

Die Stationen 234 auf der in Fig. 25 dargestellten Ebene 288 sind insbesondere mehrheitlich oder ausschließlich automatische Stationen oder Arbeitsplätze, in welchen die Gegenstände 102 mittels Robotern 238 oder sonstiger Maschinen bearbeitet werden. Personen müssen somit vorzugsweise nur zu Wartungs- oder Kontrollzwecken temporär Zugang zu den Stationen 234 haben. Die Fahrzeuge 100 auf der in Fig. 25 dargestellten Ebene 288 können daher vorzugsweise größtenteils, insbesondere zu mindestens ungefähr 90%, beispielsweise mindestens ungefähr 95 %, ihrer Nutzungsdauer im unbeladenen Zustand und/oder im beladenen Zustand im Expressmodus sein.

Ferner können die Fahrzeuge 100 auf der in Fig. 25 dargestellten Ebene 288 vorzugsweise größtenteils, insbesondere zu mindestens ungefähr 90%, beispielsweise mindestens ungefähr 95 %, ihres Fahrwegs im unbeladenen Zustand und/oder im beladenen Zustand im Expressmodus sein.

Insbesondere sind oder umfassen somit die folgenden Stationen 234 automatische Stationen oder Arbeitsplätze:
A, B, C, D, E, F, S.

Einzelne oder mehrere dieser Stationen können jedoch auch als manuelle Stationen oder Arbeitsplätze ausgebildet sein, in welchen die Gegenstände 102 von Personen bearbeitet werden.

Bei einer zweiten Layout-Variante kann hingegen Folgendes vorgesehen sein:
Die Stationen 234 auf der in Fig. 25 dargestellten Ebene 288 sind insbesondere mehrheitlich oder ausschließlich manuelle Stationen oder Arbeitsplätze, in welchen die Gegenstände 102 von Personen bearbeitet werden. Personen müssen somit vorzugsweise permanent Zugang zu den Stationen 234 haben, weshalb die Fahrzeuge 100 auf der in Fig. 25 dargestellten Ebene 288 vorzugsweise größtenteils, insbesondere zu mindestens ungefähr 90%, beispielsweise mindestens ungefähr 95 %, ihrer Nutzungsdauer und/oder ihres Fahrwegs im Sicherheitsmodus sind.

Insbesondere sind oder umfassen somit die folgenden Stationen 234 automatische Stationen oder Arbeitsplätze:
A, B, C, D, E, F, S.

Einzelne oder mehrere dieser Stationen können jedoch auch als automatische Stationen oder Arbeitsplätze ausgebildet sein, in welchen die Gegenstände 102 mittels Robotern 238 oder sonstiger Maschinen bearbeitet werden.

Die Stationen 234 auf der in Fig. 24 dargestellten Ebene 288 sind insbesondere mehrheitlich oder ausschließlich automatische Stationen oder Arbeitsplätze, in welchen die Gegenstände 102 mittels Robotern 238 oder sonstiger Maschinen bearbeitet werden. Personen müssen somit vorzugsweise nur zu Wartungs- oder Kontrollzwecken temporär Zugang zu den Stationen 234 haben. Die Fahrzeuge 100 auf der in Fig. 24 dargestellten Ebene 288 können daher vorzugsweise größtenteils, insbesondere zu mindestens ungefähr 90%, beispielsweise mindestens ungefähr 95 %, ihrer Nutzungsdauer im unbeladenen Zustand und/oder im beladenen Zustand im Expressmodus sein.

Ferner können die Fahrzeuge 100 auf der in Fig. 24 dargestellten Ebene 288 vorzugsweise größtenteils, insbesondere zu mindestens ungefähr 90%, beispielsweise mindestens ungefähr 95 %, ihres Fahrwegs im unbeladenen Zustand und/oder im beladenen Zustand im Expressmodus sein.

Insbesondere sind oder umfassen somit die folgenden Stationen 234 manuelle Stationen oder Arbeitsplätze:
G, H, J, K, L, M, N, O, P, Q, R.

Einzelne oder mehrere dieser Stationen können jedoch auch als manuelle Stationen oder Arbeitsplätze ausgebildet sein, in welchen die Gegenstände 102 von Personen bearbeitet werden.

Die Gegenstände 102 sind zwischen den Ebenen 288 hin und her transferierbar, wobei die Fahrzeuge 100 vorzugsweise jeweils auf derselben Ebene 288 verbleiben. Es kann jedoch auch eine Förderung der Gegenstände 102 derart vorgesehen sein, dass die Fahrzeuge 100 zusammen mit den Fahrzeugen 102 zwischen den Ebenen 288 hin und her transferiert werden.

Für einen optimalen Betrieb der Fördervorrichtung 222 zur Förderung der Gegenstände 102 sind zahlreiche Ladebereiche 158 erforderlich.

Sämtliche Ladebereiche 158 sind in den Fig. 24 und 25 durch Kreise dargestellt. Insbesondere sind vorzugsweise sämtliche leere oder schraffierte Kreise in den Fig. 24 und 25 Ladebereiche 158.

Insbesondere dann, wenn die Energiespeichereinheiten 150 der Fahrzeuge 100 Superkondensatoren 154 anstelle von Lithium-Ionen-Akkumulatoren umfassen, muss in vergleichsweise kurzen zeitlichen und/oder räumlichen Abständen eine Wiederaufladung des Energiespeichers 150 eines jeweiligen Fahrzeugs 100 möglich sein. Ladebereiche 158 sind daher insbesondere jeweils an einer Station 234, vorzugsweise an einer Abgabeposition 242 einer jeweiligen Station 234, angeordnet. Diese Ladebereiche 158 sind vorzugsweise stationäre Ladebereiche 298.

Die Fahrzeuge 100 sind dabei insbesondere während der Übergabe der Gegenstände 102 an die jeweilige Station 234 stationär, so dass der für die Übergabe ohnehin erforderliche Halt des Fahrzeugs 100 für einen Aufladevorgang genutzt werden kann.

Alternativ oder ergänzend hierzu kann auch bei einer Übernahme in einer Aufnahmeposition 256 einer jeweiligen Station 234 ein Ladebereich 158 vorgesehen sein.

Abhängig von einer Gesamtlänge des Förderwegs 292 und/oder des Rückförderwegs 294 können auch anstelle und/oder ergänzend zu den Stationen 234 zugeordneten Ladebereichen 158 in den Förderwegen 292 und/oder den Rückförderwegen 294 angeordnete Ladebereiche 158 vorgesehen sein.

Die Ladebereiche 158 können dabei insbesondere auf dem in den Fig. 24 und 25 als Förderweg 292 und Rückförderweg 294 abgebildeten optimalen und/oder kürzesten Weg angeordnet sein. Die Fahrzeuge 100 halten dann ohne Umweg an, um geladen zu werden.

Alternativ hierzu kann vorgesehen sein, dass die Fahrzeuge 100 während der Fahrt geladen werden. Die Ladebereiche 158 sind dann insbesondere Mobilladebereiche 300.

Ferner kann vorgesehen sein, dass die Fahrzeuge 100 zum Aufladen des jeweiligen Energiespeichers 150 temporär von einem optimalen und/oder kürzesten Förderweg 292 und/oder Rückförderweg 294 abweichen und beispielsweise in eine Ladebucht 302 gefahren werden. Nach erfolgtem Aufladen kehren die Fahrzeuge 100 dann vorzugsweise auf den optimalen und/oder kürzesten Förderweg 292 und/oder den optimalen und/oder kürzesten Rückförderweg 294 zurück.

Eine Ladebucht 302 kann insbesondere ein Wartebereich 304 sein, in welchem sich Fahrzeuge 100 nicht ausschließlich zum Aufladen des Energiespeichers 150, sondern auch dann aufhalten können, wenn keine 100%-ige Auslastung der Fahrzeuge 100 vorliegt und somit eine Wartezeit bis zu einem nächsten Förderauftrag überbrückt werden muss.

Die Ladebucht 302 und/oder der Wartebereich 304 kann ferner ein Wartungsbereich 306 sein, in welchem ein oder mehrere Fahrzeuge 100 manuell und/oder automatisch gewartet oder instandgehalten werden. Beispielsweise können in einem Wartungsbereich 306 Reparaturen oder sonstige Arbeiten an dem Fahrzeug 100 durchgeführt werden.

Die Ladebereiche 158 sind vorzugsweise so angeordnet, dass mit möglichst geringen Leitungslängen und möglichst wenig Ladebereichen 158 möglichst viele Förderwege 292 und/oder Rückförderwege 294 erfasst werden.

Ein oder mehrere Ladebereiche 158 sind hierfür beispielsweise an einem Ladeknotenpunkt 308 und/oder an einem mehrdirektionalen Förderbereich 310 angeordnet.

Ein Ladeknotenpunkt 308 ist insbesondere ein Bereich, in welchem mehrere Ladebereiche 158 zum gleichzeitigen Laden mehrerer Fahrzeuge 100 vorgesehen sind. Hierdurch können insbesondere die Leitungslängen zur Versorgung der Ladebereiche 158 mit elektrischer Energie reduziert werden.

Die Anordnung eines oder mehrerer Ladebereiche 158 in einem mehrdirektionalen Förderbereich 310 ermöglicht insbesondere eine optimale Ausnutzung des einen oder der mehreren Ladebereiche 158, da in mehrdirektionalen Förderbereichen 310 ein oder mehrere Fahrzeuge 100 nacheinander oder gleichzeitig in unterschiedlichen Fahrtrichtungen den einen oder die mehreren Ladebereiche 158 durchqueren und/oder überfahren können. Eine zeitaufwändige Ausrichtung der Fahrzeuge 100 kann hierdurch entbehrlich sein.

Der eine oder die mehreren in dem mehrdirektionalen Förderbereich 310 angeordneten Ladebereiche 158 sind somit höher frequentierbar und können zum Aufladen von mehr Fahrzeugen 100 in kürzerer Zeit genutzt werden.

Als mehrdirektionale Förderbereiche 310 können insbesondere einander überlappende und/oder sich kreuzende Förderwege 292 und/oder Rückförderwege 294 vorgesehen sein.

Im Sinne einer optimierten Fördergeschwindigkeit kann die Fördervorrichtung 222 vorzugsweise in unterschiedliche Bereiche eingeteilt werden.

Ein Sicherheitsbereich 270 ist dabei insbesondere derjenige Bereich, in welchem die Fahrzeuge 100 samt gegebenenfalls daran angeordneter Gegenstände 102 für Personen zugänglich sind, so dass die Personen besonders geschützt werden müssen.

Die Fahrzeuge 100 haben hierfür insbesondere eine vorgegebene Höchstgeschwindigkeit sowie zusätzliche Sicherheitsmaßnahmen, um den Personenschutz zu gewährleisten und zugleich die zu fördernden Gegenstände 102 vor Beschädigungen zu schützen.

Zusätzlich zu dem Sicherheitsbereich 270 kann ein Expressbereich 268 vorgesehen sein.

Der Expressbereich 268 ist insbesondere ein räumlich von dem Sicherheitsbereich 270 getrennter Bereich, welcher für Personen zumindest temporär nicht zugänglich ist.

Insbesondere ein oder mehrere Rückförderwege 294 sind vorzugsweise als Expressbereiche 268 ausgebildet, so dass die Fahrzeuge 100 mit einer im Vergleich zur Höchstgeschwindigkeit im Sicherheitsbereich 270 erhöhten Geschwindigkeit beispielsweise von einer Endposition eines Bearbeitungsabschnitts zurück zu einer Anfangsposition verfahrbar sind.

Hierdurch sind die Fahrzeuge 100 schneller für einen erneuten Fördervorgang verfügbar, wodurch die Effizienz der Fördervorrichtung 222 erhöht werden kann.

Die Fahrzeuge 100 sind insbesondere durch eine oder mehrere Durchfahrtsöffnungen 312 in einer oder mehreren Trennvorrichtungen, insbesondere Trennwänden, zur Trennung des Expressbereichs 268 von dem Sicherheitsbereich 270 hindurchfahrbar.

Die Durchfahrtsöffnungen 312 sind dabei insbesondere hinsichtlich ihrer Form an eine Außenkontur des Fahrzeugs 100 angepasst, wodurch vorzugsweise ohne einen Verschlussmechanismus zum Verschließen der Durchfahrtsöffnung 312 gewährleistet werden kann, dass keine Personen unerlaubt Zutritt zu dem Expressbereich 268 erhalten und sich hierdurch in Gefahr begeben.

Sollte trotz dieser Vorsichtsmaßnahmen dennoch eine Person Zugang zu dem Expressbereich 268 erhalten, kann vorzugsweise mittels (nicht dargestellter) Sensorvorrichtungen ein solches Eindringen in den Expressbereich 268 erkannt werden. Die Fahrzeuge 100, welche in dem Expressbereich 268 angeordnet sind oder in diesen einfahren, werden dann vorzugsweise nicht in einen Expressmodus versetzt, sondern verbleiben in dem Sicherheitsmodus, in welchem sie sind, wenn sie sich im Sicherheitsbereich 270 befinden.

Die in den Fig. 24 und 25 dargestellten Varianten des Layouts der Stationen 234 sowie der Anordnung und/oder Ausgestaltung der Ladebereiche 158 sind lediglich beispielhaft und können in beliebigen Kombinationen mit den übrigen beschriebenen und/oder dargestellten Ausführungsformen anderer Stationen 234 und/oder anderer Ladebereiche 158 Verwendung finden.

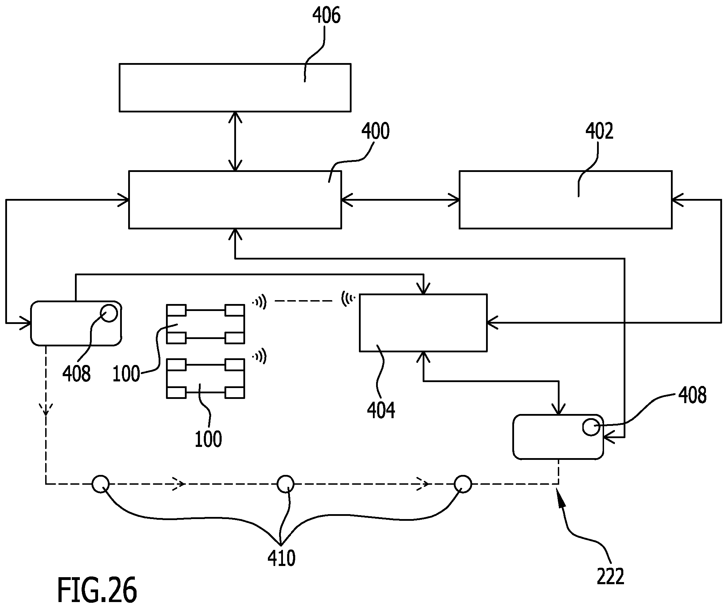

In Fig. 26 ist ein Verfahrensschema dargestellt, welches ein Beispiel für eine optimierte Steuerung einer Fördervorrichtung 222 zeigt.

Dabei ist vorzugsweise vorgesehen, dass die einzelnen, vorzugsweise fahrerlosen, Fahrzeuge 100 flexibel nach einem Materialfluss- und/oder einem Produktionsplan bewegt werden. Ein starrer Ablaufplan ist vorzugsweise nicht vorgesehen. Vielmehr werden vorzugsweise mittels einer übergeordneten Steueranlage 400 einzelne Transportaufträge für die einzelnen Fahrzeuge 100 erstellt.

Die Transportaufträge werden über ein Flottenmanagementsystem 402 an die einzelnen Fahrzeuge 100 übermittelt, woraufhin die einzelnen Fahrzeuge 100 den jeweiligen Transportauftrag ausführen.

Optional können ein oder mehrere Flottenmanagementsubsysteme 404 vorgesehen sein, welche insbesondere zwischen das Flottenmanagementsystem 402 und die einzelnen Fahrzeuge 100 dazwischengeschaltet sind.

Insbesondere dann, wenn die Fördervorrichtung 222 mehrere voneinander unabhängige Gruppen von Fahrzeugen 100 aufweist, kann jeder Gruppe ein separates Flottenmanagementsubsystem 404 zugeordnet sein.

Von dem Flottenmanagementsystem 402 kann dann beispielsweise nur der grundsätzliche Transportauftrag für die jeweilige Gruppe von Fahrzeugen 100 übermittelt werden. Erst das Flottenmanagementsubsystem 404 kann dann beispielsweise den Transportauftrag einem einzelnen Fahrzeug 100 aus der Gruppe zuweisen.

Voneinander unabhängige Gruppen von Fahrzeugen 100 sind beispielsweise in räumlich voneinander getrennten Bereichen einer Produktionsanlage befindliche Fahrzeuge 100, beispielsweise Fahrzeuge 100 auf unterschiedlichen Ebenen einer Produktionsanlage, insbesondere einer Lackier- und/oder Fertigungsanlage.

Die Steueranlage 400 kann insbesondere ein funktionales Modul "AGV-Fleet-Service" darstellen und/oder bilden, welches beispielsweise als übergeordnete Basis Transportaufträge erstellt und diese insbesondere an das Flottenmanagementsystem 402 übergibt.

Der Transport von Gegenständen 102 findet vorzugsweise zwischen Stoppstellen statt, welche insbesondere Aufnahmestationen, Übergabestationen, Speicherstationen, Bearbeitungsstationen, Behandlungsstationen, etc. sind.

Insbesondere folgt der Transport der Gegenstände einer Priorität der Zielematrix aus dem Datensatz eines Gegenstands, insbesondere aus einem Karosseriedatensatz.

Vorteilhaft kann es sein, wenn Daten aus einem Produktionsplanungssystem 406, insbesondere aktuelle ERP-Daten (Daten aus einem Enterprise-Resource-Planing-System), beispielsweise aus einem Produktionsplan eines spezifischen Gegenstands, zur Erstellung und/oder Priorisierung und/oder Durchführung der Transportaufträge verwendet werden. Insbesondere kann eine Identifikationsnummer, insbesondere eine VIN-Nummer (Vehicle Identification Number), für jeden Gegenstand 102 mit dem Materialfluss abgestimmt und in Einklang gebracht werden.

Günstig kann es sein, wenn beispielsweise mittels eines "Fleet-Service" (insbesondere mittels der Steueranlage 400) vollautomatisch Transportaufträge zwischen Stoppstellen 408, 410 der jeweiligen Einzelsysteme generiert und diesbezügliche Daten mit einem Flottenmanagementsystem 402 der Fahrzeuge 100 ausgetauscht werden.

Beispielsweise in gewissen Grenzen oder auch unbegrenzt kann dieser Fleet-Service (insbesondere die Steueranlage 400) vorzugsweise Möglichkeiten für manuelle Eingriffe und Erweiterungen bieten. So ist es vorzugsweise möglich, den Fahrzeugen 100 Stoppstellen, insbesondere reale Stoppstellen 408 und/oder virtuelle Stoppstellen 410, hinzuzufügen oder diese zu blockieren, um die Vorteile eines flexiblen Fördersystems zu nutzen. Hierdurch können insbesondere während der Produktion Priorisierungsänderungen bei der Generierung von Transportaufträgen berücksichtigt werden.

Das Verfahren zur Steuerung der Fahrzeuge ist vorzugsweise auch lauffähig ohne überlagerte Datenbankapplikation zur Verwaltung der Produkt- und Prozessstammdaten.

Optional kann eine Konfiguration mittels Datenbanktabellen möglich sein, insbesondere für einen Betrieb ohne überlagertes Management System (MES).

Start-/Endpunkte eines Transportauftrags werden vorzugsweise als typisierte Haltepunkte oder Stoppstellen verwaltet.

Vorteilhaft kann es sein, wenn Haltepunkte oder Stoppstellen 408, 410 manuell aktivierbar oder deaktivierbar sind.

Eine Verweilzeit eines Gegenstands 102 und/oder eines Fahrzeugs 100 an einem Haltepunkt und/oder einer Stoppstelle 408, 410 ist vorzugsweise frei konfigurierbar oder vorgegeben, beispielsweise durch eine Taktzeit.

Die Verweilzeit wird insbesondere an die Steueranlage 400, insbesondere den Fleet Service, übergegeben, wenn ein Gegenstand 102 an einem Haltepunkt und/oder an einer Stoppstelle 408, 410 zur Abholung bereitsteht. Die Übergabe der Verweilzeit ist insbesondere eventbasiert.

Die Steueranlage 400 stellt vorzugsweise REST Services bereit, insbesondere Daten darüber aufzunehmen und/oder zu übertragen, welcher Gegenstand an welcher Station zur Abholung bereit ist und welche Station die nächste anzufahrende Station ist.

Beispielsweise über Konfigurationsoptionen können vorzugsweise fixe Vorgabezeiten zur proaktiven Bereitstellung von Fahrzeugen 100 an Haltepunkten und/oder Stoppstellen 408, 410 erfasst werden.

Eine Abholung von Gegenständen 102 erfolgt vorzugsweise eventbasiert und/oder automatisch nach Ablauf einer vorgegebenen Verweilzeit.

Das Routing kann beispielsweise auf Basis der in einem Event übermittelten Nachfolge-Stoppstelle oder auf Basis der Reihenfolge erfolgen, wobei dann insbesondere die nächste Stoppstelle 408, 410 mit dem nächst höheren Rang angefahren wird. Ist kein höherer Rang vorhanden, wird wieder die Station mit niedrigster Reihenfolge angefahren.

Bei einer fehlerhaften Abarbeitung von Transportaufträgen durch das Flottenmanagementsystem 402 wird der Transportauftrag vorzugsweise wiederholt, wobei eine maximale Wiederhol-Anzahl beispielsweise über einen Parameter konfiguriert werden kann.

Besondere Ausführungsformen sind die Folgenden:
1. Fahrzeug (100), insbesondere zum Fördern von Gegenständen (102), beispielsweise Fahrzeugkarosserien (206), wobei das Fahrzeug (100) Folgendes umfasst:
   - einen Grundkörper (104);
   - ein Fahrwerk (106), mittels welchem der Grundkörper (104) auf einem befahrbaren Untergrund (160) aufliegt und/oder bewegbar ist;
   - eine Antriebsvorrichtung (110) zum Antreiben des Fahrzeugs (100);
   - eine Aufnahmevorrichtung (168), welche ein Aufnahmeelement (170), zwei Aufnahmeelemente (170) oder mehr als zwei Aufnahmeelemente (170) zum Aufnehmen mindestens eines Gegenstands (102) umfasst.
2. Fahrzeug (100) nach Ausführungsform 1, dadurch gekennzeichnet, dass die Aufnahmevorrichtung (168) exakt zwei Aufnahmeelemente (170) umfasst.
3. Fahrzeug (100) nach einer der Ausführungsformen 1 oder 2, dadurch gekennzeichnet, dass mehrere Aufnahmeelemente (170), insbesondere sämtliche Aufnahmeelemente (170), sich in einer Ebene erstrecken, welche vertikal und parallel zu einer Längsmittelachse (140) des Fahrzeugs (100) verläuft.
4. Fahrzeug (100) nach einer der Ausführungsformen 1 bis 3, dadurch gekennzeichnet, dass das eine Aufnahmeelement (170), die zwei Aufnahmeelemente (170) oder die mehr als zwei Aufnahmeelemente (170) bewegbar an dem Grundkörper (104) angeordnet sind.
5. Fahrzeug (100) nach Ausführungsform 4, dadurch gekennzeichnet, dass das Fahrzeug (100) eine Hubantriebsvorrichtung (178) umfasst, mittels welcher das eine Aufnahmeelement (170), die zwei Aufnahmeelemente (170) oder die mehr als zwei Aufnahmeelemente (170) relativ zum Grundkörper (104) anhebbar und/oder absenkbar sind.
6. Fahrzeug (100) nach einer der Ausführungsformen 1 bis 5, dadurch gekennzeichnet, dass mehrere Aufnahmeelemente (170), insbesondere sämtliche Aufnahmeelemente (170), miteinander gekoppelt und ausschließlich gemeinsam relativ zu dem Grundkörper (104) bewegbar sind.
7. Fahrzeug (100) nach Ausführungsform 6, dadurch gekennzeichnet, dass eine Hubantriebsvorrichtung (178) des Fahrzeugs (100) ein Hubantriebselement (182), insbesondere einen Hubantriebsriemen (184) oder eine Hubantriebskette, umfasst, wobei das Hubantriebselement (182) einen Hubantriebsmotor (180) und zwei oder mehr als zwei Aufnahmeelemente (170) miteinander verbindet, so dass die zwei oder mehr als zwei Aufnahmeelemente (170) gemeinsam mittels des Hubantriebsmotors (180) bewegbar, insbesondere relativ zum Grundkörper (104) anhebbar und/oder absenkbar, sind.
8. Fahrzeug (100) nach Ausführungsform 7, dadurch gekennzeichnet, dass
   a) das Hubantriebselement (182) sich durch eine Antriebsachse (148) der Antriebsvorrichtung (110) zum Antreiben des Fahrzeugs (100) hindurch erstreckt und/oder
   b) das Hubantriebselement (182) sich unter einer Antriebsachse (148) der Antriebsvorrichtung (110) zum Antreiben des Fahrzeugs (100) hindurch erstreckt.
9. Fahrzeug (100) nach einer der Ausführungsformen 1 bis 8, dadurch gekennzeichnet, dass die Antriebsvorrichtung (110) eine Antriebsachse (148) aufweist, welche zwei Antriebselemente (118), insbesondere Antriebsräder (120), der Antriebsvorrichtung (110) miteinander verbindet, wobei die Antriebsachse (148) im Wesentlichen quer, insbesondere zumindest näherungsweise senkrecht, zu einer Längsmittelachse (140) und/oder Hauptfahrtrichtung (138) des Fahrzeugs (100) ausgerichtet ist.
10. Fahrzeug (100) nach einer der Ausführungsformen 1 bis 9, dadurch gekennzeichnet, dass die Antriebsvorrichtung (110) eine Antriebsachse (148) aufweist, welche zwei Antriebselemente (118), insbesondere Antriebsräder (120), der Antriebsvorrichtung (110) miteinander verbindet, wobei die Antriebsachse (148) bezüglich einer Längsmittelachse (140) und/oder Hauptfahrtrichtung (138) des Fahrzeugs (100) zumindest näherungsweise mittig an dem Grundkörper (104) des Fahrzeugs (100) angeordnet ist.
11. Fahrzeug (100) nach einer der Ausführungsformen 1 bis 10, dadurch gekennzeichnet, dass die Antriebsvorrichtung (110) eine Antriebsachse (148) aufweist, welche zwei Antriebselemente (118), insbesondere Antriebsräder (120), der Antriebsvorrichtung (110) miteinander verbindet, wobei die Antriebselemente (118) gemeinsam mittels der Antriebsachse (148) an dem Grundkörper (104) gelagert sind.
12. Fahrzeug (100) nach einer der Ausführungsformen 1 bis 11, dadurch gekennzeichnet, dass mehrere Antriebselemente (118), insbesondere Antriebsräder (120), der Antriebsvorrichtung (110) unabhängig voneinander antreibbar sind.
13. Fahrzeug (100) nach einer der Ausführungsformen 1 bis 12, dadurch gekennzeichnet, dass die Antriebsvorrichtung (110) eine Antriebsachse (148) und/oder ein oder mehrere Antriebselemente (118) umfasst, welche mittels einer Betätigungsvorrichtung (146) auf einen Boden absenkbar und/oder anpressbar und/oder von dem Boden abhebbar sind,
   wobei die Antriebsachse (148) und/oder ein oder mehrere Antriebselemente (118) vorzugsweise in den Grundkörper (104) des Fahrzeugs (100) integriert und/oder von dem Grundkörper (104) fünfseitig umgeben sind und/oder wobei die Betätigungsvorrichtung (146) vorzugsweise an einer Außenseite des Fahrzeugs (100) zur Betätigung derselben zugänglich ist.
14. Fahrzeug (100) nach einer der Ausführungsformen 1 bis 13, dadurch gekennzeichnet, dass das eine Aufnahmeelement (170), die zwei Aufnahmeelemente (170) oder die mehr als zwei Aufnahmeelemente (170) jeweils einen Aufnahmeabschnitt (174) aufweisen, welcher sich zu einem bezüglich einer Schwerkraftrichtung (g) oberen Ende hin verjüngt.
15. Fahrzeug (100) nach Ausführungsform 14, dadurch gekennzeichnet, dass ein oder mehrere Aufnahmeabschnitte (174), insbesondere sämtliche Aufnahmeabschnitte (174), im Wesentlichen konusförmig, konusabschnittsförmig, kegelstumpfförmig oder kegelstumpfabschnittsförmig ausgebildet sind.
16. Fahrzeug (100) nach einer der Ausführungsformen 1 bis 15, dadurch gekennzeichnet, dass das eine Aufnahmeelement (170), die zwei Aufnahmeelemente (170) oder die mehr als zwei Aufnahmeelemente (170) in unterschiedlichen Positionen relativ zu dem Grundkörper (104) anordenbar sind, wobei das eine Aufnahmeelement (170), die zwei Aufnahmeelemente (170) oder die mehr als zwei Aufnahmeelemente (170) vorzugsweise in einer bezüglich einer Schwerkraftrichtung (g) untersten Position über eine Oberseite (172) des Grundkörpers (104) hervorragen.
17. Fahrzeug (100) nach einer der Ausführungsformen 1 bis 16, dadurch gekennzeichnet, dass das eine Aufnahmeelement (170), die zwei Aufnahmeelemente (170) oder die mehr als zwei Aufnahmeelemente (170) eine parallel zu einer Schwerkraftrichtung (g) genommene Höhe aufweisen, welche größer ist als eine parallel zur Schwerkraftrichtung (g) genommene Höhe des Grundkörpers (104) des Fahrzeugs (100).
18. Fahrzeug (100) nach einer der Ausführungsformen 1 bis 17, dadurch gekennzeichnet, dass das Fahrzeug (100) einen oder mehrere Aufnahmesensoren (188) umfasst, mittels welcher
   a) ein an mindestens einem Aufnahmeelement (170) angeordneter Gegenstand (102) erfassbar und/oder auf dessen korrekte Festlegung hin überwachbar ist; und/oder
   b) eine Ausrichtung und/oder Position eines beabstandet von dem mindestens einen Aufnahmeelement (170) angeordneten Gegenstands (102) erfassbar sind.
19. Fahrzeug (100) nach Ausführungsform 18, dadurch gekennzeichnet, dass mindestens ein Aufnahmesensor (188) an dem Grundkörper (104) und/oder an dem Aufnahmeelement (170) angeordnet ist.
20. Fahrzeug (100) nach einer der Ausführungsformen 18 oder 19, dadurch gekennzeichnet, dass mindestens ein Aufnahmesensor (188) mit einer Detektionshilfe (220) an einem aufzunehmenden oder aufgenommenen Gegenstand (102) wechselwirkt.
21. Fahrzeug (100) nach einer der Ausführungsformen 1 bis 20, dadurch gekennzeichnet, dass an einer Oberseite (172) des Grundkörpers (104) eine Abdeckung (196) zum Abdecken eines Innenraums des Grundkörpers (104) angeordnet ist, wobei die Abdeckung (196) auf den Grundkörper (104) aufgelegt ist und/oder zumindest näherungsweise vollständig umlaufend bündig mit einem Auflagebereich (198) des Grundkörpers (104) abschließt.
22. Fahrzeug (100) nach einer der Ausführungsformen 1 bis 21, dadurch gekennzeichnet, dass an einer Oberseite (172) des Grundkörpers (104) eine Abdeckung (196) zum Abdecken eines Innenraums des Grundkörpers (104) angeordnet ist, wobei die Abdeckung (196) zumindest teilweise transparent ausgebildet ist.
23. Fahrzeug (100) nach einer der Ausführungsformen 1 bis 22, dadurch gekennzeichnet, dass der Grundkörper (104) im Wesentlichen quaderförmig ausgebildet ist,
   wobei vier Eckbereiche (112) des Grundkörpers (104) vorzugsweise jeweils mit einer um 360° drehbaren und/oder nicht angetriebenen Stützrolle (108) versehen sind.
24. Fahrzeug (100) nach einer der Ausführungsformen 1 bis 23, dadurch gekennzeichnet, dass der Grundkörper (104) im Wesentlichen quaderförmig ausgebildet ist,
   wobei zwei oder vier Eckbereiche (112) des Grundkörpers (104) jeweils mit einer nach außen hervorragenden Sensorvorrichtung (190) des Fahrzeugs (100) versehen sind.
25. Fahrzeug (100) nach einer der Ausführungsformen 1 bis 24, dadurch gekennzeichnet, dass das Fahrzeug (100) eine oder mehrere Sensorvorrichtungen (190) umfasst, welche jeweils ein oder mehrere Sensorelemente zur Erfassung einer Umgebung des Fahrzeugs (100) aufweisen, wobei das eine oder die mehreren Sensorelemente jeweils für sich genommen oder gemeinsam in einer im Wesentlichen horizontalen Ebene einen Erfassungsbereich von mindestens ungefähr 250°, insbesondere ungefähr 270°, aufweisen.
26. Fahrzeug (100) nach einer der Ausführungsformen 1 bis 25, dadurch gekennzeichnet, dass das Fahrzeug (100) eine oder mehrere Sensorvorrichtungen (190) umfasst, welche mit einer Steuervorrichtung (204) des Fahrzeugs (100) gekoppelt sind, wobei die Steuervorrichtung (204) so ausgebildet und eingerichtet ist, dass das Fahrzeug (100) abhängig von Sensorwerten, welche mittels der einen oder der mehreren Sensorvorrichtungen (190) erfasst und/oder bestimmt werden, in unterschiedlichen Betriebsmodi betreibbar ist, insbesondere in mindestens drei unterschiedlichen Betriebsmodi.
27. Fahrzeug (100) nach Ausführungsform 26, dadurch gekennzeichnet,
   a) dass einer der Betriebsmodi ein Normalbetrieb ist, in welchem keine unerwarteten und/oder unbekannten und/oder störenden Objekte in einem Fahrweg oder einem sonstigen vorgegebenen Umgebungsbereich (192) des Fahrzeugs (100) angeordnet sind;
      und/oder
   b) dass einer der Betriebsmodi ein Warnbetrieb ist, in welchem ein oder mehrere unerwartete und/oder unbekannte und/oder störende Objekte in einem vordefinierten Warnabschnitt eines Fahrwegs oder eines sonstigen vorgegebenen Umgebungsbereichs (192) des Fahrzeugs (100) angeordnet sind;
      und/oder
   c) dass einer der Betriebsmodi ein Stoppbetrieb ist, in welchem ein oder mehrere unerwartete und/oder unbekannte und/oder störende Objekte in einem vordefinierten Stoppabschnitt eines Fahrwegs oder eines sonstigen vorgegebenen Umgebungsbereichs (192) des Fahrzeugs (100) angeordnet sind.
28. Fahrzeug (100) nach Ausführungsform 27, dadurch gekennzeichnet,
   i) dass im Warnbetrieb eine Fahrgeschwindigkeit des Fahrzeugs (100) reduziert wird und/oder dass im Warnbetrieb mittels einer Warnvorrichtung (200) des Fahrzeugs (100) ein akustisches Warnsignal und/oder ein optisches Warnsignal abgegeben wird;
      und/oder
   ii) dass im Stoppbetrieb das Fahrzeug (100) bis zum Stillstand abbremst und/oder dass im Stoppbetrieb mittels einer Warnvorrichtung (200) des Fahrzeugs (100) ein akustisches Notsignal und/oder ein optisches Notsignal abgegeben wird und/oder dass im Stoppbetrieb mittels der Steuervorrichtung (204) ein Notsignal an eine übergeordnete Steuerungsanlage zur Steuerung und/oder Überwachung mehrerer Fahrzeuge (100) übertragen wird.
29. Fahrzeug (100) nach Ausführungsform 28, dadurch gekennzeichnet, dass ein Warnsignal und/oder ein Notsignal eine Aufforderung zur Räumung des Fahrwegs und/oder der Umgebung des Fahrzeugs (100) umfasst.
30. Fahrzeug (100) nach einer der Ausführungsformen 1 bis 29, dadurch gekennzeichnet, dass das Fahrzeug (100) multidirektional, insbesondere bidirektional, verfahrbar ist und dass mittels eines oder mehrerer Anzeigenelemente (202) an jedem Endbereich des Fahrzeugs (100) abhängig von einer aktuellen Fahrtrichtung anzeigbar ist, ob der jeweilige Endbereich aktuell ein Frontbereich oder ein Heckbereich des Fahrzeugs (100) ist.
31. Fahrzeug (100) nach einer der Ausführungsformen 1 bis 30, dadurch gekennzeichnet, dass das Fahrzeug (100) eine oder mehrere Ladeanschlussstellen (164) zum Aufladen eines Energiespeichers (150) des Fahrzeugs (100) umfasst.
32. Fahrzeug (100) nach Ausführungsform 31, dadurch gekennzeichnet, dass eine Ladeanschlussstelle (164) an einer Unterseite (114) des Grundkörpers (104) angeordnet ist und dass das Fahrzeug (100) zum Aufladen des Energiespeichers (150) über einer hierzu korrespondierenden Ladeanschlussstelle (164) eines Ladebereichs (158) positionierbar ist.
33. Fahrzeug (100) nach Ausführungsform 32, dadurch gekennzeichnet, dass diese Ladeanschlussstelle (164) berührend, beispielsweise mittels eines Schleifkontakts, und/oder berührungslos, beispielsweise induktiv, mit einer hierzu korrespondierenden Ladeanschlussstelle (164) eines Ladebereichs (158) koppelbar ist.
34. Fahrzeug (100) nach einer der Ausführungsformen 31 bis 33, dadurch gekennzeichnet, dass eine weitere Ladeanschlussstelle (164) an einer Seitenwandung (166) des Grundkörpers (104) angeordnet ist, wobei diese weitere Ladeanschlussstelle (164) insbesondere mittels einer Steckverbindung mit einer hierzu korrespondierenden Ladeanschlussstelle (164) eines Ladebereichs (158) koppelbar ist.
35. Fahrzeug (100) nach einer der Ausführungsformen 31 bis 34, dadurch gekennzeichnet, dass mindestens eine Ladeanschlussstelle (164) an mindestens einem Aufnahmeelement (170) angeordnet und/oder ausgebildet ist.
36. Fahrzeug (100) nach einer der Ausführungsformen 1 bis 35, dadurch gekennzeichnet, dass das Fahrzeug (100) einen Energiespeicher (150) zur Speicherung und Bereitstellung von elektrischer Energie zum Antreiben des Fahrzeugs (100) umfasst, wobei der Energiespeicher (150) eine oder mehrere Energiespeichereinheiten (152) umfasst, welche als Kondensator, insbesondere Superkondensator (154) oder Ultrakondensator, ausgebildet sind.
37. Fahrzeug (100) nach einer der Ausführungsformen 1 bis 36, dadurch gekennzeichnet, dass das Fahrzeug (100) einen Energiespeicher (150) umfasst, mittels welchem elektrische Energie zum Antreiben einer Hubantriebsvorrichtung (178) des Fahrzeugs (100) speicherbar und bereitstellbar ist.
38. Fahrzeug (100) nach Ausführungsform 37, dadurch gekennzeichnet, dass mittels desselben Energiespeichers (150), insbesondere mittels derselben Energiespeichereinheit (152) oder mittels der derselben Energiespeichereinheiten (152) des Energiespeichers (150), Energie sowohl zum Antreiben der Hubantriebsvorrichtung (178) als auch zum Antreiben des Fahrzeugs (100) speicherbar und bereitstellbar ist.
39. Fahrzeug (100) nach einer der Ausführungsformen 1 bis 38, dadurch gekennzeichnet, dass das Fahrzeug (100) eine Steuervorrichtung (204) umfasst, welche so ausgebildet und eingerichtet ist, dass das Fahrzeug (100) wahlweise in einem Sicherheitsmodus oder in einem Expressmodus betreibbar ist,
   wobei das Fahrzeug (100) in den Sicherheitsmodus versetzt wird, wenn Personen in der Umgebung des Fahrzeugs (100) detektiert werden und/oder ein Bereich befahren wird, welcher für Personen zugänglich ist, und
   wobei das Fahrzeug (100) in den Expressmodus versetzt wird, wenn in der Umgebung des Fahrzeugs (100) keine Personen detektiert werden und/oder ein Bereich befahren wird, welcher für Personen unzugänglich ist.
40. Fahrzeug (100) nach Ausführungsform 39, dadurch gekennzeichnet, dass das Fahrzeug (100) mittels einer nicht am Fahrzeug (100) befindlichen Vorrichtung, insbesondere Sensorvorrichtung (190), beispielsweise unter Verwendung von externen Sicherheitskontakten, etc., in den Sicherheitsmodus oder in den Expressmodus versetzbar ist.
41. Adaptervorrichtung (208) zur Aufnahme eines Gegenstands (102), insbesondere einer Fahrzeugkarosserie (206), wobei die Adaptervorrichtung (208) Folgendes umfasst:
   - ein Zentralelement (210);
   - ein oder mehrere Adapterelemente (212), welche an dem Zentralelement (210) festgelegt und zur Aufnahme des Gegenstands (102) geometrisch an den Gegenstand (102) angepasst sind,
   wobei ein oder mehrere Angriffsbereiche (216), insbesondere Einführöffnungen (218), an welchen ein oder mehrere Aufnahmeelemente (170) zur Aufnahme der Adaptervorrichtung (208) angreifen, an dem Zentralelement (210) und/oder an dem einen oder den mehreren Adapterelementen (212) angeordnet und/oder ausgebildet sind.
42. Kombination aus mindestens einem Fahrzeug (100) nach einer der Ausführungsformen 1 bis 40 und mindestens einer Adaptervorrichtung (208) nach Ausführungsform 41.
43. Kombination nach Ausführungsform 42, dadurch gekennzeichnet, dass mehrere Adapterelemente (212) unterschiedlicher Geometrie und/oder Größe zur Aufnahme von Gegenständen (102) unterschiedlicher Geometrie und/oder Größe vorgesehen sind.
44. Fördervorrichtung (222) zum Fördern von Gegenständen (102), insbesondere Werkstücken, beispielsweise Fahrzeugkarosserien (206), wobei die Fördervorrichtung (222) ein oder mehrere Fahrzeuge (100) nach einer der Ausführungsformen 1 bis 40 umfasst.
45. Fördervorrichtung (222) nach Ausführungsform 44, dadurch gekennzeichnet, dass die Fördervorrichtung (222) eine oder mehrere Stationen (234) umfasst, zu welchen die Gegenstände (102) mittels der Fahrzeuge (100) hin transportierbar sind und/oder an welchen die Gegenstände (102) abgebbar und/oder aufnehmbar sind.
46. Fördervorrichtung (222) nach Ausführungsform 45, dadurch gekennzeichnet, dass in mindestens einer der Stationen (234) zwei oder mehr als zwei Positionen (240, 254) für zwei oder mehr als zwei Gegenstände (102) vorgesehen sind, wobei ein Gegenstand (102) mittels eines Fahrzeugs (100) in einer ersten Position (240) an die Station (234) abgebbar ist und wobei ein Gegenstand (102) in einer zweiten Position (254) mittels eines Fahrzeugs (100) aufnehmbar und anschließend aus der Station (234) abtransportierbar ist.
47. Fördervorrichtung (222) nach Ausführungsform 46, dadurch gekennzeichnet, dass die Gegenstände (102) mittels einer von den Fahrzeugen (100) verschiedenen Stationsfördervorrichtung (244) der Fördervorrichtung (222) förderbar sind, insbesondere von der ersten Position (240) zu der zweiten Position (254).
48. Fördervorrichtung (222) nach Ausführungsform 47, dadurch gekennzeichnet, dass die Gegenstände (102) während der Förderung von der ersten Position (240) zu der zweiten Position (254) oder in einer dazwischen angeordneten Zwischenposition (258) bearbeitbar sind.
49. Fördervorrichtung (222) nach einer der Ausführungsformen 46 bis 48, dadurch gekennzeichnet, dass mindestens ein Fahrzeug (100) so ausgebildet und eingerichtet ist, dass ein Gegenstand (102) in einer ersten Position (240) an einer Station (234) abgebbar ist und dass dann ein zuvor an dieser ersten Position (240) abgegebener Gegenstand (102), welcher zwischenzeitlich zu einer zweiten Position (254) dieser Station (234) gefördert wurde, an der zweiten Position (254) aufnehmbar ist.
50. Fördervorrichtung (222) nach einer der Ausführungsformen 45 bis 49, dadurch gekennzeichnet, dass eine oder mehrere Stationen (234) einen Trennboden (248) umfassen, unter welchem das mindestens eine Fahrzeug (100) bewegbar ist, insbesondere während ein oder mehrere Gegenstände (102) oberhalb des Trennbodens (248) bewegbar sind und/oder um ein oder mehrere Gegenstände (102) oberhalb des Trennbodens (248) zu bewegen.
51. Fördervorrichtung (222) nach Ausführungsform 50, dadurch gekennzeichnet, dass der Trennboden (248) für Personen begehbar ist.
52. Fördervorrichtung (222) nach einer der Ausführungsformen 50 oder 51, dadurch gekennzeichnet, dass der Trennboden (248) im Wesentlichen parallel zu einem befahrbaren Untergrund (160), auf welchem die Fördervorrichtung (222) montiert ist, ausgerichtet ist, wobei ein Abstand einer vorzugsweise begehbaren Oberfläche des Trennbodens (248) von einer Oberfläche des befahrbaren Untergrunds (160) vorzugsweise höchstens ungefähr das Fünffache, insbesondere höchstens ungefähr das Vierfache, vorzugsweise höchstens ungefähr das Doppelte, einer Höhe des Fahrzeugs (100) und/oder einer Höhe des Grundkörpers (104) des Fahrzeugs (100) beträgt.
53. Fördervorrichtung (222) nach einer der Ausführungsformen 50 bis 52, dadurch gekennzeichnet, dass zumindest ein Abschnitt (260) des Trennbodens (248) über einem Förderweg (292) eines Fahrzeugs (100) vollständig geschlossen ausgebildet ist und hierdurch zu fördernde Gegenstände (102) vollständig räumlich von dem Fahrzeug (100) getrennt sind.
54. Fördervorrichtung (222) nach Ausführungsform 53, dadurch gekennzeichnet, dass der vollständig geschlossene Abschnitt (260) des Trennbodens (248) sich zumindest näherungsweise über eine gesamte Längserstreckung eines Bearbeitungsbereichs (252) zur Bearbeitung der Gegenstände (102) erstreckt.
55. Fördervorrichtung (222) nach einer der Ausführungsformen 50 bis 54, dadurch gekennzeichnet, dass der Trennboden (248) einen Durchtrittsbereich (262), insbesondere einen Durchtrittsschlitz (264), aufweist, durch welchen ein oder mehrere Aufnahmeelemente (170) des mindestens einen Fahrzeugs (100) sich hindurch erstrecken.
56. Fördervorrichtung (222) nach Ausführungsform 55, dadurch gekennzeichnet, dass der Durchtrittsbereich (262), insbesondere der Durchtrittsschlitz (264), sich längs eines Förderwegs (292) der Fördervorrichtung (222) erstreckt oder einen Förderweg (292) der Fördervorrichtung (222) vorgibt.
57. Fördervorrichtung (222) nach Ausführungsform 56, dadurch gekennzeichnet, dass zu einer oder beiden Seiten des Durchtrittsbereichs (262), insbesondere des Durchtrittsschlitzes (264), ein Durchtrittsrandbereich (276) gebildet ist, welcher insbesondere im Vergleich zum übrigen Trennboden (248) erhöht ausgebildet ist.
58. Fördervorrichtung (222) nach Ausführungsform 57, dadurch gekennzeichnet, dass ein durchschnittlicher freier oder freigebbarer Abstand zwischen zwei einander bezüglich des Durchtrittsbereichs (262) gegenüberliegenden Durchtrittsrandbereichen (276) höchstens ungefähr das Vierfache, vorzugsweise höchstens ungefähr das Dreifache, insbesondere höchstens ungefähr das Doppelte, einer durchschnittlichen horizontal und senkrecht zum Förderweg (292) genommenen Dicke mindestens eines Aufnahmeelements (170) des mindestens einen Fahrzeugs (100) beträgt.
59. Fördervorrichtung (222) nach einer der Ausführungsformen 57 oder 58, dadurch gekennzeichnet, dass ein durchschnittlicher freier oder freigebbarer Abstand zwischen zwei einander bezüglich des Durchtrittsbereichs (262) gegenüberliegenden Durchtrittsrandbereichen (276) höchstens ungefähr 150 %, vorzugsweise höchstens ungefähr 100 %, insbesondere höchstens ungefähr 80 %, einer durchschnittlichen horizontal und senkrecht zum Förderweg (292) genommenen Erstreckung eines Zentralelementes (210) einer Adaptervorrichtung (208) zur Aufnahme mindestens eines Gegenstands (102) beträgt.
60. Fördervorrichtung (222) nach einer der Ausführungsformen 57 bis 59, dadurch gekennzeichnet, dass der Durchtrittsrandbereich (276) in einem senkrecht zum Förderweg (292) genommenen Querschnitt im Wesentlichen L-förmig ausgebildet ist.
61. Fördervorrichtung (222) nach einer der Ausführungsformen 57 bis 60, dadurch gekennzeichnet, dass der Durchtrittsrandbereich (276) sich schräg zu einer Schwerkraftrichtung (g) und/oder schräg zu einer horizontalen Richtung erstreckt.
62. Fördervorrichtung (222) nach einer der Ausführungsformen 55 bis 61, dadurch gekennzeichnet, dass die Fördervorrichtung (222), insbesondere der Trennboden (248), beispielsweise der Durchtrittsrandbereich (276), ein oder mehrere Schließelemente (284) umfasst, mittels welchen der Durchtrittsbereich (262), insbesondere der Durchtrittsschlitz (264), verschließbar ist, insbesondere automatisch und/oder insbesondere dann, wenn kein Aufnahmeelement (170) durch den Durchtrittsbereich (262) hindurchragt, und/oder insbesondere in denjenigen Abschnitten des Durchtrittsbereichs (262), insbesondere des Durchtrittsschlitzes (264), wo gerade kein Aufnahmeelement (170) durch den Durchtrittsbereich (262) hindurchragt.
63. Fördervorrichtung (222) nach Ausführungsform 62, dadurch gekennzeichnet, dass ein oder mehrere Schließelemente (284) mittels des Aufnahmeelements (170) betätigbar, insbesondere in eine Offenstellung und/oder eine Schließstellung bringbar, sind.
64. Fördervorrichtung (222) nach einer der Ausführungsformen 50 bis 63, dadurch gekennzeichnet, dass die Fördervorrichtung (222) eine Stationsfördervorrichtung (244) umfasst, mittels welcher die Gegenstände (102) unabhängig von den Fahrzeugen (100) förderbar sind, wobei die Stationsfördervorrichtung (244) vorzugsweise in einen Trennboden (248) der Station (234) integriert ist.
65. Fördervorrichtung (222) nach Ausführungsform 64, dadurch gekennzeichnet, dass die Stationsfördervorrichtung (244) eine Rollenbahn (245) ist.
66. Fördervorrichtung (222) nach einer der Ausführungsformen 44 bis 65, dadurch gekennzeichnet, dass die Fördervorrichtung (222) eine Stapelvorrichtung (225) zur Stapelung und/oder Entstapelung mehrere Fahrzeuge (100) umfasst.
67. Fördervorrichtung (222) nach einer der Ausführungsformen 44 bis 66, dadurch gekennzeichnet, dass die Fördervorrichtung (222) einen oder mehrere Ladebereiche (158) zum Aufladen eines Energiespeichers (150) des mindestens einen Fahrzeugs (100) umfasst.
68. Fördervorrichtung (222) nach Ausführungsform 67, dadurch gekennzeichnet, dass ein oder mehrere Ladebereiche (158) an einer oder mehreren Stationen (234) der Fördervorrichtung (222) angeordnet sind, zu welchen die Gegenstände (102) mittels des mindestens einen Fahrzeugs (100) hin transportierbar sind und/oder an welchen die Gegenstände (102) abgebbar und/oder aufnehmbar sind.
69. Fördervorrichtung (222) nach einer der Ausführungsformen 67 oder 68, dadurch gekennzeichnet, dass ein oder mehrere Ladebereiche (158) bezüglich eines Förderwegs (292) mindestens eines Fahrzeugs (100) zwischen zwei Stationen (234) der Fördervorrichtung (222) angeordnet sind, zu welchen die Gegenstände (102) mittels des mindestens einen Fahrzeugs (100) hin transportierbar sind und/oder an welchen die Gegenstände (102) abgebbar und/oder aufnehmbar sind.
70. Fördervorrichtung (222) nach einer der Ausführungsformen 67 bis 69, dadurch gekennzeichnet, dass ein oder mehrere Ladebereiche (158) in oder an einem Rückförderweg (294) mindestens eines Fahrzeugs (100) angeordnet sind.
71. Fördervorrichtung (222) nach einer der Ausführungsformen 67 bis 70, dadurch gekennzeichnet, dass ein oder mehrere Ladebereiche (158) in oder an einem Wegabschnitt angeordnet sind, welcher dauerhaft oder temporär, insbesondere alternierend, einen Abschnitt eines Förderwegs (292) eines oder mehrerer Fahrzeuge (100) und einen Abschnitt eines Rückförderwegs (294) desselben oder derselben Fahrzeuge (100) oder eines oder mehrere anderer Fahrzeuge (100) bildet.
72. Fördervorrichtung (222) nach einer der Ausführungsformen 67 bis 71, dadurch gekennzeichnet, dass ein oder mehrere Ladebereiche (158) in oder an einem Kreuzungsbereich angeordnet sind, in welchem sich ein oder mehrere Förderwege (292) und/oder ein oder mehrere Rückförderwege (294) eines oder mehrerer Fahrzeuge (100) kreuzen.
73. Fördervorrichtung (222) nach einer der Ausführungsformen 67 bis 72, dadurch gekennzeichnet, dass ein oder mehrere Ladebereiche (158) stationäre Ladebereiche (298) sind, an welchen das mindestens eine Fahrzeug (100) zum Laden des Energiespeichers (150) und/oder während des Ladens des Energiespeichers (150) stationär ist.
74. Fördervorrichtung (222) nach einer der Ausführungsformen 67 bis 73, dadurch gekennzeichnet, dass ein oder mehrere Ladebereiche (158) Mobilladebereiche (300) sind, an welchen das mindestens eine Fahrzeug (100) während des Ladens des Energiespeichers (150) vorbeibewegbar ist und/oder durch welche das mindestens eine Fahrzeug (100) während des Ladens des Energiespeichers (150) hindurchbewegbar ist.
75. Fördervorrichtung (222) nach einer der Ausführungsformen 67 bis 74, dadurch gekennzeichnet, dass ein oder mehrere Ladebereiche (158) an oder in einem Durchtrittsbereich (262) eines Trennbodens (248) der Fördervorrichtung (222) angeordnet und/oder ausgebildet sind.
76. Fördervorrichtung (222) nach einer der Ausführungsformen 67 bis 75, dadurch gekennzeichnet, dass ein oder mehrere Ladebereiche (158) an einer Unterseite eines Trennbodens (248) einer Station (234) der Fördervorrichtung (222) angeordnet und/oder ausgebildet sind.
77. Fördervorrichtung (222) nach einer der Ausführungsformen 67 bis 76, dadurch gekennzeichnet, dass ein oder mehrere Ladebereiche (158) an einem befahrbaren Untergrund (160) angeordnet sind, auf welchem das mindestens eine Fahrzeug (100) verfahrbar ist, wobei der eine oder die mehreren Ladebereiche (158) insbesondere direkt unter einem Trennboden (248) einer Station (234) der Fördervorrichtung (222) angeordnet und/oder ausgebildet sind.
78. Fördervorrichtung (222) nach einer der Ausführungsformen 67 bis 77, dadurch gekennzeichnet, dass ein oder mehrere Ladebereiche (158) als Ladebucht (302) ausgebildet sind, in welche ein oder mehrere Fahrzeuge (100) zum Aufladen des jeweiligen Energiespeichers (150) einbringbar sind, insbesondere unter Abweichung von einem Förderweg (292) und/oder Rückförderweg (294) des Fahrzeugs (100).
79. Fördervorrichtung (222) nach Ausführungsform 78, dadurch gekennzeichnet, dass eine oder mehrere Ladebuchten (302) Wartebereiche (304) zur temporären Aufbewahrung eines oder mehrerer Fahrzeuge (100) und/oder Wartungsbereiche (306) zur Durchführung von Wartungsarbeiten an einem oder mehreren Fahrzeugen (100) sind.
80. Fördervorrichtung (222) nach einer der Ausführungsformen 67 bis 79, dadurch gekennzeichnet, dass ein oder mehrere Ladebereiche (158) derart an einer Abgabeposition (242) einer Station (234) und/oder an einer Aufnahmeposition (256) einer Station (234) angeordnet sind, dass insbesondere während eines Positioniervorgangs zur Positionierung eines Fahrzeugs (100) relativ zu der Station (234) ein Energiespeicher (150) des Fahrzeugs (100) aufladbar ist.
81. Fördervorrichtung (222) nach einer der Ausführungsformen 67 bis 80, dadurch gekennzeichnet, dass die Fördervorrichtung (222) sich auf mehreren Ebenen (288) erstreckt und einen oder mehrere Ladebereiche (158) umfasst, welche in einer Transfervorrichtung (290) zum Transferieren eines oder mehrerer Fahrzeuge (100) von einer Ebene (288) zu einer weiteren Ebene (288) angeordnet sind.
82. Fördervorrichtung (222) nach einer der Ausführungsformen 67 bis 81, dadurch gekennzeichnet, dass die Fördervorrichtung (222) einen oder mehrere Ladeknotenpunkte (308) umfasst, welche jeweils mehrere Ladebereiche (158) zum gleichzeitigen Laden mehrerer Fahrzeuge (100) umfassen.
83. Fördervorrichtung (222) nach Ausführungsform 82, dadurch gekennzeichnet, dass ein oder mehrere Ladeknotenpunkte (308) an Stellen angeordnet sind, an welchen sich mehrere Förderwege (292) und/oder Rückförderwege (294) kreuzen und/oder überlappen.
84. Fördervorrichtung (222) nach einer der Ausführungsformen 44 bis 83, dadurch gekennzeichnet, dass die Fördervorrichtung (222) einen oder mehrere Sicherheitsbereiche (270) und einen oder mehrere Expressbereiche (268) umfasst,
   wobei das eine oder die mehreren Fahrzeuge (100) in dem einen oder den mehreren Sicherheitsbereichen (270) mittels einer Steuervorrichtung (204) in den Sicherheitsmodus versetzbar sind und
   wobei das eine oder die mehreren Fahrzeuge (100) in dem einen oder den mehreren Expressbereichen (268) mittels der Steuervorrichtung (204) in den Expressmodus versetzbar sind.
85. Fördervorrichtung (222) nach Ausführungsform 84, dadurch gekennzeichnet, dass ein oder mehrere Expressbereiche (268) einen oder mehrere Rückförderwege (294) oder Rückförderwegabschnitte umfassen, in welchen das eine oder die mehreren Fahrzeuge (100) insbesondere unbeladen sind.
86. Fördervorrichtung (222) nach einer der Ausführungsformen 84 oder 85, dadurch gekennzeichnet, dass ein oder mehrere Expressbereiche (268) und/oder ein oder mehrere Sicherheitsbereiche (270) mittels einer oder mehrerer Durchfahrtsöffnungen (312) miteinander verbunden sind, wobei die eine oder die mehreren Durchfahrtsöffnungen (312) vorzugsweise zumindest abschnittsweise eine Form aufweisen, welche zumindest näherungsweise und zumindest abschnittsweise komplementär zu einer Form eines oder mehrerer Fahrzeuge (100) ausgebildet ist.
87. Fördervorrichtung (222) nach Ausführungsform 86, dadurch gekennzeichnet,
   a) dass eine oder mehrere Durchfahrtsöffnungen (312) in oder an einer oder mehreren Stationen (234) der Fördervorrichtung (222) angeordnet sind und/oder
   b) dass eine oder mehrere Durchfahrtsöffnungen (312) durch eine oder mehrere Stationen (234) der Fördervorrichtung (222) gebildet sind.
88. Fördervorrichtung (222) nach einer der Ausführungsformen 84 bis 87, dadurch gekennzeichnet, dass ein oder mehrere Expressbereiche (268) mittels eines begehbaren und/oder befahrbaren doppelten Bodens gebildet sind.
89. Fördervorrichtung (222) nach einer der Ausführungsformen 44 bis 88, dadurch gekennzeichnet, dass die Fördervorrichtung (222) mehrere Arten von Stationen (234) umfasst, wobei von mindestens zwei Arten von Stationen (234) jeweils mehrere Stationen (234) vorgesehen sind.
90. Fördervorrichtung (222) nach Ausführungsform 89, dadurch gekennzeichnet, dass die zu fördernden Gegenstände (102) mittels eines oder mehrerer Fahrzeuge (100) in einer vorgegebenen Reihenfolge zu und/oder durch jeweils eine der Stationen (234) unterschiedlicher Art förderbar sind, wobei mittels einer Steuervorrichtung (204) eine einzelne Station (234) einer jeweiligen Art von Stationen (234) auswählbar ist, insbesondere
   a) abhängig von einer aktuellen Belegung der einzelnen Stationen (234) einer jeweiligen Art von Stationen (234) und/oder
   b) abhängig von einer Ausstattung der einzelnen Stationen (234) einer jeweiligen Art von Stationen (234) und/oder
   c) abhängig von einer Ausgestaltung der einzelnen Stationen (234) einer jeweiligen Art von Stationen (234) und/oder
   d) abhängig von einem aktuellen Wartungsstand oder Verunreinigungsgrad der einzelnen Stationen (234) einer jeweiligen Art von Stationen (234).
91. Bearbeitungsanlage (224) zur Bearbeitung von Gegenständen (102), insbesondere Fahrzeugkarosserien (206), wobei die Bearbeitungsanlage (224) eine oder mehrere Fördervorrichtungen (222) nach einer der Ausführungsformen 44 bis 90 umfasst.
92. Bearbeitungsanlage (224) nach Ausführungsform 91, dadurch gekennzeichnet, dass eine oder mehrere Stationen (234) der Fördervorrichtung (222), welche zur Förderung von Gegenständen (102) mittels Fahrzeugen (100) der Fördervorrichtung (222) miteinander verbunden sind, Bearbeitungsstationen (236) der Bearbeitungsanlage (224) sind.
93. Verfahren zum Fördern von Gegenständen (102), wobei die Gegenstände (102) mittels eines oder mehrerer Fahrzeuge (100) nach einer der Ausführungsformen 1 bis 40 und/oder mittels einer Fördervorrichtung (222) nach einer der Ausführungsformen 44 bis 90 gefördert werden.
94. Verfahren zum Bearbeiten von Gegenständen (102), wobei die Gegenstände (102) in und/oder mittels einer Bearbeitungsanlage (222) nach einer der Ausführungsformen 91 oder 92 bearbeitet werden.
95. Verfahren zum Fördern von Gegenständen (102), insbesondere Verfahren nach Ausführungsform 93, wobei die Gegenstände (102) mittels einer Fördervorrichtung (222), insbesondere einer Fördervorrichtung (222) nach einer der Ausführungsformen 44 bis 90, gefördert werden, welche mehrere Fahrzeuge (100), insbesondere Fahrzeuge (100) nach einer der Ausführungsformen 1 bis 40, umfasst, die insbesondere flurgebunden und/oder selbstfahrend ausgebildet sind, wobei die Fahrzeuge (100) mittels jeweils einer dem jeweiligen Fahrzeug (100) zugeordneten Steuervorrichtung (204) und/oder mittels einer mehreren Fahrzeugen (100) übergeordneten Steueranlage (400) gesteuert werden.
96. Verfahren nach Ausführungsform 95, dadurch gekennzeichnet, dass die Steueranlage (400) Transportaufträge erstellt und diese an ein Flottenmanagementsystem (402) übermittelt.
97. Verfahren nach Ausführungsform 96, dadurch gekennzeichnet, dass die Steueranlage (400) insbesondere Daten aus einem Produktionsplanungssystem (406) zur Erstellung und/oder Priorisierung und/oder Durchführung der Transportaufträge verwendet.
98. Verfahren nach einer der Ausführungsformen 96 oder 97, dadurch gekennzeichnet, dass die Transportaufträge von dem Flottenmanagementsystem (402) direkt an die einzelnen Fahrzeuge (100) übermittelt werden, woraufhin die einzelnen Fahrzeuge (100) den jeweiligen Transportauftrag ausführen.
99. Verfahren nach einer der Ausführungsformen 96 oder 97, dadurch gekennzeichnet, dass die Transportaufträge von dem Flottenmanagementsystem (402) über ein oder mehrere Flottenmanagementsubsystem (404) an die einzelnen Fahrzeuge (100) übermittelt werden, woraufhin die einzelnen Fahrzeuge (100) den jeweiligen Transportauftrag ausführen.
100. Verfahren nach Ausführungsform 99, dadurch gekennzeichnet, dass jedes Flottenmanagementsubsystem (404) jeweils einer Gruppe von Fahrzeugen (100) zugeordnet ist, wobei jedes Fahrzeug (100) vorzugsweise nur einer einzigen von mehreren Gruppen von Fahrzeugen (100) zugeordnet ist.
101. Verfahren nach Ausführungsform 100, dadurch gekennzeichnet, dass die Gruppen von Fahrzeugen (100) in räumlich voneinander getrennten Bereichen einer Produktionsanlage befindliche Fahrzeuge (100) sind, beispielsweise Fahrzeuge (100) auf unterschiedlichen Ebenen einer Produktionsanlage, insbesondere einer Lackier- und/oder Fertigungsanlage.
102. Verfahren nach einer der Ausführungsformen 95 bis 101, dadurch gekennzeichnet, dass der Transport von Gegenständen (102) mittels der Fahrzeuge (100) zwischen Stoppstellen (408, 410) stattfindet.
103. Verfahren nach Ausführungsform 102, dadurch gekennzeichnet, dass die Stoppstellen, insbesondere reale Stoppstellen (408), Aufnahmestationen, Übergabestationen, Speicherstationen, Bearbeitungsstationen und/oder Behandlungsstationen sind.
104. Verfahren nach einer der Ausführungsformen 102 oder 103, dadurch gekennzeichnet, dass zwischen den insbesondere realen Stoppstellen (408) eine oder mehrere virtuelle Stoppstellen (410) einfügbar oder entfernbar sind, insbesondere zur vorzugsweise automatischen Anpassung eines Transportauftrags an sich ergebende verändernde Randbedingungen.
105. Fördervorrichtung (222) zum Fördern von Gegenständen (102), insbesondere Werkstücken, beispielsweise Fahrzeugkarosserien (206), wobei die Fördervorrichtung (222) ein oder mehrere Fahrzeuge (100) umfasst, wobei jedes Fahrzeug (100) Folgendes umfasst:
   - einen Grundkörper (104);
   - ein Fahrwerk (106), mittels welchem der Grundkörper (104) auf einem befahrbaren Untergrund (160) aufliegt und/oder bewegbar ist;
   - eine Antriebsvorrichtung (110) zum Antreiben des Fahrzeugs (100);
   - eine Aufnahmevorrichtung (168) zum Aufnehmen mindestens eines Gegenstands (102),
   dadurch gekennzeichnet, dass die Fördervorrichtung (222) eine mehreren Fahrzeugen (100) übergeordnete Steueranlage (400) zur Steuerung der Fahrzeuge (100) umfasst, wobei mittels der Steueranlage (400) insbesondere ein Verfahren nach einer der Ausführungsformen 95 bis 104 durchführbar ist.

## Patentansprüche

1. Verfahren zum Fördern von Gegenständen (102), insbesondere Werkstücken, beispielsweise Fahrzeugkarosserien (206), wobei die Gegenstände (102) mittels einer Fördervorrichtung (222) gefördert werden, welche mehrere Fahrzeuge (100) umfasst, die insbesondere flurgebunden und/oder selbstfahrend ausgebildet sind, wobei die Fahrzeuge (100) mittels jeweils einer dem jeweiligen Fahrzeug (100) zugeordneten Steuervorrichtung (204), die mit einer übergeordneten Steueranlage (400) kommuniziert, und/oder mittels der mehreren Fahrzeugen (100) übergeordneten Steueranlage (400) gesteuert werden, **dadurch gekennzeichnet, dass** der Transport von Gegenständen (102) mittels der Fahrzeuge (100) zwischen Stoppstellen (408, 410) stattfindet, wobei die Steueranlage (400) Möglichkeiten manueller Eingriffe und Erweiterungen bietet, Stoppstellen (408, 410) hinzuzufügen oder diese zu blockieren, sodass während der Produktion Priorisierungsänderungen bei der Generierung von Transportaufträgen berücksichtigt werden.

2. Verfahren nach Anspruch 1, **dadurch gekennzeichnet, dass** die Steueranlage (400) Transportaufträge erstellt und diese an ein Flottenmanagementsystem (402) übermittelt.

3. Verfahren nach Anspruch 2, **dadurch gekennzeichnet, dass** die Steueranlage (400) Daten aus einem Produktionsplanungssystem (406) zur Erstellung und/oder Priorisierung und/oder Durchführung der Transportaufträge verwendet.

4. Verfahren nach einem der Ansprüche 2 oder 3, **dadurch gekennzeichnet, dass** die Transportaufträge von dem Flottenmanagementsystem (402) direkt an die einzelnen Fahrzeuge (100) übermittelt werden, woraufhin die einzelnen Fahrzeuge (100) den jeweiligen Transportauftrag ausführen.

5. Verfahren nach einem der Ansprüche 2 oder 3, **dadurch gekennzeichnet, dass** die Transportaufträge von dem Flottenmanagementsystem (402) über ein oder mehrere Flottenmanagementsubsystem (404) an die einzelnen Fahrzeuge (100) übermittelt werden, woraufhin die einzelnen Fahrzeuge (100) den jeweiligen Transportauftrag ausführen.

6. Verfahren nach Anspruch 5, **dadurch gekennzeichnet, dass** jedes Flottenmanagementsubsystem (404) jeweils einer Gruppe von Fahrzeugen (100) zugeordnet ist, wobei jedes Fahrzeug (100) vorzugsweise nur einer einzigen von mehreren Gruppen von Fahrzeugen (100) zugeordnet ist.

7. Verfahren nach Anspruch 6, **dadurch gekennzeichnet, dass** die Gruppen von Fahrzeugen (100) in räumlich voneinander getrennten Bereichen einer Produktionsanlage befindliche Fahrzeuge (100) sind, beispielsweise Fahrzeuge (100) auf unterschiedlichen Ebenen einer Produktionsanlage, insbesondere einer Lackier- und/oder Fertigungsanlage.

8. Verfahren nach Anspruch 1, **dadurch gekennzeichnet, dass** die Stoppstellen (408) Aufnahmestationen, Übergabestationen, Speicherstationen, Bearbeitungsstationen und/oder Behandlungsstationen sind.

9. Verfahren nach einem der Ansprüche 1 bis 8, **dadurch gekennzeichnet, dass** zwischen den, insbesondere realen, Stoppstellen (408) eine oder mehrere virtuelle Stoppstellen (410) einfügbar oder entfernbar sind, insbesondere zur vorzugsweise automatischen Anpassung eines Transportauftrags an sich ergebende verändernde Randbedingungen.

10. Fördervorrichtung (222) zum Fördern von Gegenständen (102), insbesondere Werkstücken, beispielsweise Fahrzeugkarosserien (206), wobei die Fördervorrichtung (222) ein oder mehrere Fahrzeuge (100) umfasst, wobei jedes Fahrzeug (100) Folgendes umfasst:
- einen Grundkörper (104);
- ein Fahrwerk (106), mittels welchem der Grundkörper (104) auf einem befahrbaren Untergrund (160) aufliegt und/oder bewegbar ist;
- eine Antriebsvorrichtung (110) zum Antreiben des Fahrzeugs (100);
- eine Aufnahmevorrichtung (168) zum Aufnehmen mindestens eines Gegenstands (102),
**dadurch gekennzeichnet, dass**
die Fördervorrichtung (222) eine mehreren Fahrzeugen (100) übergeordnete Steueranlage (400) zur Steuerung der Fahrzeuge (100) umfasst, wobei mittels der Steueranlage (400) ein Verfahren nach einem der Ansprüche 1 bis 9 durchführbar ist.

## Claims

1. Method for conveying objects (102), in particular workpieces, for example vehicle bodies (206), wherein the objects (102) are conveyed by means of a conveying device (222), which comprises a number of vehicles (100) which are designed in particular as floor-bound and/or self-propelled, wherein the vehicles (100) are controlled by means of in each case a control device (204) which is assigned to the respective vehicle (100) and communicates with a superordinate control installation (400) and/or by means of the control installation (400) which is superordinate to a number of vehicles (100), **characterized in that** the transport of objects (102) by means of the vehicles (100) takes place between stopping points (408, 410), wherein the control installation (400) offers possibilities for manual interventions and supplementary actions to add stopping points (408, 410) or block them, so that changes in prioritization in the generation of transport orders are taken into account during production.

2. Method according to Claim 1, **characterized in that** the control installation (400) creates transport orders and transmits them to a fleet management system (402).

3. Method according to Claim 2, **characterized in that** the control installation (400) uses data from a production planning system (406) for creating and/or prioritizing and/or implementing the transport orders.

4. Method according to either of Claims 2 and 3, **characterized in that** the transport orders are transmitted by the fleet management system (402) directly to the individual vehicles (100), whereupon the individual vehicles (100) carry out the respective transport order.

5. Method according to either of Claims 2 and 3, **characterized in that** the transport orders are transmitted by the fleet management system (402) to the individual vehicles (100) via one or more fleet management subsystem(s) (404), whereupon the individual vehicles (100) carry out the respective transport order.

6. Method according to Claim 5, **characterized in that** each fleet management subsystem (404) is respectively assigned to a group of vehicles (100), wherein each vehicle (100) is preferably assigned to only one of a number of groups of vehicles (100).

7. Method according to Claim 6, **characterized in that** the groups of vehicles (100) are vehicles (100) located in areas of a production plant that are spatially separate from one another, for example vehicles (100) on different levels of a production plant, in particular a paint shop and/or a manufacturing facility.

8. Method according to Claim 1, **characterized in that** the stopping points (408) are receiving stations, transfer stations, storage stations, processing stations and/or treatment stations.

9. Method according to one of Claims 1 to 8, **characterized in that** between the, in particular real, stopping points (408) one or more virtual stopping points (410) can be inserted or removed, in particular for the preferably automatic adaptation of a transport order to changing boundary conditions arising.

10. Conveying device (222) for conveying objects (102), in particular workpieces, for example vehicle bodies (206), wherein the conveying device (222) comprises one or more vehicles (100), wherein each vehicle (100) comprises the following:
- a main body (104);
- a chassis (106), by means of which the main body (104) rests and/or is movable on a drivable surface (160);
- a drive device (110) for driving the vehicle (100);
- a receiving device (168) for receiving at least one object (102),
**characterized in that**
the conveying device (222) comprises a control installation (400) which is superordinate to a number of vehicles (100) and is intended for controlling the vehicles (100), wherein by means of the control installation (400) a method according to one of Claims 1 to 9 can be implemented.

## Revendications

1. Procédé de convoyage d'objets (102), en particulier de pièces, par exemple de carrosseries (206) de véhicule, les objets (102) étant convoyés au moyen d'un dispositif de convoyage (222), lequel comprend plusieurs véhicules (100), qui sont réalisés en particulier en liaison avec le sol et/ou de manière à se déplacer en toute autonomie, les véhicules (100) étant commandés au moyen respectivement d'un dispositif de commande (204) associé au véhicule (100) respectif, qui communique avec une installation de commande (400) supérieure, et/ou au moyen de l'installation de commande (400) supérieure aux plusieurs véhicules (100), **caractérisé en ce que** le transport d'objets (102) a lieu au moyen des véhicules (100) entre des points d'arrêt (408, 410), l'installation de commande (400) offrant des possibilités d'interventions manuelles et d'extensions pour ajouter des points d'arrêt (408, 410) ou pour bloquer ceux-ci si bien que sont prises en compte au cours de la production des modifications de priorisation lors de la génération d'ordres de transport.

2. Procédé selon la revendication 1, **caractérisé en ce que** l'installation de commande (400) crée des ordres de transport et les transmet à un système de gestion de flotte (402).

3. Procédé selon la revendication 2, **caractérisé en ce que** l'installation de commande (400) utilise des données issues d'un système de planification de production (406) pour créer et/ou prioriser et/ou mettre en œuvre les ordres de transport.

4. Procédé selon l'une des revendications 2 ou 3, **caractérisé en ce que** les ordres de transport sont directement transmis aux divers véhicules (100) par le système de gestion de flotte (402), les divers véhicules (100) exécutant ensuite l'ordre de transport respectif.

5. Procédé selon l'une des revendications 2 ou 3, **caractérisé en ce que** les ordres de transport sont transmis aux divers véhicules (100) par le système de gestion de flotte (402) en passant par un ou plusieurs sous-systèmes de gestion de flotte (404), les divers véhicules (100) exécutant ensuite l'ordre de transport respectif.

6. Procédé selon la revendication 5, **caractérisé en ce que** chaque sous-système de gestion de flotte (404) est associé chacun à un groupe de véhicules (100), chaque véhicule (100) étant associé de préférence seulement à un unique ou à plusieurs groupes de véhicules (100).

7. Procédé selon la revendication 6, **caractérisé en ce que** les groupes de véhicules (100) sont des véhicules (100) se trouvant dans des zones spatialement séparées les unes des autres d'une installation de production, par exemple des véhicules (100) sur différents niveaux d'une installation de production, en particulier d'une installation de peinture et/ou de fabrication.

8. Procédé selon la revendication 1, **caractérisé en ce que** les points d'arrêt (408) sont des stations de réception, des stations de transfert, des stations de stockage, des stations d'usinage et/ou des stations de traitement.

9. Procédé selon l'une des revendications 1 à 8, **caractérisé en ce qu'**un ou plusieurs points d'arrêt virtuels (410) peuvent être insérés ou supprimés entre les points d'arrêt (408) en particulier réels, en particulier pour adapter de préférence automatiquement un ordre de transport à des conditions marginales variables en résultant.

10. Dispositif de convoyage (222) pour convoyer des objets (102), en particulier des pièces, par exemple des carrosseries (206) de véhicule, le dispositif de convoyage (222) comprenant un ou plusieurs véhicules (100), chaque véhicule (100) comprenant:
- un corps de base (104);
- un châssis (106), au moyen duquel le corps de base (104) repose et/ou peut être déplacé sur une surface praticable (160);
- un dispositif d'entraînement (110) pour entraîner le véhicule (100);
- un dispositif de réception (168) destiné à recevoir au moins un objet (102),
**caractérisé en ce que**
le dispositif de convoyage (222) comprend une installation de commande (400) supérieure aux plusieurs véhicules (100), destinée à commander les véhicules (100), un procédé selon l'une des revendications 1 à 9 pouvant être mis en œuvre au moyen de l'installation de commande (400).
